(19) Europäisches Patentamt
European Patent Office
Office européen des brevets

(11) EP 4 063 399 B1

(12) EUROPEAN PATENT SPECIFICATION

(45) Date of publication and mention of the grant of the patent:
**17.12.2025 Bulletin 2025/51**

(21) Application number: **20889336.2**

(22) Date of filing: **18.03.2020**

(51) International Patent Classification (IPC):
***C08B 37/08*** *(2006.01)* ***C08G 65/334*** *(2006.01)*
***C08H 1/00*** *(2006.01)* ***C08F 20/20*** *(2006.01)*
***C08F 16/06*** *(2006.01)* ***C08F 8/34*** *(2006.01)*

(52) Cooperative Patent Classification (CPC):
(C-Sets available)
**C08L 89/06; C08B 37/003; C08B 37/0069; C08B 37/0072; C08G 65/3342; C08L 71/02;**
C08F 122/1006 (Cont.)

(86) International application number:
**PCT/CN2020/079820**

(87) International publication number:
**WO 2021/098097 (27.05.2021 Gazette 2021/21)**

(54) **THIOL-MODIFIED POLYMER COMPOUND, AND PREPARATION METHOD THEREFOR AND APPLICATION THEREOF**

THIOL-MODIFIZIERTE POLYMERVERBINDUNG, HERSTELLUNGSVERFAHREN DAFÜR UND VERWENDUNG DAVON

COMPOSÉ POLYMÈRE MODIFIÉ PAR UN THIOL, PROCÉDÉ DE PRÉPARATION ASSOCIÉ ET APPLICATION ASSOCIÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.11.2019 CN 201911129095**

(43) Date of publication of application:
**28.09.2022 Bulletin 2022/39**

(73) Proprietor: **BLAFAR BIOTECHNOLOGY (HANGZHOU) LTD**
**Hangzhou, Zhejiang 310018 (CN)**

(72) Inventor: **WANG, Wenxin**
**Dublin (IE)**

(74) Representative: **Huang, Liwei**
**Cäcilienstraße 12**
**40597 Düsseldorf (DE)**

(56) References cited:
**WO-A1-2016/050788 WO-A1-2016/197087**
**CN-A- 101 351 490 CN-A- 101 506 253**
**CN-A- 101 628 919 CN-A- 104 140 541**
**CN-A- 104 224 688 CN-A- 106 478 841**
**CN-A- 110 172 115 US-A1- 2019 365 902**

- **MATURAVONGSADIT PANITA, LUCKANAGUL JITTIMA AMIE, METAVARAYUTH KAMOLRAT, ZHAO XIA, CHEN LIMIN, LIN YUAN, WANG QIAN: "Promotion of In Vitro Chondrogenesis of Mesenchymal Stem Cells Using In Situ Hyaluronic Hydrogel Functionalized with Rod-Like Viral Nanoparticles", BIOMACROMOLECULES, AMERICAN CHEMICAL SOCIETY, US, vol. 17, no. 6, 13 June 2016 (2016-06-13), US, pages 1930 - 1938, XP055814454, ISSN: 1525-7797, DOI: 10.1021/acs.biomac.5b01577**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 063 399 B1

- **BADRIPRASAD ANANTHANARAYANAN; YUSHAN KIM; SANJAY KUMAR;: "Elucidating the mechanobiology of malignant brain tumors using a brain matrix-mimetic hyaluronic acid hydrogel platform", BIOMATERIALS, ELSEVIER, AMSTERDAM, NL, vol. 32, no. 31, 4 July 2011 (2011-07-04), AMSTERDAM, NL, pages 7913 - 7923, XP028268208, ISSN: 0142-9612, DOI: 10.1016/j.biomaterials.2011.07.005**
- **OBATA H., YAMAZAKI Y., MATSUNAGA T., SATO T.: "Synthesis and evaluation of hyaluronic acid hydrogels modified with various crosslinkers as biodegradable polymers", JOURNAL OF APPLIED POLYMER SCIENCE, JOHN WILEY & SONS, INC., US, vol. 134, no. 43, 15 November 2017 (2017-11-15), US, pages 45453, XP055814466, ISSN: 0021-8995, DOI: 10.1002/app.45453**
- **JUNGJU KIM: ""Characterization of low-molecular-weight hyaluronic acid-based hydrogel and differential stem cell responses in the hydrogel microenvironments”", JOURNAL OF BIOMEDICAL MATERIALS RESEARCH PART A, vol. 88A, no. 4, 2 April 2008 (2008-04-02), pages 967 - 975, XP055814464**
- **DANIELE MICHAEL A.; ADAMS ANDR� A.; NACIRI JAWAD; NORTH STELLA H.; LIGLER FRANCES S.: "Interpenetrating networks based on gelatin methacrylamide and PEG formed using concurrent thiol click chemistries for hydrogel tissue engineering scaffolds", BIOMATERIALS, ELSEVIER, AMSTERDAM, NL, vol. 35, no. 6, 5 December 2013 (2013-12-05), AMSTERDAM, NL, pages 1845 - 1856, XP028802113, ISSN: 0142-9612, DOI: 10.1016/j.biomaterials.2013.11.009**
- **XU YANMIN, MENG FENGHUA, CHENG RU, ZHONG ZHIYUAN: "Reduction-Sensitive Reversibly Crosslinked Biodegradable Micelles for Triggered Release of Doxorubicin : Reduction-Sensitive Reversibly Crosslinked Biodegradable …", MACROMOLECULAR BIOSCIENCE, WILEY-VCH VERLAG GMBH, DE, vol. 9, no. 12, 8 December 2009 (2009-12-08), DE, pages 1254 - 1261, XP055814481, ISSN: 1616-5187, DOI: 10.1002/mabi.200900233**


(52) Cooperative Patent Classification (CPC): (Cont.)

C-Sets
**C08L 71/02, C08L 5/08**

## Description

### TECHNICAL FIELD

The present invention relates to the field of polymer materials, in particular to a sulfhydryl-modified polymer compound, and a preparation method therefor.

### BACKGROUND

Biocompatible polymers have many important physiological functions. Common biocompatible polymers include polysaccharides, proteins, synthetic polymers and the like. Among them, the typical natural biocompatible polymer is hyaluronic acid. In 1934, Professor Karl Mayer first extracted a natural hyaluronic acid, which is a natural heteropolysaccharide composed of alternating units of d-glucuronide and N-acetyl-d-glucosamine, from the lens of bovine eye. Followed by decades of research, hyaluronic acid was found to be widely present in connective tissues of humans and other vertebrates, for example, in tissues and organs such as the intercellular space, tissues of the deployable joints, umbilical cord, skin, cartilage, vascular wall, synovial fluid and cockscomb. Hyaluronic acid is a linear polymer polysaccharide with disaccharide repeating units in its structure. d-glucuronic acid in the repeating units is linked with N-acetyl-d-glucosamine through β-1,3 glycosidic bonds, and thousands of disaccharide repeating units are linked through β-1,4 glycosidic bonds to form an entire straight-chain and linear polymer structure. Hyaluronic acid is generally present in the form of a sodium salt in the physiological state of the human body. The sodium hyaluronate and the gel thereof are widely applied in the fields such as orthopedics, gynecology and plastic surgery, and can also be applied in ophthalmic surgery as a carrier for ophthalmic preparations or directly as an ophthalmic preparation, that is, the sodium hyaluronate products also have important applications in ophthalmic surgery. Sodium hyaluronate is also an important constituent of the synovial fluid and cartilage. After its content in joints is increased, it can enhance the viscosity and lubricating function of the synovial fluid, and play a role in protecting the cartilage, promoting the joint healing and regeneration, relieving pain, increasing the joint range of motion and the like. It has been reported in the literature that the hyaluronic acid and the sodium salt thereof are safe and effective ideal substances in preventing and reducing adhesions caused by the gynecological and obstetric surgery as shown in numerous animal studies and clinical applications. The aqueous solution of sodium hyaluronate is a non-Newtonian fluid and has good viscoelasticity and rheology. In general, the low concentration of hyaluronic acid solution mainly exhibits viscosity, and the high concentration of hyaluronic acid solution mainly exhibits elasticity, so that the concentration of hyaluronic acid solution can be adjusted as needed in practice.

The natural hyaluronic acid or the sodium salt thereof has clear disadvantages, in addition to its wide range of applications and various clear advantages. Firstly, the natural hyaluronic acid or the sodium salt thereof has a short half-life in vivo, with the degradation time in organisms generally being not more than 7 days. The main reason for the short half-life is that the natural hyaluronic acid or the sodium salt thereof has a small average molecular weight and good fluidity, is easily dispersed in tissues and then absorbed and metabolized; and such fact is directly indicated by low viscosity in a solution state. Secondly, the natural hyaluronic acid or the sodium salt thereof has disadvantages of poor stability and easy degradation. Thirdly, the natural hyaluronic acid or the sodium salt thereof has a disadvantage of being excessively hydrophilic. In order to overcome the above disadvantages of the natural hyaluronic acid or the sodium salt thereof, the chemical modification and intermolecular cross-linking is commonly adopted in the prior art, and have become one of the hot research directions.

The study on modification of biocompatible polymers has been one of the major research directions in recent years for biocompatible polymers such as polysaccharides, proteins, and synthetic polymers. The chemical modification of biocompatible polymers is the structural modification and transformation of such compounds, and mainly includes the following modifications: 1, hydrophobization, typically alkylation; 2, carboxylation, typically carboxymethylation; 3, sulfhydrylation; 4, grafting, exemplified by a grafting reaction of hyaluronic acid, in which a small molecule or a polymer is grafted onto the main chain of hyaluronic acid, typically a graft copolymerization of hyaluronic acid and high density polyethylene. The biocompatible polymer modified by sulfhydrylation is very suitable for the application in the fields such as antioxidation health care products, biopharmaceuticals, medical cosmetology and cosmetics due to its characteristics such as easy cross-linking to form hydrogel and oxidation resistance. The sulfhydrylation process of biocompatible polymers generally refers to a chemical modification process for introducing free sulfhydryls. In general, free sulfhydryls can be introduced by functional groups of polysaccharides, proteins, synthetic polymers, and the like, such as carboxyl, amino and hydroxyl and groups through appropriate chemical reactions.

The existing methods for preparing the sulfhydryl-modified polymer compound, especially the sulfhydryl-modified biocompatible polymer compound, e.g., sulfhydryl-modified hyaluronic acid, are mainly as follows.

Prestwich and Shu, Xiaozheng et al. firstly reported a dithiodihydrazide method for synthesizing a sulfhydryl-modified hyaluronic acid derivative, hereinafter referred to as HA-SH, the structure of which is shown in FIG. 1 (document 1: Biomacromolecules, 2002, 3, 1304 and Patent Publication No. CN101511875A). In this method, a dihydrazide

compound containing disulfide bonds needs to be synthesized in advance through a reaction of multiple steps, in which the reagents used have high toxicity, for example, hydrazine hydrate, which is a highly toxic compound with an oral LD50 of 129 mg/kg in rats. The hyaluronic acid was subsequently cross-linked with the dithiodihydrazide compound to form a gel by condensation reaction with EDCI, i.e., a carbodiimide dehydrating agent. It is not easy to obtain a uniform sulfhydryl derivative because the reaction system is gelled as a whole and cannot be continuously stirred to maintain an optimum reaction condition of pH 4.75. The resulting gel was subjected to dithiothreitol reduction reaction to obtain the sulfhydryl-modified hyaluronic acid derivative.

In 2008, Prestwich et al. reported a method for synthesizing HA-SH by a thiocycloethane modification, as shown in FIG. 2 (document 2: Biomaterials, 2008, 29, 1388). In this method, a modifying reagent does not need to be synthesized in advance, but the modification ratio is relatively low due to the limitation on the low reactivity of primary alcohol of hyaluronic acid.

In 2007, Shimobouji et al. reported a method for synthesizing HA-SH by a two-step modification involving dihydrazide and Traut's reagent, as shown in FIG. 3 (document 3: J Biomed Mater Res A., 2007, 80, 916). In the first step, the hyaluronic acid was modified by using an excess of an dihydrazide compound to obtain an intermediate product, which was then subjected to purification operations such as dialysis and lyophilization to obtain a hydrazide-modified hyaluronic acid derivative. In the second step, the hydrazide-modified hyaluronic acid derivative was modified by using Traut's reagent before subjected to a series of purification operations to obtain the sulfhydryl-modified hyaluronic acid derivative. The Traut's reagent used in the second step of the reaction is expensive, with the reference price of 374 €/g (Sigma, purity 98%). This greatly hinders the large-scale industrial production of HA-SH by this method.

In 2007, Tae Gwan Park et al. reported a method for synthesizing HA-SH by a cystamine modification, as shown in FIG. 4 (document 4: Journal of Controlled Release, 2007, 119, 245). This method is similar to the dithiodihydrazide method, in which a cystamine containing disulfide bonds is used as a modification material, and dehydration condensation with EDCI and reduction of the disulfide bonds with dithiothreitol are performed to finally obtain the HA-SH derivative. Since the reactivity of the amino group is lower than that of the hydrazide, the degree of substitution in this method is lower than that in the dithiodihydrazide method for synthesizing HA-SH.

In 2012, C. Yan et al. reported a method for synthesizing HA-SH by modifying the hyaluronic acid with β -mercaptoethylamine, as shown in FIG. 5 (document 5: Acta Biomaterialia, 2012, 8, 3643). In this method, a thiol-containing small molecule compound was used to directly modify the carboxyl of hyaluronic acid, and thiol groups were not protected in the reaction process. Since the sulfhydryl can also undergo an EDCI catalyzed coupling reaction with the carboxyl, the product obtained by this method is actually a mixture of sulfhydryl-modified and amino-modified hyaluronic acids, and has a degree of substitution of thiol far lower than that of HA-SH synthesized by the hydrazide method.

In 2015, Andreas Bernkop-Schunrch et al. reported a method for synthesizing HA-SH using cysteine ethyl ester, as shown in FIG. 6 (document 6: International Journal of Pharmaceutics, 2015, 478, 383). This method is similar to the β-mercaptoethylamine method, in which the thiol in the reaction process also participates in the carboxyl coupling reaction, so that the substitution efficiency cannot be effectively improved.

Patent Publication No. CN101200504A discloses a method for synthesizing HA-SH by modifying hyaluronic acid with a modified dithiodihydrazide compound, as shown in FIG. 7. Since the modified dithiodihydrazide compound used in this method has a longer backbone structure, the reactivity of the sulfhydryl in the resulting HA-SH is higher than that of thiol obtained by a conventional dithiodihydrazide method. However, the modified dithiodihydrazide needs to be prepared by a multi-step synthesis method, thereby having a relatively high industrial cost.

Patent Publication No. CN103613686A discloses a series of methods for synthesizing HA-SH, which includes the structure of HA-SH in the conventional dithiodihydrazide method (i.e., document 1 and Patent Publication No. CN101511875A), as shown in FIG. 8.

The above methods for preparing the sulfhydryl-modified polymer compound can be categorized into the following three types: 1, performing an amidation modification on a side chain carboxyl of a polymer compound to add a sulfhydryl-containing small molecule fragment; 2, performing an amidation modification or a hydrazidation modification on a side chain carboxyl of a polymer compound, then performing secondary functionalization through a reduction reaction or a ring-opening reaction to obtain a sulfhydryl-containing side chain structure; 3, performing a ring-opening reaction of ethylene sulfide on a side chain hydroxyl of a polymer compound under the strong alkaline condition to obtain a sulfhydryl-containing side chain structure. These methods have the following drawbacks: 1) the reagents, such as EDCI and Traut's reagent, are relatively expensive; 2) the reaction process involves the use of non-commercial reagents, such as a dithiodihydrazide compound, which requires an additional two-step chemical synthesis for preparation, thereby greatly increasing the industrialization cost; 3) the modification for carboxyl requires the use of EDCI with an optimal reaction pH of 4.75, which can cause the irreversible degradation of certain polymer compounds (e.g., hyaluronic acid); 4) the ethylene sulfide modification for hydroxyl involves a harsh reaction condition of pH = 10, and can also cause the irreversible degradation of certain polymer compounds; 5) the modifications for amino are limited by low reactivity, and generally have a low degree of sulfhydrylation.

As described above, in order to overcome the disadvantages of the natural biocompatible polymers, the

intermolecular cross-linking can also be adopted in the prior art. Specifically, the physicochemical properties of the biocompatible polymer compounds can be modified by the intermolecular cross-linking, for example, sodium hyaluronate molecules are cross-linked with a cross-linking agent to obtain a cross-linked sodium hyaluronate gel, which has the advantages of good filling effect and high biocompatibility and the like when injected into the body as a filler, and thus has been widely used in the medical and cosmetic fields. The cross-linking agent used in the intermolecular cross-linking is typically an epoxide cross-linking agent, including but not limited to: 1,4-butanediol diglycidyl ether (BDDE), ethylene glycol diglycidyl ether (EGDGE), 1,6-hexanediol diglycidyl ether, propylene glycol diglycidyl ether, poly(propylene glycol) diglycidyl ether, poly(tetramethylene glycol) diglycidyl ether, neopentyl glycol diglycidyl ether, polyglycerol polyglycidyl ether, diglycerol polyglycidyl ether, glycerol polyglycidyl ether, trimethylolpropane polyglycidyl ether, 1,2-(bis(2,3-epoxypropoxy)ethylene, pentaerythritol polyglycidyl ether, sorbitol polyglycidyl ether, or the like, with 1,4-butanediol diglycidyl ether (BDDE) being the most widely used.

In the prior art, the main disadvantages of the methods for modifying biocompatible polymers (such as the hyaluronic acid or the sodium salt thereof) by the cross-linking are as follows: on the one hand, the addition of the cross-linking agent results in the inevitable residues of the cross-linking agent, which are often toxic, thereby bringing about toxic reactions or adverse reactions when the cross-linked biocompatible polymers (such as the cross-linked hyaluronic acid or the sodium salt thereof) are applied, especially in the human body; on the other hand, the complex process resulting from the purification of the micromolecular cross-linking agent keeps the production cost of the cross-linked biocompatible polymers (such as the cross-linked hyaluronic acid or the sodium salt thereof) high.

Some other prior art documents regarding sulfhydryl-modified polymer can be seen as below.

D1: US 2019/365902 A1(MANN BRENDA K) 5 December 2019
D2: WO 2016/050788 A1(OREAL) 7 April 2016
D3: CN 104140541 A (BEIJING UNIVERSITY OF CHEMICAL TECHNOLOGY) 12 November 2014
D4: CN 101351490 A (SEOUL NATIONL UNIVERSITY OF TE) 21 January 2009
D5: CN 104224688 A (BEIJING UNIVERSITY OF CHEMICAL TECHNOLOGY) 24 December 2014
D6: CN 101506253 A (ETHICON INC.) 12 August 2009
D7: Maturavongsadit Panita, Luckanagul Jittima Amie, Metavarayuth Kamolrat, ZhaoXia, Chen Limin, Lin Yuan, Wang Qian: "Promotion of In Vitro Chondrogenesis of Mesenchymal Stem Cells Using In Situ Hyaluronic Hydrogel Functionalized with Rod-Like Viral Nanoparticles", Biomacromolecules, American Chemical Society, US, vol.17, no.6, 13 June 2016, pages 1930-1938, XP055814454
D8: Badriprasad Ananthanarayanan;Yushan Kim; Sanjay Kumar;: "Elucidating the mechanobiology of malignant brain tumors using a brain matrix-mimetic hyaluronic acid hydrogel platform", Biomaterials, Elsevier, AMSTERDAM, NL, vol.32, no.31, 4 July 2011, pages 7913-7923, XP028268208
D9: Obata H., Yamazaki Y., Matsunaga T., Sato T.: "Synthesis and evaluation of hyaluronic acid hydrogels modified with various crosslinkers as biodegradable polymers", Journal of Applied Polymer Science, John Wiley & Sons, Inc., US, vol.134, no.43, 15 November 2017 (2017-11-15), page 45453, XP055814466
D10: Jungju Kim: "Characterization of low-molecular-weight hyaluronic acid-based hydrogel and differential stem cell responses in the hydrogel microenvironments", Joumal of Biomedical Materials Research Part A, vol.88A, no.4, 2 April 2008, pages 967-975, XP055814464
D11: Daniele Michael A.; Adams AndrA.; Naciri Jawad; North Stella H.; Ligler Frances S.: "Interpenetrating networks based on gelatin methacrylamide and PEG formed using concurrent thiol click chemistries for hydrogel tissue engineering scaffolds", Biomaterials, Elsevier, AMSTERDAM, NL, vol.35, no.6, 5 December 2013, pages 1845-1856, XP028802113
D12: Xu Yanmin, Meng Fenghua, Cheng Ru, Zhong Zhiyuan: "Reduction-Sensitive Reversibly Crosslinked Biodegradable Micelles for Triggered Release of Doxorubicin: Reduction-Sensitive Reversibly Crosslinked Biodegradable", Macromolecular Bioscience, Wiley-VCH Verlag GmbH, DE, vol.9, no.12, 8 December 2009 (2009-12-08), pages 1254-1261, XP055814481
D13: CN 101628919 A (UNIV ZHEJIANG) 20 January 2010
D14: WO 2016/197087A1 (THE UNIV OF ROCHESTER et al.) 8 December 2016
D15: CN 110172115 A (UNIVHUAZHONG SCIENCE TECH) 27 August 2019
D16 CN 106478841 A (UNIV HAINAN) 8 March 2017.

## SUMMARY

The invention is set out in the appended set of claims.

In order to solve the above problems, the first object of the present invention is to provide a series of sulfhydryl-modified biocompatible polymer compounds with a novel structure, which have many benefits that make them more beneficial for the fields such as antioxidation health care products, biopharmaceuticals, medical cosmetology and

cosmetics. The second object of the present invention is to provide a preparation method for the series of sulfhydryl-modified biocompatible polymer compounds, which overcomes many disadvantages and shortcomings in the prior art and is highly promising for application. Specifically, the method overcomes the following disadvantages and shortcomings in the prior art: 1) the modifying reagent needs to be synthesized through a reaction of multiple steps, such as the dithiodihydrazide method and the modified dithiodihydrazide method; 2) in the synthesis of the modifying reagent, highly toxic organics such as hydrazine hydrate need to be applied, which does not meet the development requirement of green chemistry or environment-friendly society; 3) in the sulfhydryl modification method involving the EDCI coupling agent, the pH of the reaction system needs to be maintained at 4.75 in the activation stage, and the reaction system cannot be stabilized and homogenized through homogenization such as stirring in the gel stage, leading to highly difficult industrial operations; 4) the synthesis of HA-SH by the ethylene sulfide method needs to be performed at pH 10, so that the degradation reaction of the hyaluronic acid in the synthesis cannot be avoided; in addition, the thiocycloethane is a flammable and toxic hazardous article, and has low solubility in water, which limits the possibility of obtaining a high degree of substitution by this method; 5) the hydrazide-modified hyaluronic acid derivative cannot be produced on an industrial scale as limited by the high cost of the Traut's reagent; 6) since the thiol and the amino are both highly active nucleophilic reagents, the direct modification process of thiols such as β-mercaptoethylamine and cysteine ethyl ester involves a main reaction of the condensation of the amino and the carboxyl, and a side reaction of the thiol with the carboxyl is difficult to completely avoid by changing reaction conditions.

The sulfhydryl-modified polymer compound in the present invention may be used for the fields such as antioxidation health care products, biopharmaceuticals, medical cosmetology and cosmetics (e.g., at least one selected from antioxidation cosmetics and water retention and moisture supplement cosmetics).

**Beneficial Effects of Present Invention**

The thiolated biocompatible polymer compounds such as polysaccharides, proteins and synthetic polymers prepared by the present invention unexpectedly have significant differences and improvements in performances such as the viscosity, water retention and oxidation resistance in addition to the predictable or presumable increase in thiol content and little change in molecular weight of the main chain of the molecule, as compared to those of the hyaluronic acid and hyaluronic acid derivatives before modification. The viscosity, water retention and oxidation resistance are the main physicochemical properties of the biocompatible polymer compounds such as polysaccharides, proteins and synthetic polymers, which are closely related to the application range of the biocompatible polymer compounds. Specifically, in the characterization of physicochemical properties of a series of biocompatible polymer compounds described herein, the viscosity is the most important performance index, which is not only an external index of molecular weight, but also a key index that affects the therapeutic or plastic effect of each biocompatible polymer compound in the human body. Large viscosity makes the biocompatible polymers more difficult to disperse in tissues, thereby reducing the absorption rate of such compounds by tissues, and keeping them in the human body for a longer period of time, i.e., increasing their metabolic half-life in vivo. For various biocompatible polymer compounds represented by hyaluronic acid, the water retention and moisture supplement function is an important functional index of such compounds used in clinic, cosmetics and the like, and the water retention rate is an important index for evaluating the biocompatible polymer compounds and a comparative index for superiority. The oxidation resistance is a main functional index of various representative compounds among the biocompatible polymer compounds involved in the present invention, and is also a main functional index of these biocompatible polymer compounds used in antioxidation cosmetics, antioxidation health care products and antioxidation medical products. There have been perfect testing methods and evaluation systems for determining the oxidation resistance.

Specifically, the present invention provides a series of sulfhydryl-modified biocompatible polymer compounds with a novel structure, which are various biocompatible polymer compounds modified by various side chains with thiol groups mentioned in the present invention through chemical synthesis reactions, has significant advantages in various material performances such as viscosity, water retention and oxidation resistance, and has the following specific characteristics:

1. The new compound structure is generated by bonding a new side chain to an active site of a biocompatible polymer through a synthesis reaction.
2. The synthetic process, as compared to the synthetic process of the compound before modification, and to the synthetic process of the closest compound in the prior art, has the advantages that: 1) the reaction is mild and controllable, and the degradation of the main chain of the polymer compound in a harsh pH environment is avoided by the reaction under a neutral condition; 2) the Michael addition reaction of a thiol with a conjugated double bond is extremely efficient without any by-products generated, which conforms to the atomic economic principle and the green chemical development condition; 3) a polysulfhydryl compound (e.g., disulfhydryl compound, trisulfhydryl compound, tetrasulfhydryl compound and even polysulfhydryl compound with more sulfhydryls) is selected from a

wide range of commercial products, without the need for preparing a sulfhydryl modification reagent in advance through a synthesis reaction of multiple steps, thereby leading to a low industrialization cost; 4) the structure of the polysulfhydryl compound is flexible and adjustable, and the length of the side chain fragment can be tailored and modified as desired, so that the activity of a sulfhydryl side chain can be controlled and the size and porosity of a microcosmic cross-linked three-dimensional structure pore channel can be adjusted freely; 5) the theoretical degree of substitution of sulfhydryl in sulfhydryl modification methods in the prior art is only up to 100% (for polymer compounds with repeating units), while the theoretical degree of substitution of sulfhydryl can be increased to 200% and 300% by using a trisulfhydryl compound and a tetrasulfhydryl compound, respectively, in the present invention, which is a unique advantage that other methods in the prior art do not have.

3. As compared to the biocompatible polymer compounds before structural modification or the closest modified biocompatible polymer compounds in the prior art, the series of compounds with the novel structure of the present invention have unexpected technical benefits, are significantly different from those in the prior art, and at least have different and unexpected physicochemical properties.

4. The properties of the new material lead to advantages in potential application areas, or potential new uses.

Based on this, the series of sulfhydryl-modified polymer compounds are more suitable for use in the fields such as antioxidation health care products, biopharmaceuticals, medical cosmetology and cosmetics.

Further, the present invention provides a preparation method for the sulfhydryl-modified polymer compounds, specifically comprising: performing the Michael addition reaction of a thiol with a conjugated double bond using a polymer compound modified with a (meth)acrylate compound and a polysulfhydryl compound to prepare a sulfhydryl-modified polymer compound. The preparation method has the following advantages in addition to achieving the objective of obtaining the compounds with the novel structure described herein: capable of flexibly and effectively controlling the structure and composition of a synthetic product, the variety and content of a large number of terminal functional groups of the compounds and the like; adopting the highly biocompatible reagent to effectively control the production cost and reduce the toxicity in the synthetic process; ensuring the obtaining of a series of sulfhydryl-modified biocompatible polymer compounds with good retention of the structure and bioactivity of the starting material and controllable type and content of functional groups as desired that can be used as extracellular matrix materials under the conditions of safe reagents and simple reaction steps, to meet the requirements of various clinical applications. Specifically, the method has the advantages that:

1) the reaction is mild and controllable, and can realize the modification under a neutral condition, so that the degradation of the main chain of the polymer compound in a harsh pH environment is avoided;

2) the Michael addition reaction of the thiol with the conjugated double bond is extremely efficient without any by-products generated, which conforms to the atomic economic principle and the green chemical development condition;

3) a polysulfhydryl compound (e.g., disulfhydryl compound, trisulfhydryl compound, tetrasulfhydryl compound and even polysulfhydryl compound with more sulfhydryls) is selected from a wide range of commercial products, without the need for preparing a sulfhydryl modification reagent in advance through a synthesis reaction of multiple steps, thereby leading to a low industrialization cost;

4) the structure of the polysulfhydryl compound is flexible and adjustable, and the length of the side chain fragment can be tailored and modified as desired, so that the activity of a sulfhydryl side chain can be controlled and the size and porosity of a microcosmic cross-linked three-dimensional structure pore channel can be adjusted freely;

5) the theoretical degree of substitution of sulfhydryl in sulfhydryl modification methods in the prior art is only up to 100% (for polymer compounds with repeating units), while the theoretical degree of substitution of sulfhydryl can be increased to 200% and 300% by using a trisulfhydryl compound and a tetrasulfhydryl compound, respectively, in the present invention, which is a unique advantage that other methods in the prior art do not have.

## BRIEF DESCRIPTION OF THE DRAWINGS

FIG. 1 shows the main reaction processes reported in document 1 (synthesis of HA-SH by the dihydrazide method);

FIG. 2 shows the main reaction processes reported in document 2 (synthesis of HA-SH by the ethylene sulfide method);

FIG. 3 shows the main reaction processes reported in document 3 (synthesis of HA-SH by the post-hydrazide modification);

FIG. 4 shows the main reaction processes reported in document 4 (synthesis of HA-SH by the cystamine modification);

FIG. 5 shows the main reaction processes reported in document 5 (synthesis of HA-SH by the β-mercaptoethylamine

method);

FIG. 6 shows the main reaction processes reported in document 6 (synthesis of HA-SH by the cysteine ethyl ester modification);

FIG. 7 shows the main reaction processes reported in document CN101200504A (synthesis of HA-SH by the dihydrazide method); wherein R1 and R2 are alkylenes, substituted alkylenes, aromatic groups, polyethers and the like (note: the definitions of R1 and R2 here are limited to only FIG. 7 and document CN101200504A); p represents a residue of a polymer compound containing a carboxyl group in a side chain;

FIG. 8 shows the main reaction processes reported in document CN103613686A (similar to document 1, synthesis of HA-SH by the dihydrazide method);

FIG. 9 shows the reaction equation of Example 1;

FIG. 10 shows the reaction equation of Example 2;

FIG. 11 shows the reaction equation of Example 3;

FIG. 12 shows the reaction equation of Example 4;

FIG. 13 shows the reaction equation of Example 5;

FIG. 14 shows the reaction equation of Example 6;

FIG. 15 shows the reaction equation of Example 7;

FIG. 16 shows the reaction equation of Example 8;

FIG. 17 shows the reaction equation of Example 9;

FIG. 18 shows the reaction equation of Example 10;

FIG. 19 shows the reaction equation of Example 11;

FIG. 20 shows the reaction equation of Example 12;

FIG. 21 shows the reaction equation of Example 13 (wherein i = 10%-90%, j = 10%-90%, i2 + i3 = i, j2 + j3 = j, h = j, i + j = 100%, k1 = 1-1000);

FIG. 22 shows the reaction equation of Example 14;

FIG. 23 shows the reaction equation of Example 15;

FIG. 24 shows the reaction equation of Example 16;

FIG. 25 shows the reaction equation of Example 17;

FIG. 26 shows the reaction equation of Example 18;

FIG. 27 shows the reaction equation of Example 19;

FIG. 28 shows the reaction equation of Example 20;

FIG. 29 shows the reaction equation of Example 21;

FIG. 30 shows the reaction equation of Example 22;

FIG. 31 shows the reaction equation of Example 23;

FIG. 32 shows the reaction equation of Example 24;

FIG. 33 shows the reaction equation of Example 25;

FIG. 34 shows the reaction equation of Example 26;

FIG. 35 shows the reaction equation of Example 27;

FIG. 36 shows the reaction equation of Example 28;

FIG. 37 shows the structural formula of HA-A1 and the 1H-NMR spectrum thereof;

FIG. 38 shows the structural formula of HA-A2 and the 1H-NMR spectrum thereof;

FIG. 39 shows the structural formula of HA-MA1 and the 1H-NMR spectrum thereof;

FIG. 40 shows the structural formula of HA-MA2 and the 1H-NMR spectrum thereof;

FIG. 41 shows the structural formula of CHS-A and the 1H-NMR spectrum thereof;

FIG. 42 shows the structural formula of CHS-MA and the 1H-NMR spectrum thereof;

FIG. 43 shows the structural formula of Gelatin-A and the 1H-NMR spectrum thereof;

FIG. 44 shows the structural formula of Gelatin-MA and the 1H-NMR spectrum thereof;

FIG. 45 shows the structural formula of CTS-A and the 1H-NMR spectrum thereof;

FIG. 46 shows the structural formula of CTS-MA and the 1H-NMR spectrum thereof;

FIG. 47 shows the structural formula of PHEMA-A and the 1H-NMR spectrum thereof;

FIG. 48 shows the structural formula of PHEMA-MA and the 1H-NMR spectrum thereof;

FIG. 49 shows the structural formula of PVA-A and the 1H-NMR spectrum thereof;

FIG. 50 shows the structural formula of PVA-MA and the 1H-NMR spectrum thereof;

FIG. 51 shows the structural formula of HA-A1-SH1 and the 1H-NMR spectrum thereof;

FIG. 52 shows the structural formula of HA-A2-SH1 and the 1H-NMR spectrum thereof;

FIG. 53 shows the structural formula of HA-MA1-SH1 and the 1H-NMR spectrum thereof;

FIG. 54 shows the structural formula of HA-MA2-SH1 and the 1H-NMR spectrum thereof;

FIG. 55 shows the structural formula of CHS-A-SH1 and the 1H-NMR spectrum thereof;

FIG. 56 shows the structural formula of CHS-MA-SH1 and the 1H-NMR spectrum thereof;

FIG. 57 shows the structural formula of Gelatin-A-SH1 and the 1H-NMR spectrum thereof;
FIG. 58 shows the structural formula of Gelatin-MA-SH1 and the 1H-NMR spectrum thereof;
FIG. 59 shows the structural formula of CTS-A-SH1 and the 1H-NMR spectrum thereof;
FIG. 60 shows the structural formula of CTS-MA-SH1 and the 1H-NMR spectrum thereof;
FIG. 61 shows the structural formula of PHEMA-A-SH1 and the 1H-NMR spectrum thereof;
FIG. 62 shows the structural formula of PHEMA-MA-SH1 and the 1H-NMR spectrum thereof;
FIG. 63 shows the structural formula of HB-PEG-SH1 and the 1H-NMR spectrum thereof;
FIG. 64 shows the structural formula of PVA-A-SH1 and the 1H-NMR spectrum thereof;
FIG. 65 shows the structural formula of PVA-MA-SH1 and the 1H-NMR spectrum thereof;
FIG. 66 shows the structural formula of HA-A1-SH2 and the 1H-NMR spectrum thereof;
FIG. 67 shows the structural formula of HA-A1-SH3 and the 1H-NMR spectrum thereof;
FIG. 68 shows the structural formula of HA-A2-SH2 and the 1H-NMR spectrum thereof;
FIG. 69 shows the structural formula of HA-A2-SH3 and the 1H-NMR spectrum thereof;
FIG. 70 shows the structural formula of HA-A2-SH4 and the 1H-NMR spectrum thereof;
FIG. 71 shows the structural formula of HA-A2-SH5 and the 1H-NMR spectrum thereof;
FIG. 72 shows the structural formula of HA-A2-SH6 and the 1H-NMR spectrum thereof;
FIG. 73 shows the structural formula of HA-A2-SH7 and the 1H-NMR spectrum thereof;
FIG. 74 shows the structural formula of HA-A2-SH8 and the 1H-NMR spectrum thereof;
FIG. 75 shows the structural formula of HA-MA1-SH5 and the 1H-NMR spectrum thereof;
FIG. 76 shows the structural formula of HA-MA1-SH6 and the 1H-NMR spectrum thereof;
FIG. 77 shows the structural formula of HA-MA2-SH7 and the 1H-NMR spectrum thereof;
FIG. 78 shows the structural formula of HA-MA2-SH8 and the 1H-NMR spectrum thereof;
FIG. 79 shows the standard curve of Ellman assay;
FIG. 80 shows the standard curve of DPPH free radical content detection;
FIG. 81 shows the percentage of DPPH free radical capture.

## DETAILED DESCRIPTION

[Sulfhydryl-modified Polymer Compound]

The present disclosure provides a sulfhydryl-modified polymer compound, wherein a polymer compound to be modified comprises at least one selected from -COOH, -NH2, -OH, an acrylate group of formula a, an acrylamide group of formula b, and an acryloyl group of formula c in the structure,

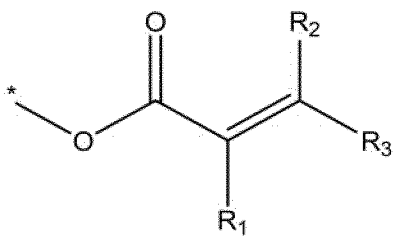

formula a

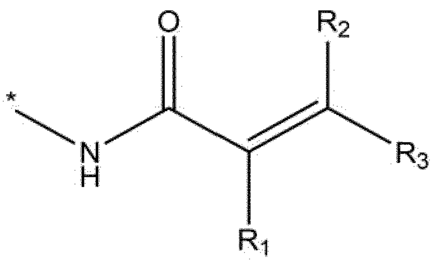

formula b

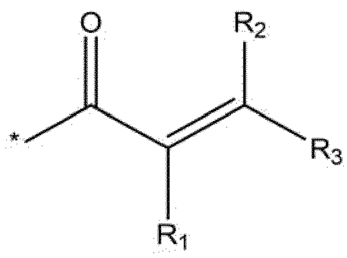

formula c

wherein part or all of the -COOH and/or the -NH2 and/or the -OH and/or the acrylate group and/or the acrylamide group and/or the acryloyl group are modified to form a side chain with the following terminal group:

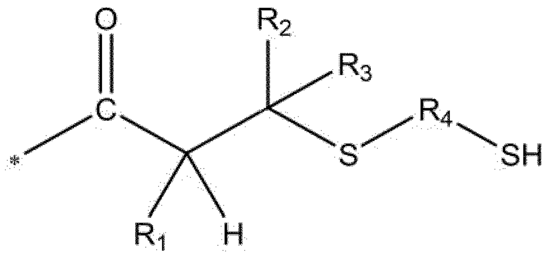

in the above group, * represents a linking site;

R1 is selected from hydrogen, halogen, an aliphatic group, an aromatic group, and the like; specifically, the halogen, the aliphatic group and the aromatic group are further defined as below; preferably, R1 is selected from hydrogen, halogen, and an aliphatic group; more preferably, R1 is selected from hydrogen, halogen and C1-6 alkyl (e.g., methyl and ethyl);

R2 and R3 are the same or different and independently from each other are selected from hydrogen, halogen, an aliphatic group, an aromatic group, and the like; specifically, the halogen, the aliphatic group and the aromatic group are further defined as below;

R4 is a fragment of a polysulfhydryl compound, which is defined as set out in the appended set of claims.

A part or all of the -COOH and/or the -NH2 and/or the -OH and/or the acrylate group and/or the acrylamide group and/or the acryloyl group are modified to form at least one of the following structures:

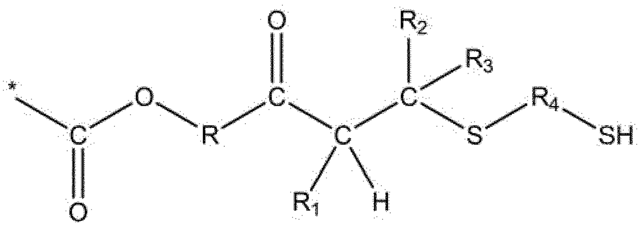

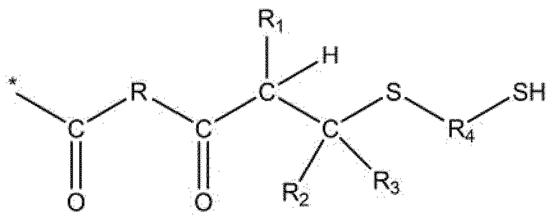

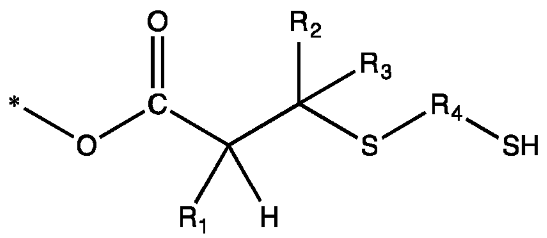

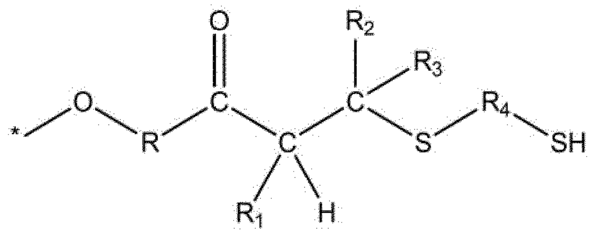

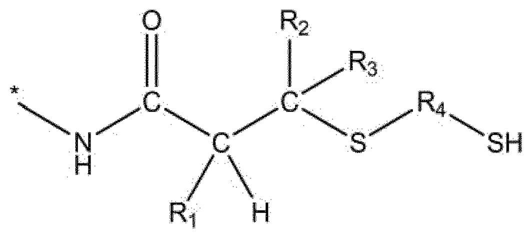

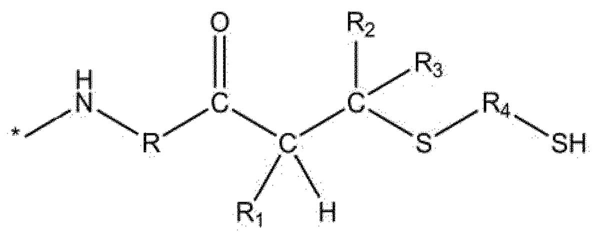

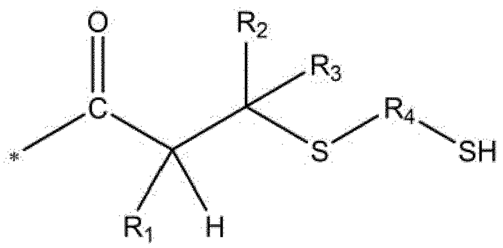

wherein in the above structures, R is selected from

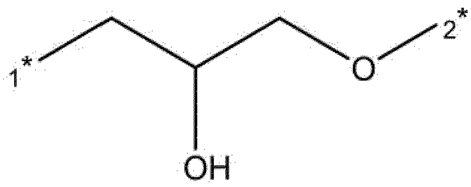

,

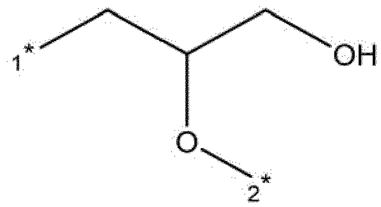

,

hydrocarbylene, arylene, an amide residue, a hydrazide residue, and the like; * represents a linking site; 1* represents a linking site to a left-hand group of R; 2* represents a linking site to a right-hand group of R; R1, R2, R3 and R4 are defined as above;
wherein at least one selected from the -COOH, the -NH2, the -OH, the acrylate group of formula a, the acrylamide group of formula b, and the acryloyl group of formula c can be directly linked to the main chain of the polymer compound, or linked to the main chain of the polymer compound via an R' group, and the R' group can be a heteroatom-containing group, hydrocarbylene, arylene or the following linker:

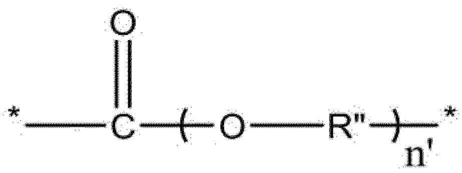

wherein in the above formula, R" is hydrocarbylene or arylene, n' is an integer from 1 to 1000, and * represents a linking site.

The heteroatom-containing group includes, but is not limited to an ester group, an amide residue or a hydrazide residue. Specifically, the ester group, the amide residue or the hydrazide residue are further defined as below.

The polymer compound to be modified comprises natural mucopolysaccharide polymers, such as at least one selected from chitosans (specifically chitosan, ethylene glycol chitosan, carboxymethyl chitosan, etc.), chondroitin sulfate, hyaluronic acid, and alginate; proteins such as gelatin, fibrin and serum proteins; and/or, synthetic polymers, such as at least one selected from polyvinyl alcohol, poly(meth)acrylic acid, polyhydroxyalkyl(meth)acrylate (e.g., polyhydroxyethyl(meth)acrylate), and hyperbranched polyethylene glycol.

A sulfhydryl content of the sulfhydryl-modified polymer compound as determined by the Ellman method is 0.01-30 mmol/g, for example, 0.1-10.0 mmol/g, for another example, 0.3-5.0 mmol/g, and for yet another example, 0.5-3.0 mmol/g.

The molecular weight of the sulfhydryl-modified polymer compound is substantially unchanged as compared to the molecular weight of the polymer compound before modification.

The sulfhydryl-modified polymer compound of the present invention comprises at least one of the following structures:

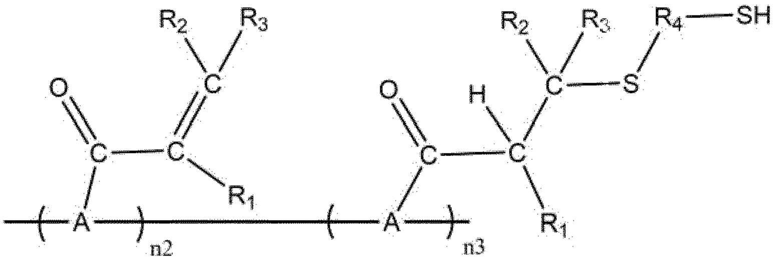

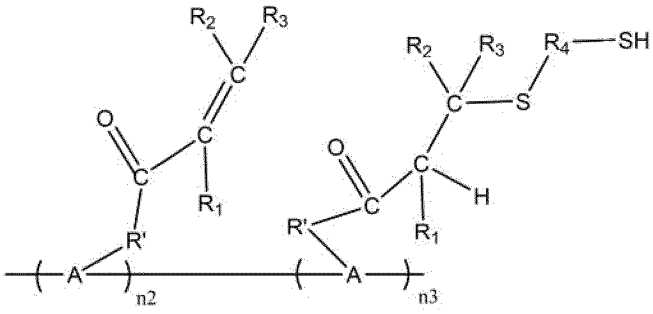

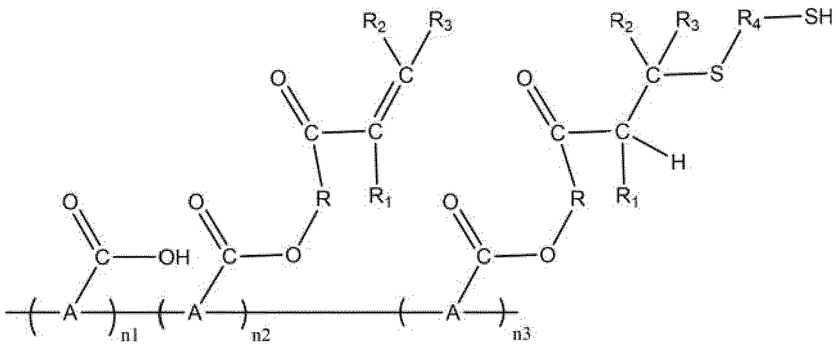

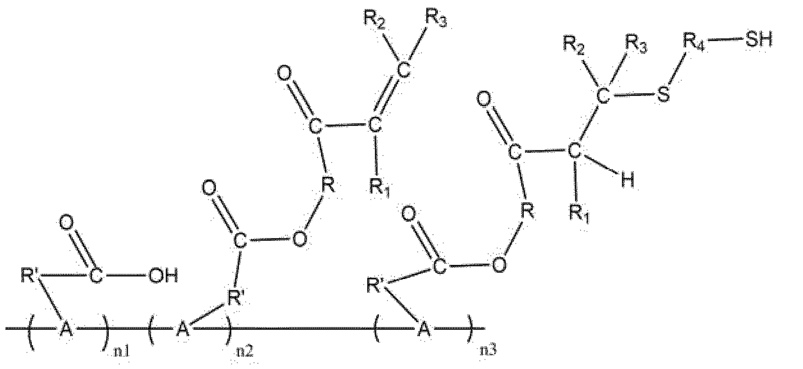

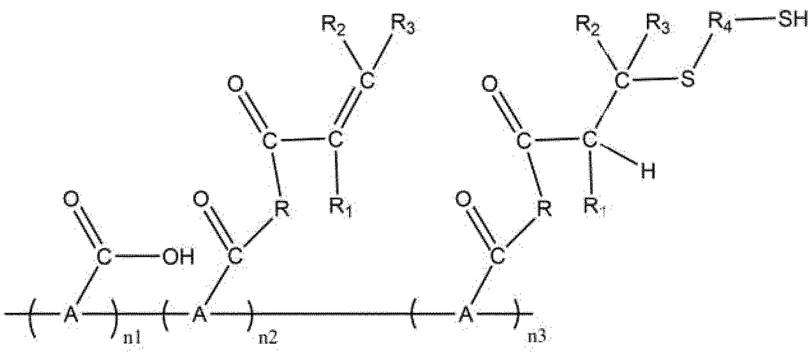

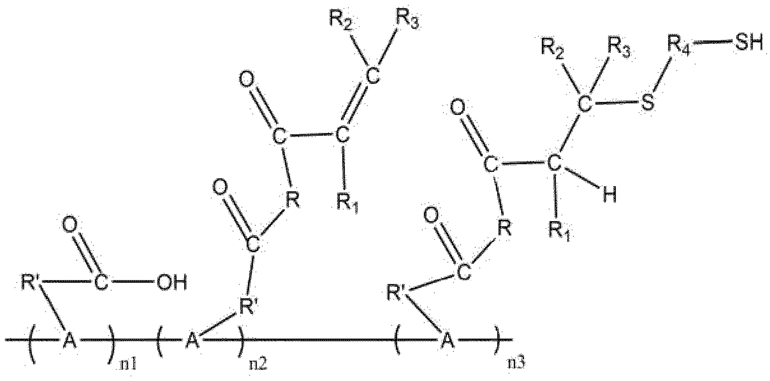

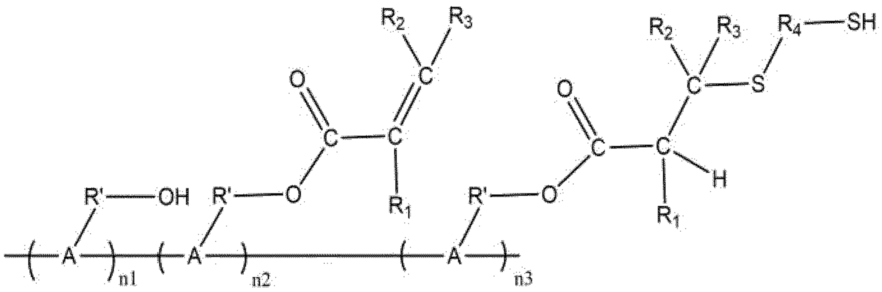

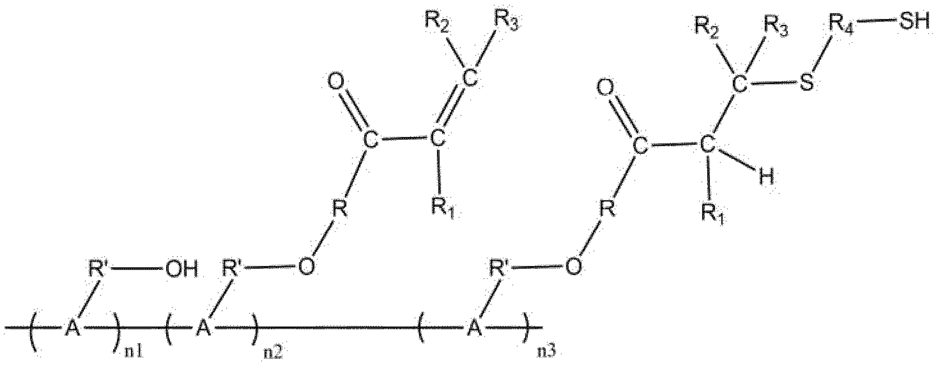

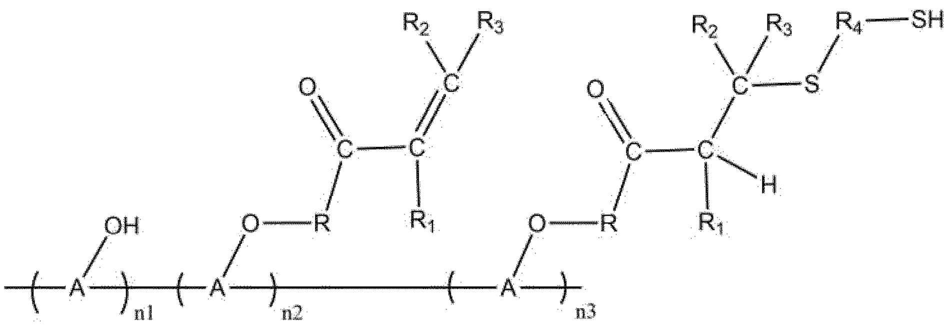

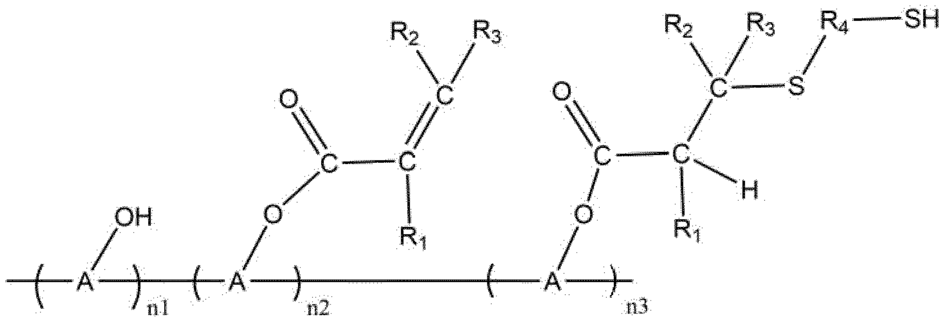

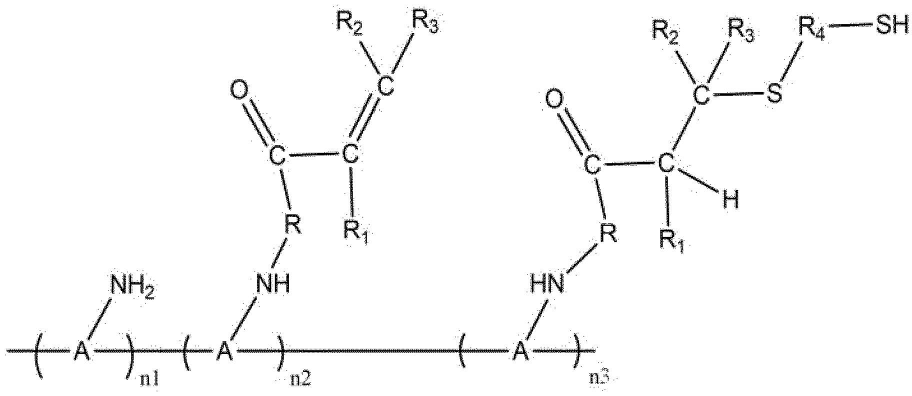

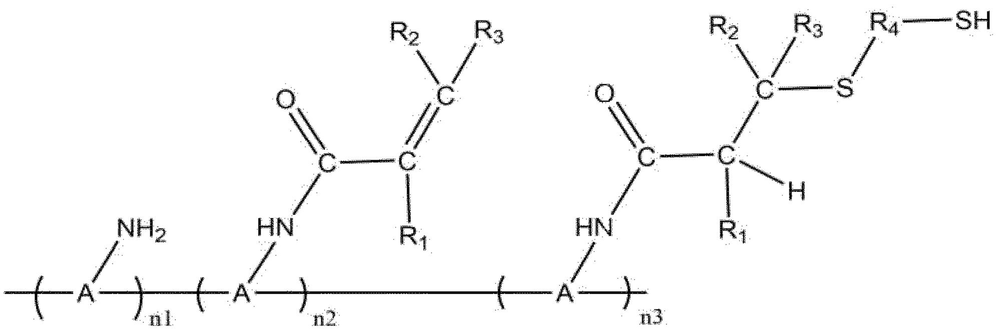

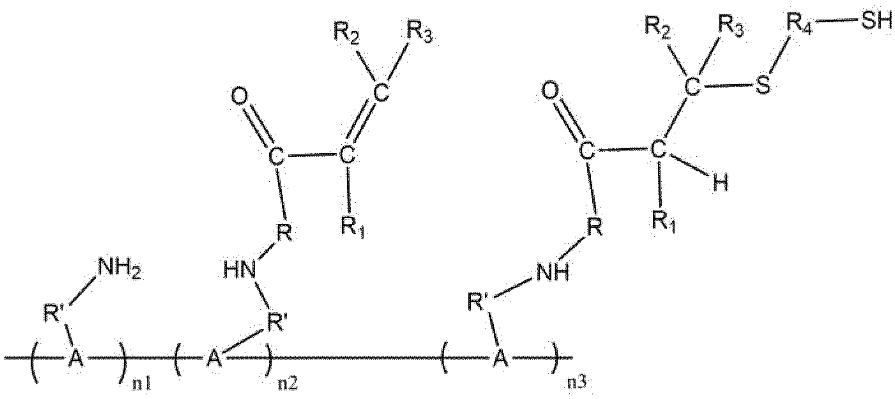

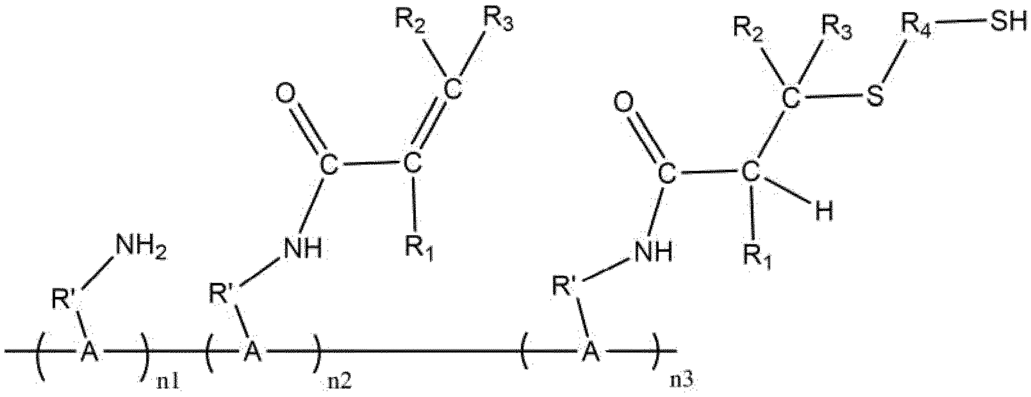

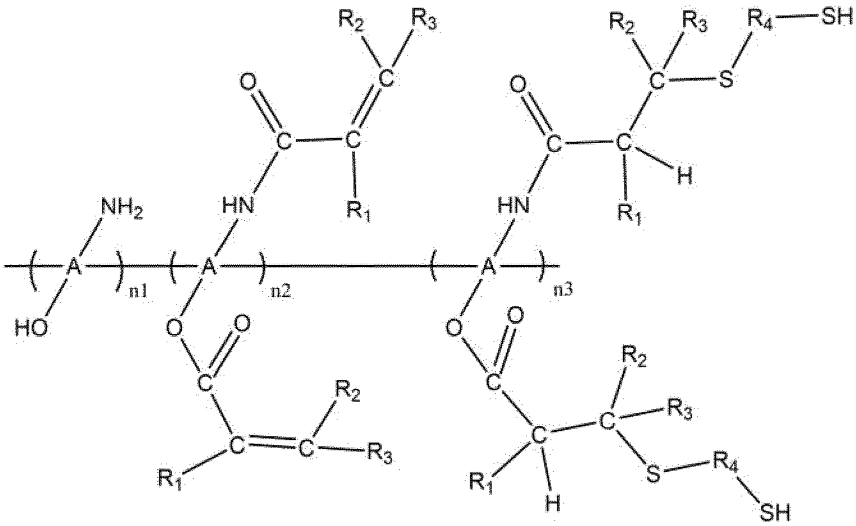

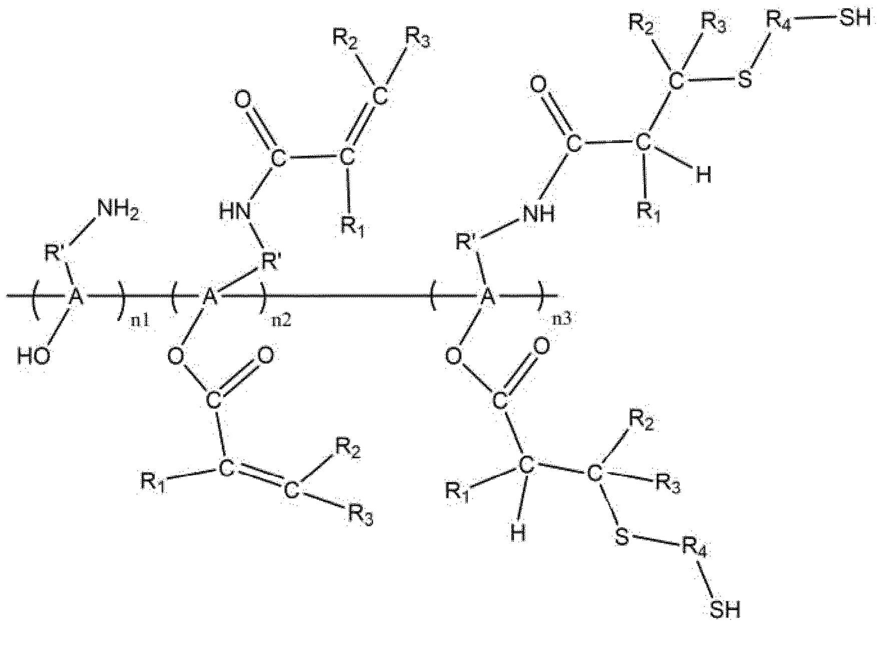

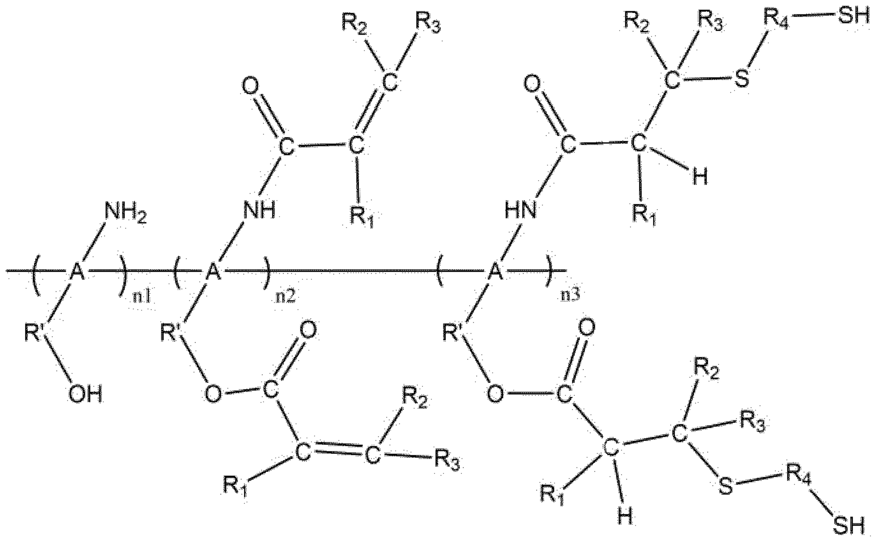

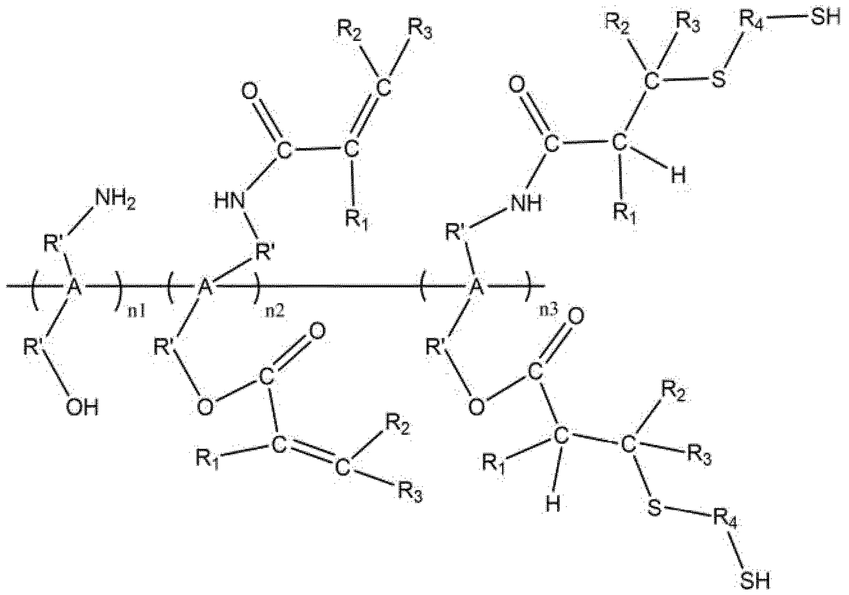

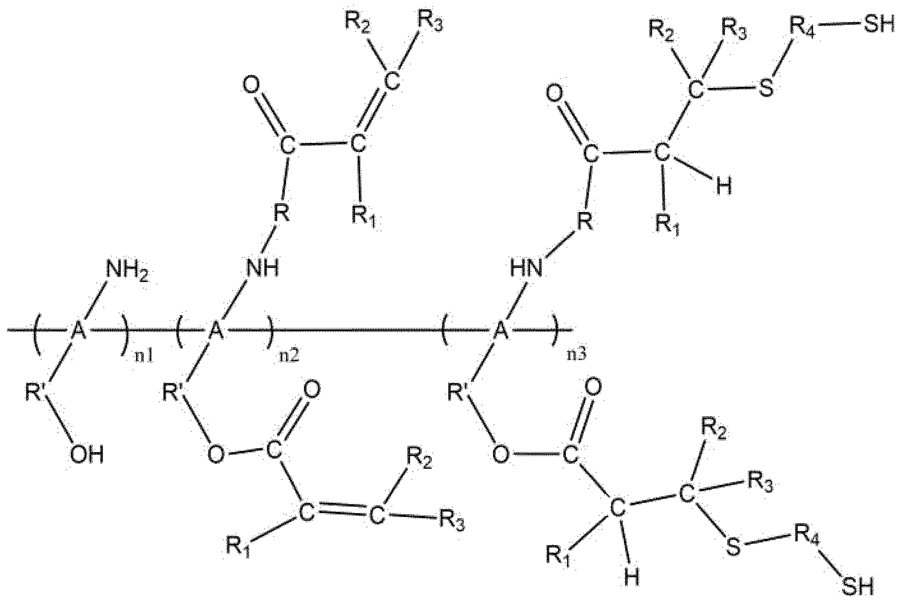

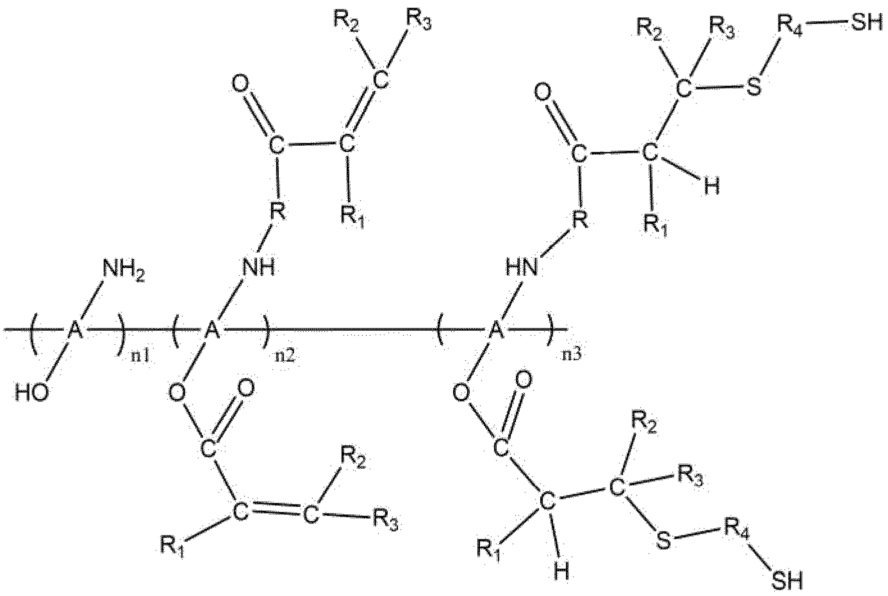

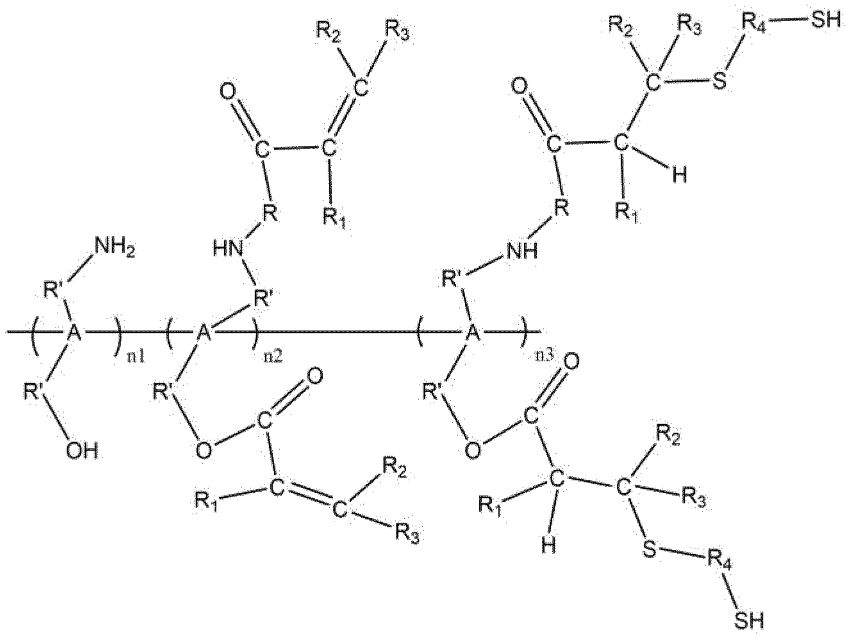

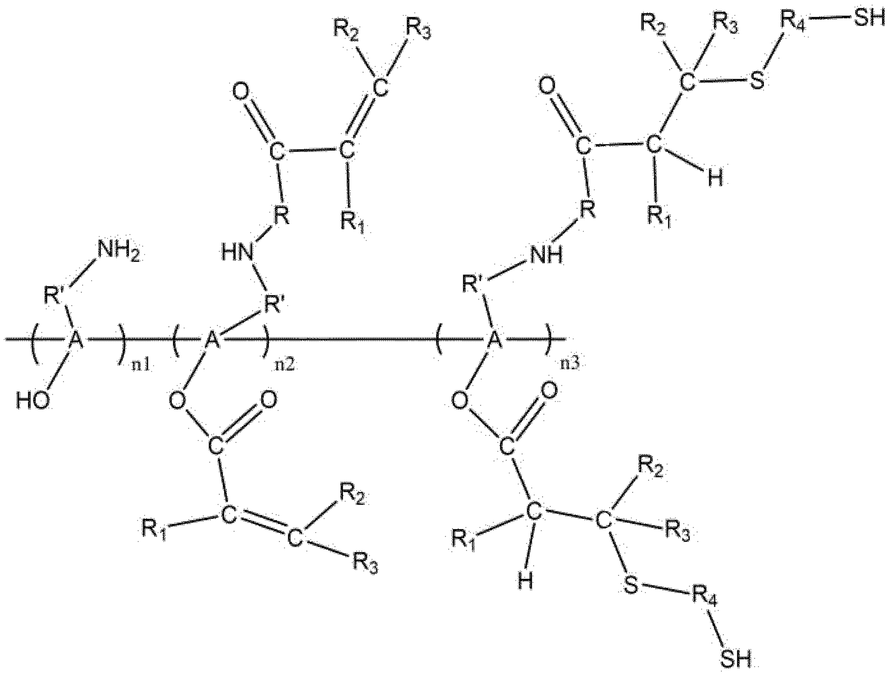

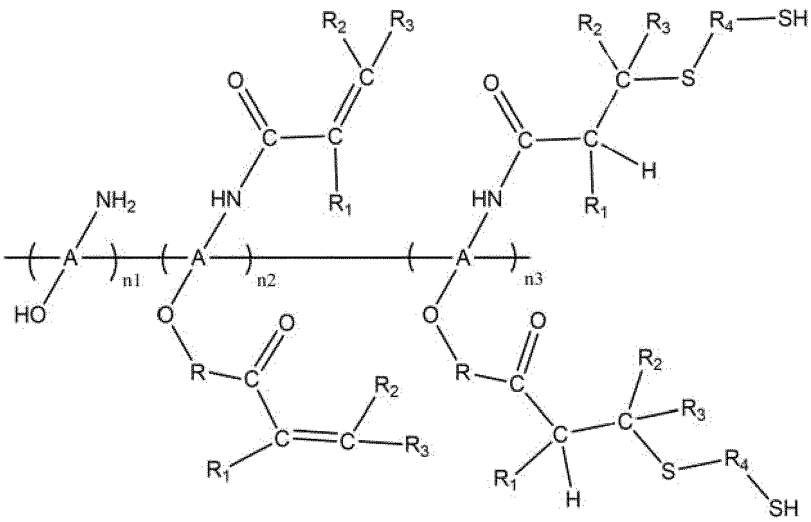

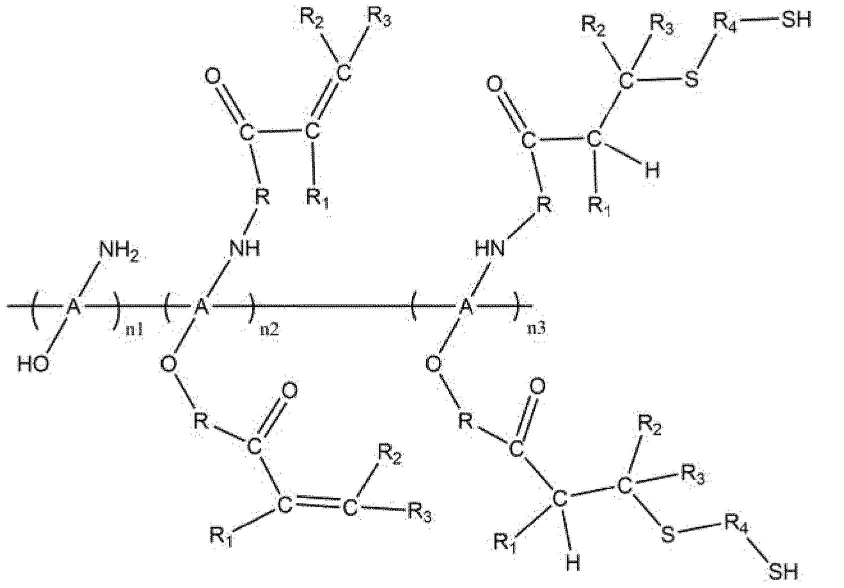

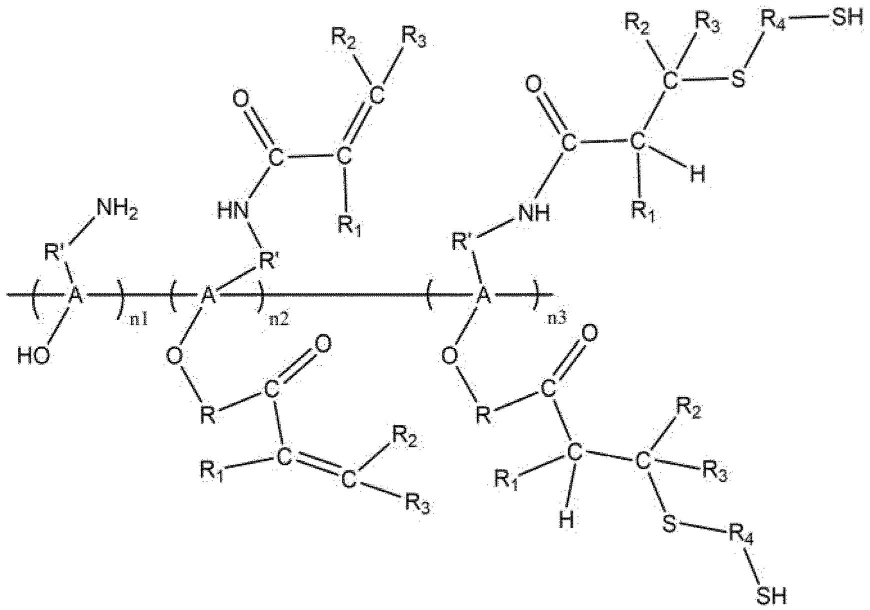

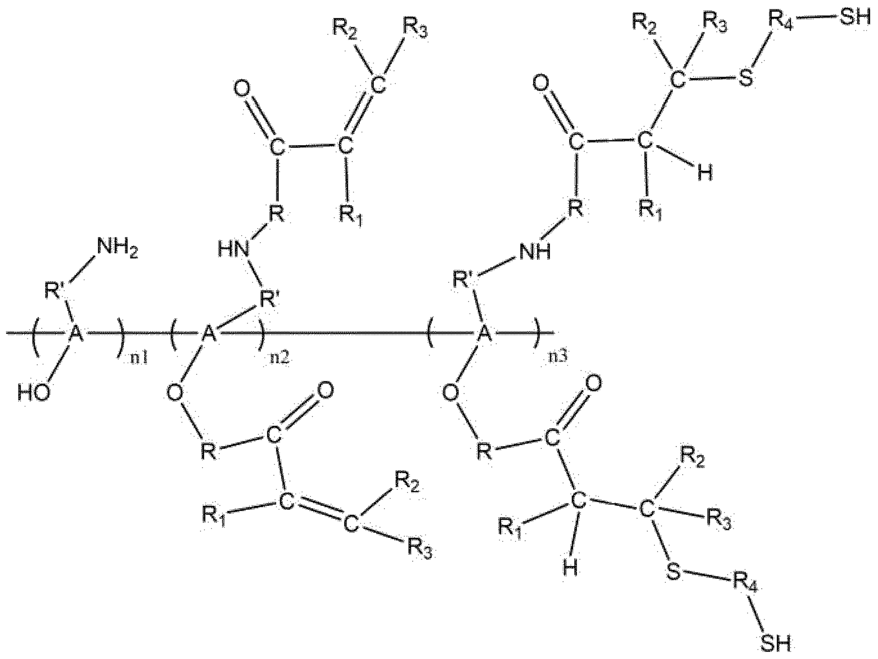

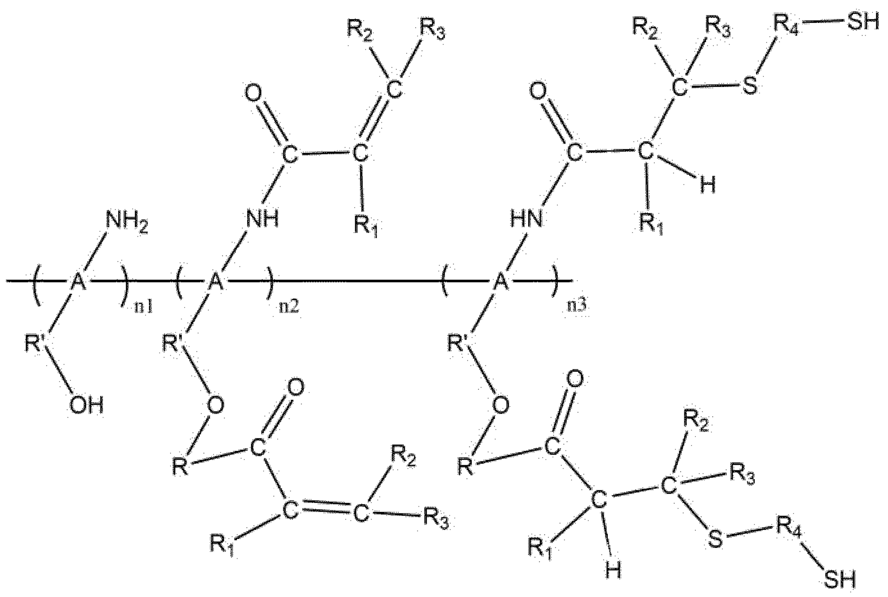

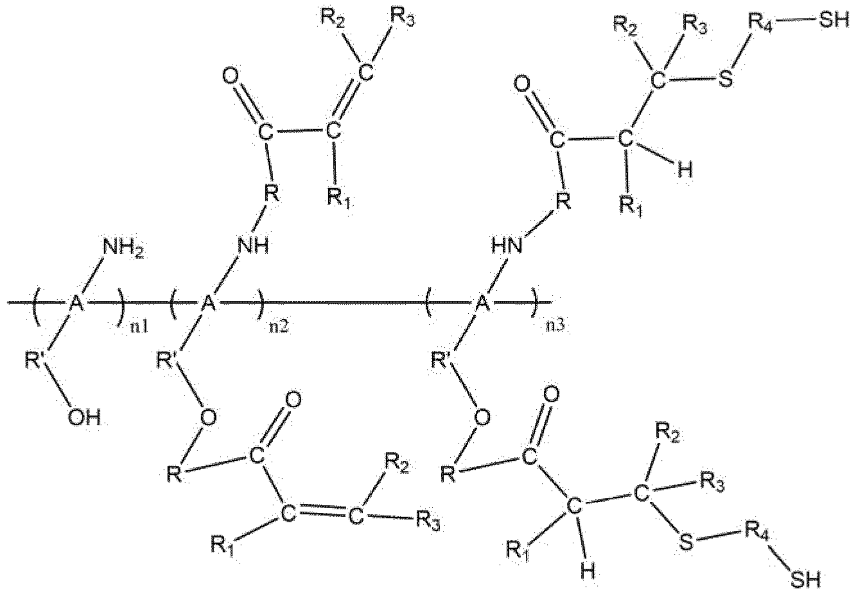

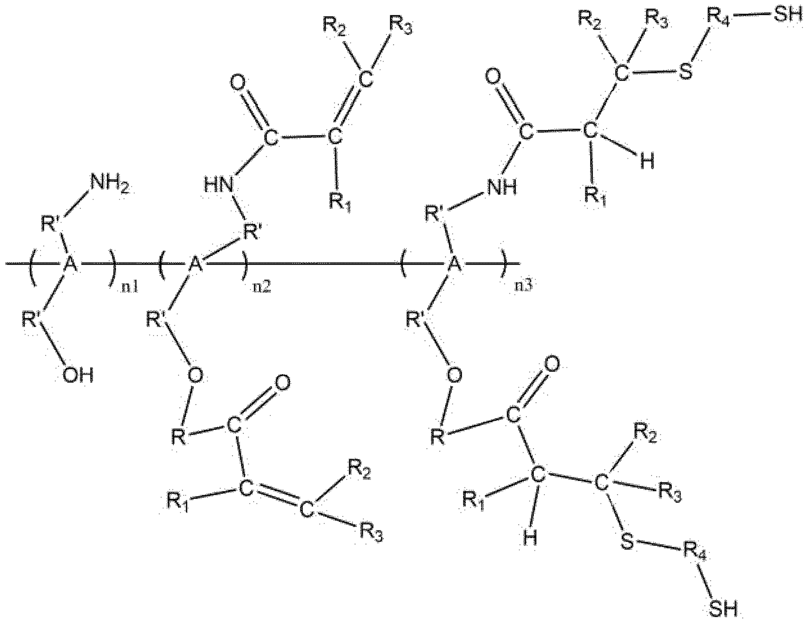

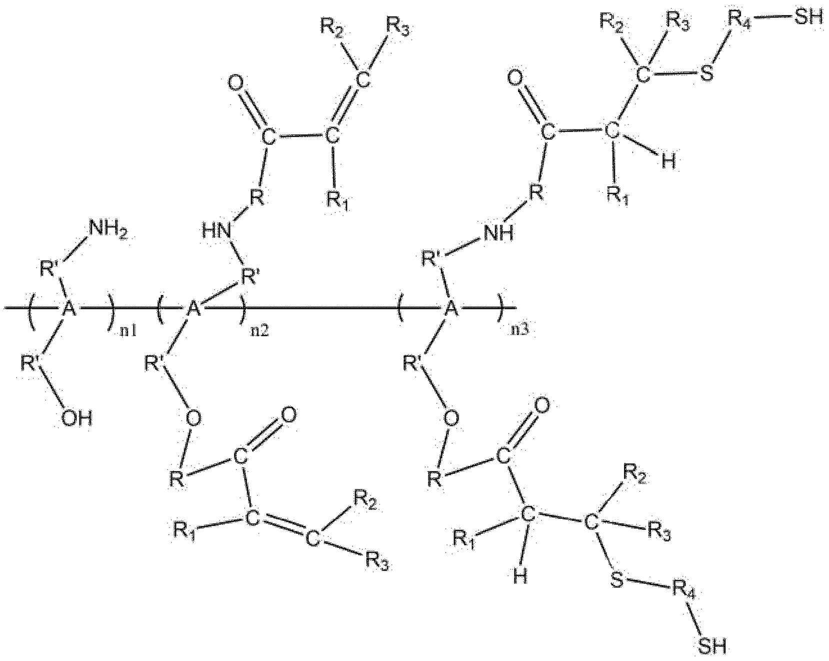

in the above structures, A is a fragment of the un-modified polymer compound comprising at least one selected from the -COOH, the -NH2, the -OH, the acrylate group of formula a, the acrylamide group of formula b and the acryloyl group of formula c in the structure; R, R', R1, R2, R3 and R4 are defined as above; (n2+n3)/(n1+n2+n3) represents a degree of acryloylation; n3/(n1+n2+n3) represents a degree of sulfhydrylation corresponding to the above sulfhydryl content of the sulfhydryl-modified polymer compound as determined by the Ellman method; the n1 can be 0, and if it is 0, the degree of acryloylation is not limited, and n3/(n2+n3) alone represents the degree of sulfhydrylation corresponding to the above sulfhydryl content of the sulfhydryl-modified polymer compound as determined by the Ellman method; the n2 can be 0, and if it is 0, n3/(n1+n3) represents both the degree of acryloylation and the degree of sulfhydrylation corresponding to the above sulfhydryl content of the sulfhydryl-modified polymer compound as determined by the Ellman method.

Specifically, the A can be a structure shown as follows:

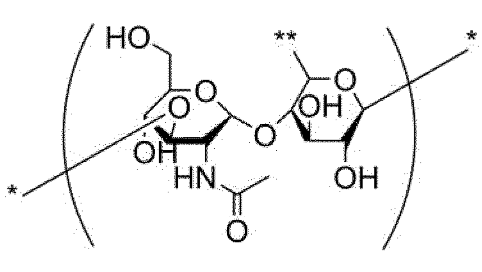

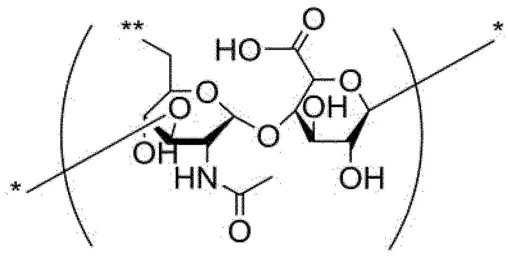

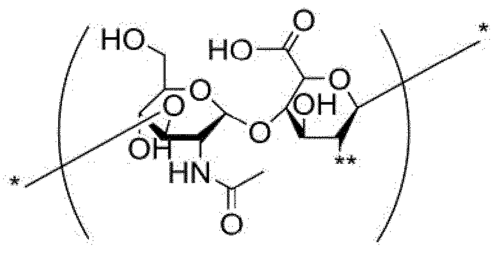

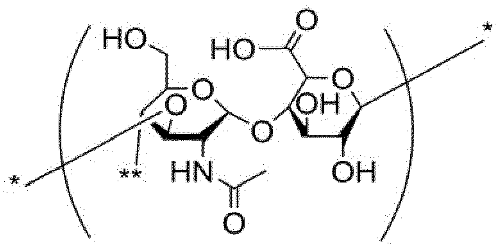

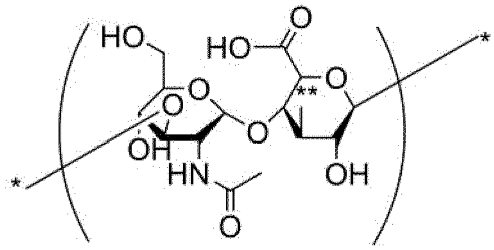

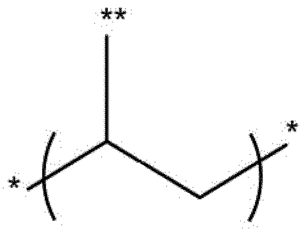

In each of the above structures, * represents a linking site between repeating units of the main chain; ** represents a linking site between -COOH, -NH2, -OH, an acrylate group of formula a, an acrylamide group of formula b or an acryloyl group of formula c and the fragment, or a linking site between an R' group and the fragment.

The A can also be a fragment or a repeating unit remaining in the following polymers Gelatin-A, Gelatin-MA, CTS-A, CTS-MA, PHEMA-A, PHEMA-MA, HB-PEG, PVA-A, PVA-MA, CHS-A or CHS-MA with the side chain containing the acrylamide group removed:

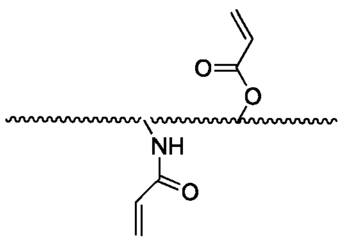

Gelatin-A

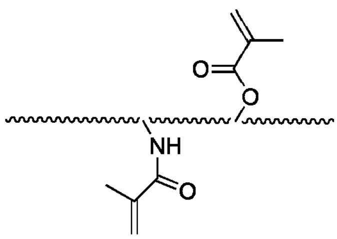

Gelatin-MA

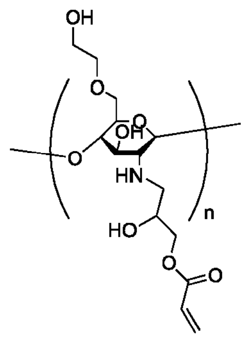

CTS-A

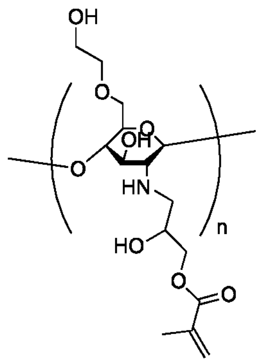

CTS-MA

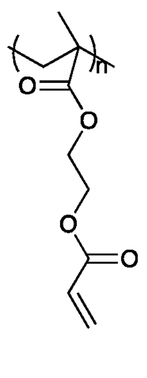

PHEMA-A

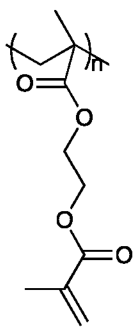

PHEMA-MA

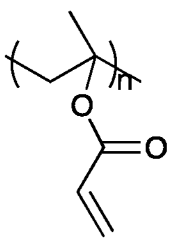

PVA-A

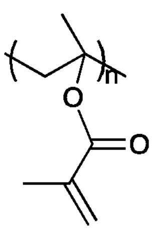

PVA-MA

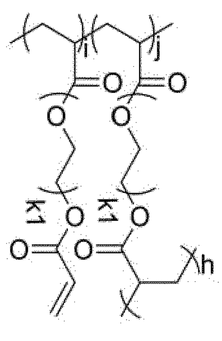

HB-PEG

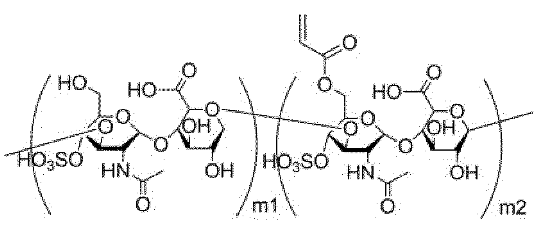

CHS-A

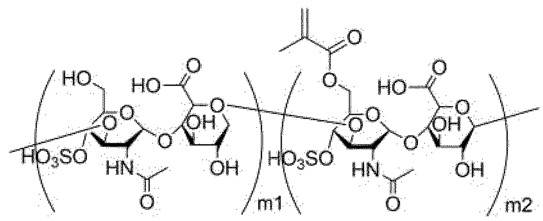

CHS-MA

It should be noted that Gelatin-A, Gelatin-MA, CTS-A, CTS-MA, PHEMA-A, PHEMA-MA, HB-PEG, PVA-A, PVA-MA, CHS-A and CHS-MA are abbreviations for the names of polymers having the above structures, and letters therein, when being separated, are not related to the meaning of letters appearing elsewhere in the present invention.

As described above, R4 is a fragment of the polysulfhydryl compound, the -S-R4-SH fragment is introduced from the following polysulfhydryl compounds:

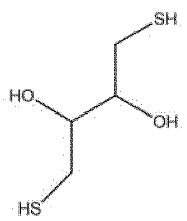

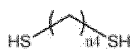

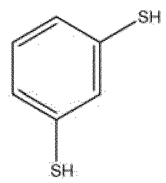

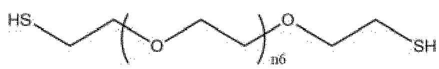

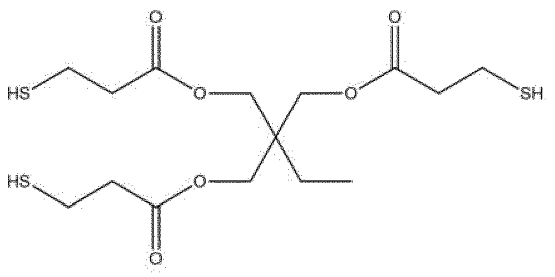

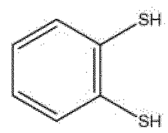

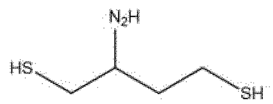

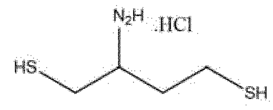

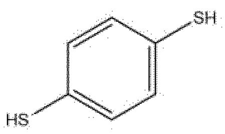

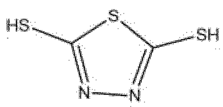

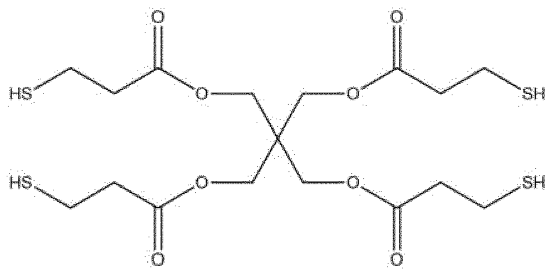

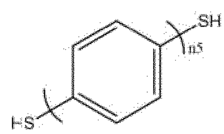

4-arm-PEG-SH

6-arm-PEG-SH

8-arm-PEG-SH

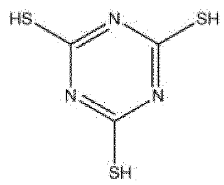

wherein n4 is an integer from 2 to 30, such as 2, 3, 4, 5 or 6 etc.; n5 is an integer from 1 to 30, such as 1, 2, 3, 4 or 5 etc.; n6 is an integer from 1 to 30, such as 1, 2, 3, 4 or 5 etc.;

4-arm-PEG-SH represents a PEG polymer containing four sulfhydryl groups; 6-arm-PEG-SH represents a PEG polymer containing six sulfhydryl groups; 8-arm-PEG-SH represents a PEG polymer containing eight sulfhydryl groups; the PEG is an abbreviation for polyethylene glycol.

In the present invention, n, n', n1, n2, n3, n4, n5, n6, m1, m2, i, j, k1 and h are the number of repeating units in the structural formula unless otherwise specified. The range of values falls within conventional ranges known in the art.

As described above, R1 is selected from hydrogen, halogen, an aliphatic group, an aromatic group, and the like; R2 and R3 are the same or different and independently from each other are selected from hydrogen, halogen, an aliphatic group, an aromatic group, and the like.

As described above, the R may be selected from hydrocarbylene, arylene, an amide residue, a hydrazide residue, and the like.

As described above, the R' may be selected from a heteroatom-containing group, hydrocarbylene, arylene, and the like.

As described above, the R" may be selected from hydrocarbylene, arylene, and the like.

The halogen refers to fluorine, chlorine, bromine or iodine.

The aliphatic group is, for example, a straight-chain or branched saturated/unsaturated aliphatic group, specifically may be alkyl, alkenyl or alkynyl.

The "hydrocarbyl" used herein alone or as a suffix or prefix is, for example, a straight-chain or branched saturated/unsaturated aliphatic group, specifically may be alkyl, alkenyl or alkynyl.

The "alkyl" used herein alone or as a suffix or prefix is intended to include both branched and straight-chain saturated aliphatic hydrocarbyl groups having 1-20, preferably 1-6, carbon atoms. For example, "C1-6 alkyl" refers to a straight-chain or branched alkyl group having 1, 2, 3, 4, 5 or 6 carbon atoms. Examples of alkyl include, but are not limited to, methyl, ethyl, n-propyl, isopropyl, n-butyl, isobutyl, sec-butyl, tert-butyl, pentyl, and hexyl.

The "alkenyl" used herein alone or as a suffix or prefix is intended to include both branched and straight-chain aliphatic hydrocarbyl groups comprising alkenyl or alkene having 2-20, preferably 2-6, carbon atoms (or the specific number of carbon atoms if provided). For example, "C2-6 alkenyl" refers to an alkenyl group having 2, 3, 4, 5 or 6 carbon atoms. Examples of alkenyl include, but are not limited to, ethenyl, allyl, 1-propenyl, 1-butenyl, 2-butenyl, 3-butenyl, 2-methylbut-2-enyl, 3-methylbut-1-enyl, 1-pentenyl, 3-pentenyl, and 4-hexenyl.

The "alkynyl" used herein alone or as a suffix or prefix is intended to include both branched and straight-chain aliphatic hydrocarbyl groups comprising alkynyl or alkyne having 2-20, preferably 2-6 carbon atoms (or the specific number of carbon atoms if provided). For example, ethynyl, propynyl (e.g., 1-propynyl, 2-propynyl), 3-butynyl, pentynyl, hexynyl and 1-methylpent-2-ynyl.

The aromatic group refers to an aromatic ring structure composed of 5-20 carbon atoms. For example, the aromatic ring structure containing 5, 6, 7 and 8 carbon atoms may be a monocyclic aromatic group, e.g., phenyl; the ring structure containing 8, 9, 10, 11, 12, 13 or 14 carbon atoms may be a polycyclic aromatic group, e.g., naphthyl. The aromatic ring may be substituted at one or more ring positions with substituents such as alkyl and halogen, e.g., tolyl. The term "aryl" also includes polycyclic ring systems having two or more rings in which two or more carbons are common to two adjacent rings (the rings are "fused rings"), and at least one of the rings is aromatic and the other rings may be, for example, cycloalkyl, cycloalkenyl, cycloalkynyl, aryl and/or heterocyclyl. Examples of polycyclic rings include, but are not limited to, 2,3-dihydro-1,4-benzodioxine and 2,3-dihydro-1-benzofuran.

The "hydrocarbylene" used herein is a group obtained by removing one hydrogen from the "hydrocarbyl".

The "arylene" used herein is a group obtained by removing one hydrogen from the "aromatic group".

The "alkylene" used herein is a group obtained by removing one hydrogen from the "alkyl".

The "amide group" used herein alone or as a suffix or prefix refers to the Ra-C(=O)-NH- group, wherein Ra is selected from the following groups unsubstituted or optionally substituted with one or more Rb: alkyl, cycloalkyl, alkenyl, cycloalkenyl, alkynyl, cycloalkynyl, heterocyclyl, aryl, heteroaryl, and the like; Rb is selected from the following groups unsubstituted or optionally substituted with one or more Rb1: halogen, hydroxyl, sulfhydryl, nitro, cyano, alkyl, alkoxy, cycloalkyl, alkenyl, alkynyl, heterocyclyl, aryl, heteroaryl, amino, carboxyl, an ester group, hydrazino, acyl, sulfinyl, sulfonyl, phosphoryl, and the like; each Rb1 is independently selected from halogen, hydroxy, alkyl and aryl.

The "hydrazide group" used herein alone or as a suffix or prefix refers to the Ra-C(=O)-NH- group, wherein Ra is defined as above.

The "amide residue" used herein is a group obtained by removing one hydrogen from the "amide group".

The "hydrazide residue" used herein is a group obtained by removing one hydrogen from the "hydrazide group".

The term "cycloalkyl" used herein is intended to include saturated cyclic groups having the specified number of carbon atoms. These terms may include fused or bridged polycyclic ring systems. The cycloalkyl has 3-40 carbon atoms in its ring structure. In one embodiment, the cycloalkyl has 3, 4, 5 or 6 carbon atoms in its ring structure. For example, "C3-6 cycloalkyl" refers to a group such as cyclopropyl, cyclobutyl, cyclopentyl or cyclohexyl.

The term "cycloalkenyl" used herein is intended to include cyclic groups comprising at least one alkenyl group having the specified number of carbon atoms. These terms may include fused or bridged polycyclic ring systems. The cycloalkenyl has 3-40 carbon atoms in its ring structure. In one embodiment, the cycloalkenyl has 3, 4, 5 or 6 carbon atoms in its ring structure. For example, "C3-6 cycloalkenyl" refers to a group such as cyclopropenyl, cyclobutenyl, cyclopentenyl or cyclohexenyl.

The term "cycloalkynyl" used herein is intended to include cyclic groups comprising at least one alkynyl group having the specified number of carbon atoms. These terms may include fused or bridged polycyclic ring systems. The cycloalkynyl has 6-40 carbon atoms in its ring structure. In one embodiment, the cycloalkynyl has 6 carbon atoms in its ring structure. For example, "C3-6 cycloalkynyl" refers to a group such as cyclopropynyl, cyclobutynyl, cyclopentynyl or cyclohexynyl.

The "heteroaryl" used herein refers to a heteroaromatic heterocycle having at least one ring heteroatom (e.g., sulfur, oxygen, or nitrogen). The heteroaryl include monocyclic ring systems and polycyclic ring systems (e.g., having 2, 3 or 4 fused rings). Examples of heteroaryl include, but are not limited to, pyridinyl, pyrimidinyl, pyrazinyl, pyridazinyl, triazinyl, furyl, quinolyl, isoquinolyl, thienyl, imidazolyl, thiazolyl, indolyl, pyrrolyl, oxazolyl, benzofuryl, benzothienyl,

benzothiazolyl, isoxazolyl, pyrazolyl, triazolyl, tetrazolyl, indazolyl, 1,2,4-thiadiazolyl, isothiazolyl, benzothienyl, purinyl, carbazolyl, benzimidazolyl, benzoxazolyl, azabenzoxazolyl, imidazothiazolyl, benzo[1,4]dioxanyl, benzo[1,3]dioxolyl, and the like. In some embodiments, the heteroaryl has 3-40 carbon atoms, and in other embodiments, 3-20 carbon atoms. In some embodiments, the heteroaryl contains 3-14, 4-14, 3-7, or 5-6 ring atoms. In some embodiments, the heteroaryl has 1-4, 1-3, or 1-2 heteroatoms. In some embodiments, the heteroaryl has 1 heteroatom.

The term "heterocyclyl" used herein refers to a saturated, unsaturated or partially saturated monocyclic, bicyclic or tricyclic ring containing 3-20 atoms, wherein 1, 2, 3, 4 or 5 ring atoms are selected from nitrogen, sulfur, oxygen or phosphorus, which, unless otherwise stated, may be linked through carbon or nitrogen, wherein the -CH2- group is optionally replaced by -C(O)-; wherein unless otherwise stated to the contrary, the ring nitrogen atom or the ring sulfur atom is optionally oxidized to form an N-oxide or S-oxide, or the ring nitrogen atom is optionally quaternized; wherein -NH in the ring is optionally substituted with acetyl, formyl, methyl, or methanesulfonyl; and the ring is optionally substituted with one or more halogens. It should be understood that when the total number of S and O atoms in the heterocyclic group exceeds 1, these heteroatoms are not adjacent to each other. If the heterocyclyl is a bicyclic or tricyclic ring, at least one ring may optionally be a heteroaromatic or aromatic ring, provided that at least one ring is non-heteroaromatic. If the heterocyclyl is a monocyclic ring, it cannot be aromatic. Examples of heterocyclyl include, but are not limited to, piperidyl, N-acetylpiperidyl, N-methylpiperidyl, N-formylpiperazinyl, N-methanesulfonylpiperazinyl, homopiperazinyl, piperazinyl, azetidinyl, oxetanyl, morpholinyl, tetrahydroisoquinolyl, tetrahydroquinolyl, indolinyl, tetrahydropyranyl, dihydro-2H-pyranyl, tetrahydrofuranyl, tetrahydrothiopyranyl, tetrahydrothiopyran-1-oxide, tetrahydrothiopyran-1,1-dioxide, 1H-pyridin-2-one, and 2,5-dioxoimidazolidinyl.

The term "acyl" used herein refers to the Ra-C(=O)- group, wherein Ra is defined as above.

The term "sulfinyl" used herein refers to the Ra-S(=O)- group, wherein Ra is defined as above.

The term "sulfonyl" used herein refers to the Ra-S(=O)2- group, wherein Ra is defined as above.

The term "phosphoryl" used herein refers to the Rc-P(=O)(Rd)- group, wherein Rc and Rd are the same or different and independently from each other are selected from the following groups, unsubstituted or optionally substituted with one or more Rb: alkyl, cycloalkyl, alkoxy, hydroxyl, alkenyl, cycloalkenyl, alkynyl, cycloalkynyl, heterocyclyl, aryl, heteroaryl, and the like; Rb is defined as above.

The term "hydrazino" used herein refers to the -NHNHRa group, wherein Ra is defined as above.

The term "amine group" used herein refers to the -NHRa group or the -N(Ra)2 group, wherein Ra is defined as above.

The term "amino" used herein refers to the -NH2 group.

The term "carboxyl" used herein refers to the -COOH group.

The term "ester group" used herein refers to the Ra-C(=O)-O- group or the Ra-O-C(=O)- group, wherein Ra is defined as above.

[Preparation Method for Sulfhydryl-modified Polymer Compound]

As described above, the present invention provides a preparation method for the sulfhydryl-modified polymer compound, which comprises the following steps:

1) acryloylating the polymer compound comprising at least one selected from the -COOH, the -NH2 and the -OH in the structure, namely linking at least one selected from the -COOH, the -NH2 and the -OH comprised in the structure of the polymer compound, directly or indirectly, to the following group:

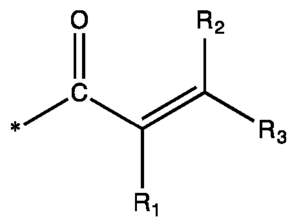

wherein R1, R2 and R3 are defined as above, and * represents a linking site;
alternatively, directly using the polymer compound comprising at least one selected from the acrylate group of formula a, the acrylamide group of formula b, and the acryloyl group of formula c in the structure as a reaction starting material;

2) reacting at least one of polymer compounds obtained in step 1) with a polysulfhydryl compound HS-R4-SH to obtain the sulfhydryl-modified polymer compound, wherein R4 is defined as above.

In one specific embodiment of the present invention, the method comprises the following steps:

1) acryloylating the polymer compound comprising at least one selected from the -COOH, the -NH2 and the -OH in the structure, namely linking at least one selected from the -COOH, the -NH2 and the -OH comprised in the structure of the polymer compound, via an -R- group or directly, to the following group:

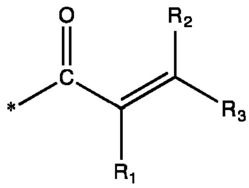

wherein R, R1, R2 and R3 are defined as above, and * represents a linking site;
alternatively, directly using the polymer compound comprising at least one selected from the acrylate group of formula a, the acrylamide group of formula b, and the acryloyl group of formula c in the structure as a reaction starting material;

2) reacting at least one selected from polymer compounds obtained in step 1) with a polysulfhydryl compound HS-R4-SH to obtain the sulfhydryl-modified polymer compound, wherein R4 is defined as above.

In step 1), the acryloylating step can be performed by reacting the polymer compound to be modified with an acrylate compound, or by reacting the polymer compound to be modified with an acryloyl chloride compound or an acrylic anhydride compound.
The acrylate compound may be one or more of an alkyl acrylate compound, an aryl acrylate compound and a glycidyl acrylate polyol compound.
The polyol in the glycidyl acrylate polyol compound is, for example, a triol, specifically, glycerin, butanetriol, pentanetriol, and the like.
In step 1), the acryloylating step may be a conventional reaction step, which can be performed under existing conventional conditions. Generally, it is performed by reacting acryloyl chloride and derivatives thereof or acrylic anhydride and derivatives thereof with a polymer compound comprising at least one selected from -OH and -NH2. It can also be performed by reacting glycidyl acrylate and derivatives thereof with the polymer compound comprising at least one selected from -COOH, -OH and -NH2.
In step 1), the acryloylating step can be an unconventional reaction step, namely using a method other than the above method to synthesize a polymer compound comprising a structure of formula c.
In step 2), the reaction with the polysulfhydryl compound HS-R4-SH is performed in a solvent. The solvent is, for example, water or an organic solvent, and further can be deionized water or dimethylformamide.
In step 2), the reaction with the polysulfhydryl compound HS-R4-SH is performed under low to high temperature conditions. For example, the reaction temperature is 0-80 °C, and further can be 10-70 °C, and for example, the reaction can be performed at room temperature.
In step 2), the reaction time for the reaction with the polysulfhydryl compound HS-R4-SH is 0.1-100 h.
In step 2), the pH range for the reaction with the polysulfhydryl compound HS-R4-SH is -1 to 15. For example, the reaction pH can be 6-8, and for another example, 7.
In step 2), the reaction further comprises a post-treatment step.
In the post-treatment step, a dialysis method is adopted. Specifically, the solution after the reaction is filled into a dialysis bag (for example, a dialysis bag with a molecular weight cutoff of 2 kDa or more), dialyzed against a hydrochloric acid solution (for example, at pH 4) for several days (for example, 1-10 days, for another example, 5 days, and the like), optionally refreshed with water (for example, refreshed with water every day or every other day) for several times (for example, twice or more, and the like), and finally collected and dried (for example, lyophilized) to obtain a solid or viscous liquid, i.e., the sulfhydryl-modified polymer compound.
The present invention firstly provides a preparation method for the sulfhydryl-modified polymer compound by the Michael addition reaction of the sulfhydryl of the polysulfhydryl compound with the carbon-carbon double bond in the acryloyl group. The method has a high degree of sulfhydrylation, mild conditions for the sulfhydrylation reaction (can be performed at room temperature in an aqueous solution) and no pollution, and the prepared sulfhydryl-modified polymer compound has high purity and is particularly suitable for further use in the fields such as pharmaceuticals, cosmetology and medicine.

[Application of Sulfhydryl-modified Polymer Compound]

As described above, the sulfhydryl-modified polymer compound of the present invention has a high degree of sulfhydrylation, and is suitable for any existing application field of the sulfhydryl-modified polymer compound. Specifically, it can be used in the fields such as antioxidation health care products, biopharmaceuticals, medical cosmetology and cosmetics (e.g., at least one selected from antioxidation cosmetics, water retention and moisture supplement cosmetics).

Taking sulfhydryl-modified hyaluronic acid as an example, it is known that hyaluronic acid (HA) is a linear, non-branched macromolecular acidic mucopolysaccharide polymer composed of repeated and alternating linkages of disaccharides (the structural units are β-(1,4)-N-acetyl-d-glucosamine and β-(1,3)-d-glucuronic acid). The chain length of HA varies from about 5 kDa to 20 MDa, with the range from 2 MDa to 5 MDa being the most common. More than 50% of hyaluronic acid is present in skin, lung and intestinal tissue. In addition, it is also present in interstitial tissues such as synovial fluid, cartilage, umbilical cord, and vascular wall. Hyaluronic acid in the human body mainly exerts physiological functions such as lubrication and buffering, filling and diffusion barrier, and free radical removal. Currently marketed hyaluronic acid products can be extracted from animal tissues (such as cockscomb, lens, cerebral cartilage and synovial fluid), or prepared by the fermentation of bacteria (such as streptococcus and pseudomonas aeruginosa). In recent years, with the in-depth research on the functions of HA, HA has been widely used in the pharmaceutical field, such as for the preparation of drug delivery systems, for the treatment of orthopedic and ophthalmic diseases, and for the prevention of post-operative adhesions and the repairing of soft tissues, which has become a research hot spot in the fields of tissue engineering and regenerative medicine. Although natural HA has excellent biocompatibility and anti-inflammatory effects, it has poor mechanical strength and degradability when in a pure state. Therefore, as a scaffold material for tissue engineering, HA must be chemically modified in a suitable way or used in combination with other materials to improve those deficiencies, to better exert its biological effects, and to provide a good environment for the survival and function of cells and the repairing and regeneration of tissues.

The present invention will be further illustrated with reference to the following specific examples. It should be understood that these examples are merely intended to illustrate the present invention rather than limit the protection scope of the present invention.

In the present invention, the 1H-NMR spectrum is determined by a Varian 400 MHz nuclear magnetic resonance spectrometer, with the test temperature of 25 °C, the relaxation time of 1 s, and the number of scanning of 8. Specifically, 8-10 mg of the test sample is dissolved in 750 μL of deuterated water, and the obtained sample solution is determined for the 1H-NMR spectrum.

Preparation Example 1. Synthesis of Acrylate-Modified Hyaluronic Acid (HA-A1)

To a 200 mL beaker were added 1 g of hyaluronic acid (Bloomage Freda, weight-average molecular weight: about 300 kDa), 50 mL of deionized water, 50 mL of dimethylformamide, 12 mL of triethylamine, and 14 mL of glycidyl acrylate. After being stirred at room temperature until uniform and transparent, the mixture was stirred for an additional 48 h. 300 mL of acetone was added, and a large amount of white precipitate was generated. The reaction solution was centrifuged, and the resulting precipitate was dissolved in 100 mL of deionized water to obtain a colorless transparent solution. The resulting solution was filled into a dialysis bag (molecular weight cutoff: 8 kDa) and dialyzed against 5 L of deionized water for 5 days, with water refreshed twice a day. Finally, the solution in the dialysis bag was collected and lyophilized to obtain HA-A1 (921 mg, yield 92.1%) as a white flocculent solid.

The structural formula of HA-A1 is shown in FIG. 37. FIG. 37 is a schematic diagram only, showing the esterification of COOH in some of the repeating units of the hyaluronic acid with glycidyl acrylate, wherein m2/(m1+m2) represents the degree of acryloylation, m1 + m2 = .n, and n is the number of repeating units of an un-modified hyaluronic acid. The meanings of the structural formulas in the following preparation examples and examples are the same as that of Preparation Example 1, and will not be repeated.

The 1H-NMR spectrum of HA-A1 is shown in FIG. 37, wherein a nuclear magnetic peak belonging to the acrylic functional group located between 6 ppm and 6.5 ppm can be seen, demonstrating that the group is successfully grafted into the structure of the hyaluronic acid. Preparation Example 2. Synthesis of Acrylate-Modified Hyaluronic Acid (HA-A2)

To a 200 mL beaker were added 1 g of hyaluronic acid (Bloomage Freda, weight-average molecular weight: about 400 kDa), 50 mL of deionized water, 50 mL of dimethylformamide, and 6.3 g of acrylic anhydride, and the mixture was dissolved with stirring. The solution was maintained at pH 8 ± 0.5 with 1 mol/L NaOH, and stirred for an additional 24 h. 300 mL of acetone was added, and a large amount of white precipitate was generated. The reaction solution was centrifuged, and the resulting precipitate was dissolved in 100 mL of deionized water to obtain a colorless transparent solution. The resulting solution was filled into a dialysis bag (Spectrumlabs, molecular weight cutoff: 8 kDa) and dialyzed against 5 L of deionized water for 5 days, with water refreshed twice a day. Finally, the solution in the dialysis bag was collected and lyophilized to obtain HA-A2 (789 mg, yield 78.9%) as a white flocculent solid.

The structural formula of HA-A2 is shown in FIG. 38.

The 1H-NMR spectrum of HA-A2 is shown in FIG. 38, wherein a nuclear magnetic peak belonging to the acrylic functional group located between 5.8 ppm and 6.4 ppm can be seen, demonstrating that the group is successfully grafted into the structure of the hyaluronic acid.

Preparation Example 3. Synthesis of Methacrylate-Modified Hyaluronic Acid (HA-MA1)

To a 200 mL beaker were added 1 g of hyaluronic acid (Bloomage Freda, weight-average molecular weight: about 400 kDa), 50 mL of deionized water, 50 mL of dimethylformamide (Sigma), 12 mL of triethylamine (Sigma), and 15 mL of glycidyl methacrylate. After being stirred at room temperature until uniform and transparent, the mixture was stirred for an additional 48 h. 300 mL of acetone (Sigma) was added, and a large amount of white precipitate was generated. The reaction solution was centrifuged, and the resulting precipitate was dissolved in 100 mL of deionized water to obtain a colorless solution. The resulting solution was filled into a dialysis bag (Spectrumlabs, molecular weight cutoff: 8 kDa) and dialyzed against 5 L of deionized water for 5 days, with water refreshed twice a day. Finally, the solution in the dialysis bag was collected and lyophilized to obtain HA-MA1 (859 mg, yield 85.9%) as a white flocculent solid.
The structural formula of HA-MA1 is shown in FIG. 39.
The 1H-NMR spectrum of HA-MA1 is shown in FIG. 39, wherein a nuclear magnetic peak belonging to the methacrylic functional group located between 5.8 ppm and 6.2 ppm can be seen, demonstrating that the group is successfully grafted into the structure of the hyaluronic acid.

Preparation Example 4. Synthesis of Methacrylate-Modified Hyaluronic Acid (HA-MA2)

To a 200 mL beaker were added 1 g of hyaluronic acid (Bloomage Freda, weight-average molecular weight: about 400 kDa) and 100 mL of deionized water, and the mixture was dissolved with stirring at room temperature. Further, 7.7 g of methacrylic anhydride was added and dissolved with stirring. The solution was maintained at pH 8 ± 0.5 with 1 mol/L NaOH, and stirred for an additional 24 h. 200 mL of acetone (Sigma) was added, and a large amount of white precipitate was generated. The reaction solution was centrifuged, and the resulting precipitate was dissolved in 100 mL of deionized water to obtain a colorless transparent solution. The resulting solution was filled into a dialysis bag (Spectrumlabs, molecular weight cutoff: 8 kDa) and dialyzed against 5 L of deionized water for 5 days, with water refreshed twice a day. Finally, the solution in the dialysis bag was collected and lyophilized to obtain HA-MA2 (846 mg, yield 84.6%) as a white flocculent solid.
The structural formula of HA-MA2 is shown in FIG. 40.
The 1H-NMR spectrum of HA-MA2 is shown in FIG. 40, wherein a nuclear magnetic peak belonging to the methacrylic functional group located between 5.8 ppm and 6.2 ppm can be seen, demonstrating that the group is successfully grafted into the structure of the hyaluronic acid.

Preparation Example 5. Synthesis of Acrylate-Modified Chondroitin Sulfate (CHS-A)

To a 200 mL beaker were added 1.2 g of chondroitin sulfate (weight-average molecular weight: about 80 kDa), 50 mL of deionized water, 50 mL of dimethylformamide, and 5.4 g of acrylic anhydride, and the mixture was dissolved with stirring. The solution was maintained at pH 8 ± 0.5 with 1 mol/L NaOH, and stirred for an additional 24 h. The resulting solution was filled into a dialysis bag (Spectrumlabs, molecular weight cutoff: 3.5 kDa) and dialyzed against 5 L of deionized water for 5 days, with water refreshed twice a day. Finally, the solution in the dialysis bag was collected and lyophilized to obtain CHS-A (781 mg, yield 65.1%) as a light yellow flocculent solid.
The structural formula of CHS-A is shown in FIG. 41.
The 1H-NMR spectrum of CHS-A is shown in FIG. 41, wherein a nuclear magnetic peak belonging to the acrylic functional group located between 6.0 ppm and 6.5 ppm can be seen, demonstrating that the group is successfully grafted into the structure of the chondroitin sulfate.

Preparation Example 6. Synthesis of Methacrylate-Modified Chondroitin Sulfate (CHS-MA)

To a 200 mL beaker were added 1.2 g of chondroitin sulfate (weight-average molecular weight: about 90 kDa), 50 mL of deionized water, and 50 mL of dimethylformamide, followed by 6.5 g of methacrylic anhydride, and the mixture was dissolved with stirring. The solution was maintained at pH 8 ± 0.5 with 1 mol/L NaOH, and stirred for an additional 24 h. The resulting solution was filled into a dialysis bag (Spectrumlabs, molecular weight cutoff: 3.5 kDa) and dialyzed against 5 L of deionized water for 5 days, with water refreshed twice a day. Finally, the solution in the dialysis bag was collected and lyophilized to obtain CHS-MA (776 mg, yield 64.7%) as a light yellow flocculent solid.
The structural formula of CHS-MA is shown in FIG. 42.
The 1H-NMR spectrum of CHS-MA is shown in FIG. 42, wherein a nuclear magnetic peak belonging to the

methacrylic functional group located between 6.0 ppm and 6.5 ppm can be seen, demonstrating that the group is successfully grafted into the structure of the chondroitin sulfate.

Preparation Example 7. Synthesis of Acrylate-Modified Gelatin (Gelatin-A)

To a 200 mL beaker were added 1 g of gelatin (strength: 300 Blooms), 50 mL of deionized water, and 50 mL of dimethylformamide, followed by 10 g of acrylic anhydride, and the mixture was dissolved with stirring. The solution was maintained at pH 8 ± 0.5 with 1 mol/L NaOH, and stirred for an additional 24 h. The resulting solution was filled into a dialysis bag (Spectrumlabs, molecular weight cutoff: 8 kDa) and dialyzed against 5 L of deionized water for 5 days, with water refreshed twice a day. Finally, the solution in the dialysis bag was collected and lyophilized to obtain Gelatin-A (781 mg, yield 78.1%) as a light yellow flocculent solid.

The condensed structural formula of Gelatin-A is shown in FIG. 43 (the wavy line therein represents the main chain of Gelatin).

The 1H-NMR spectrum of Gelatin-A is shown in FIG. 43, wherein a nuclear magnetic peak belonging to the acrylic functional group located between 6.0 ppm and 6.5 ppm can be seen, demonstrating that the group is successfully grafted into the structure of the gelatin. Preparation Example 8. Synthesis of Methacrylate-Modified Gelatin (Gelatin-MA)

To a 200 mL beaker were added 1 g of gelatin (strength: 300 Blooms), 50 mL of deionized water, and 50 mL of dimethylformamide, followed by 10 g of methacrylic anhydride, and the mixture was dissolved with stirring. The solution was maintained at pH 8 ± 0.5 with 1 mol/L NaOH, and stirred for an additional 24 h. The resulting solution was filled into a dialysis bag (Spectrumlabs, molecular weight cutoff: 8 kDa) and dialyzed against 5 L of deionized water for 5 days, with water refreshed twice a day. Finally, the solution in the dialysis bag was collected and lyophilized to obtain Gelatin-MA (824 mg, yield 82.4%) as a light yellow flocculent solid.

The condensed structural formula of Gelatin-MA is shown in FIG. 44 (the wavy line therein represents the main chain of Gelatin).

The 1H-NMR spectrum of Gelatin-MA is shown in FIG. 44, wherein a nuclear magnetic peak belonging to the methacrylic functional group located between 5.7 ppm and 6.2 ppm can be seen, demonstrating that the group is successfully grafted into the structure of the gelatin.

Preparation Example 9. Synthesis of Acrylate-Modified Ethylene Glycol Chitosan (CTS-A)

To a 200 mL beaker were added 1 g of ethylene glycol chitosan (weight-average molecular weight: about 250 kDa), 50 mL of deionized water, 50 mL of dimethylformamide, 8 mL of triethylamine (Sigma), and 13 mL of glycidyl acrylate. After being stirred at room temperature until uniform and transparent, the mixture was stirred for an additional 48 h. The resulting solution was filled into a dialysis bag (Spectrumlabs, molecular weight cutoff: 3.5 kDa) and dialyzed against 5 L of deionized water for 5 days, with water refreshed twice a day. Finally, the solution in the dialysis bag was collected and lyophilized to obtain CTS-A (694 mg, yield 69.4%) as a light yellow flocculent solid.

The structural formula of CTS-A is shown in FIG. 45.

The 1H-NMR spectrum of CTS-A is shown in FIG. 45, wherein a nuclear magnetic peak belonging to the acrylic functional group located between 5.8 ppm and 6.4 ppm can be seen, demonstrating that the group is successfully grafted into the structure of the ethylene glycol chitosan.

Preparation Example 10. Synthesis of Methacrylate-Modified Ethylene Glycol Chitosan (CTS-MA)

To a 200 mL beaker were added 1 g of ethylene glycol chitosan (weight-average molecular weight: about 200 kDa), 50 mL of deionized water, 50 mL of dimethylformamide, 8 mL of triethylamine (Sigma), and 13 mL of glycidyl methacrylate. After being stirred at room temperature until uniform and transparent, the mixture was stirred for an additional 48 h. The resulting solution was filled into a dialysis bag (Spectrumlabs, molecular weight cutoff: 3.5 kDa) and dialyzed against 5 L of deionized water for 5 days, with water refreshed twice a day. Finally, the solution in the dialysis bag was collected and lyophilized to obtain CTS-MA (726 mg, yield 72.6%) as a light yellow flocculent solid.

The structural formula of CTS-MA is shown in FIG. 46.

The 1H-NMR spectrum of CTS-MA is shown in FIG. 46, wherein a nuclear magnetic peak belonging to the methacrylic functional group located between 5.7 ppm and 6.2 ppm can be seen, demonstrating that the group is successfully grafted into the structure of the ethylene glycol chitosan.

Preparation Example 11. Synthesis of Acrylate-Modified Polyhydroxyethyl Methacrylate (PHEMA-A)

To a 200 mL beaker were added 2 g of polyhydroxyethyl methacrylate (Sigma, Mv: 20 kDa), 50 mL of deionized water, and 50 mL of dimethylformamide, followed by 16.5 g of acrylic anhydride, and the mixture was dissolved with stirring.

The solution was maintained at pH 8 ± 0.5 with 1 mol/L NaOH, and stirred for an additional 24 h. The resulting solution was filled into a dialysis bag (Spectrumlabs, molecular weight cutoff: 2 kDa) and dialyzed against 5 L of deionized water for 5 days, with water refreshed twice a day. Finally, the solution in the dialysis bag was collected and lyophilized to obtain PHEMA-A (1.42 g, yield 71.0%) as a white solid.

The structural formula of PHEMA-A is shown in FIG. 47.

The 1H-NMR spectrum of PHEMA-A is shown in FIG. 47, wherein a nuclear magnetic peak belonging to the acrylic functional group located between 5.9 ppm and 6.4 ppm can be seen, demonstrating that the group is successfully grafted into the structure of the polyhydroxyethyl methacrylate.

Preparation Example 12. Synthesis of Methacrylate-Modified Polyhydroxyethyl Methacrylate (PHEMA-MA)

To a 200 mL beaker were added 2 g of polyhydroxyethyl methacrylate (Sigma, Mv: 20 kDa), 50 mL of deionized water, and 50 mL of dimethylformamide, followed by 16.8 g of methacrylic anhydride, and the mixture was dissolved with stirring. The solution was maintained at pH 8 ± 0.5 with 1 mol/L NaOH, and stirred for an additional 24 h. The resulting solution was filled into a dialysis bag (Spectrumlabs, molecular weight cutoff: 2 kDa) and dialyzed against 5 L of deionized water for 5 days, with water refreshed twice a day. Finally, the solution in the dialysis bag was collected and lyophilized to obtain PHEMA-MA (1.48 g, yield 74.0%) as a white solid.

The structural formula of PHEMA-MA is shown in FIG. 48.

The 1H-NMR spectrum of PHEMA-MA is shown in FIG. 48, wherein a nuclear magnetic peak belonging to the methacrylic functional group located between 5.7 ppm and 6.3 ppm can be seen, demonstrating that the group is successfully grafted into the structure of the polyhydroxyethyl methacrylate.

Preparation Example 13. Synthesis of Acrylate-Modified Polyvinyl Alcohol (PVA-A)

To a 200 mL beaker were added 2 g of polyvinyl alcohol (Sigma, Mw: 61 kDa), 50 mL of deionized water, and 50 mL of dimethylformamide, followed by 13 g of acrylic anhydride, and the mixture was dissolved with stirring. The solution was maintained at pH 8 ± 0.5 with 1 mol/L NaOH, and stirred for an additional 24 h. The resulting solution was filled into a dialysis bag (Spectrumlabs, molecular weight cutoff: 3.5 kDa) and dialyzed against 5 L of deionized water for 5 days, with water refreshed twice a day. Finally, the solution in the dialysis bag was collected and lyophilized to obtain PVA-A (1.57 g, yield 78.5%) as a white solid.

The structural formula of PVA-A is shown in FIG. 49.

The 1H-NMR spectrum of PVA-A is shown in FIG. 49, wherein a nuclear magnetic peak belonging to the acrylic functional group located between 6.0 ppm and 6.5 ppm can be seen, demonstrating that the group is successfully grafted into the structure of the polyvinyl alcohol.

Preparation Example 14. Synthesis of Methacrylate-Modified Polyvinyl Alcohol (PVA-MA)

To a 200 mL beaker were added 2 g of polyvinyl alcohol (Sigma, Mw: 61 kDa), 50 mL of deionized water, and 50 mL of dimethylformamide, followed by 13.4 g of methacrylic anhydride, and the mixture was dissolved with stirring. The solution was maintained at pH 8 ± 0.5 with 1 mol/L NaOH, and stirred for an additional 24 h. The resulting solution was filled into a dialysis bag (Spectrumlabs, molecular weight cutoff: 3.5 kDa) and dialyzed against 5 L of deionized water for 5 days, with water refreshed twice a day. Finally, the solution in the dialysis bag was collected and lyophilized to obtain PVA-MA (1.51 g, yield 75.5%) as a white solid.

The structural formula of PVA-MA is shown in FIG. 50.

The 1H-NMR spectrum of PVA-MA is shown in FIG. 50, wherein a nuclear magnetic peak belonging to the methacrylic functional group located between 5.7 ppm and 6.3 ppm can be seen, demonstrating that the group is successfully grafted into the structure of the polyvinyl alcohol.

Example 1. Synthesis of Sulfhydryl-Acrylate-Modified Hyaluronic Acid (HA-A1-SH1)

To a 200 mL beaker were added 1 g of HA-A1 prepared according to the method of Preparation Example 1, 0.3 g of dithiothreitol (VWR) and 100 mL of deionized water, and the mixture was dissolved with stirring at room temperature to obtain a transparent solution. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-A1-SH1 (842 mg, yield 84.2%) as a white flocculent solid.

The reaction equation for HA-A1-SH1 is shown in FIG. 9, and the structural formula is shown in FIGs. 9 and 51.

The 1H-NMR spectrum of HA-A1-SH1 is shown in FIG. 51, wherein a nuclear magnetic peak belonging to a

sulfhydryl side chain located between 2.3 ppm and 2.8 ppm can be seen, demonstrating that the sulfhydryl group is successfully grafted into the structure of the hyaluronic acid.

Example 2. Synthesis of Sulfhydryl-Acrylate-Modified Hyaluronic Acid (HA-A2-SH1)

To a 200 mL beaker were added 1 g of HA-A2 prepared according to the method of Preparation Example 2, 0.3 g of dithiothreitol (VWR) and 100 mL of deionized water, and the mixture was dissolved with stirring at room temperature to obtain a transparent solution. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-A2-SH1 (827 mg, yield 82.7%) as a white flocculent solid.

The reaction equation for HA-A2-SH1 is shown in FIG. 10, and the structural formula is shown in FIGs. 10 and 52.

The 1H-NMR spectrum of HA-A2-SH1 is shown in FIG. 52, wherein a nuclear magnetic peak belonging to a sulfhydryl side chain located between 2.6 ppm and 2.9 ppm can be seen, demonstrating that the sulfhydryl group is successfully grafted into the structure of the hyaluronic acid.

Example 3. Synthesis of Sulfhydryl-Methacrylate-Modified Hyaluronic Acid (HA-MA1-SH1)

To a 200 mL beaker were added 1 g of HA-MA1 prepared according to the method of Preparation Example 3, 0.3 g of dithiothreitol (VWR) and 100 mL of deionized water, and the mixture was dissolved with stirring at room temperature. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-MA1-SH1 (854 mg, yield 85.4%) as a white flocculent solid.

The reaction equation for HA-MA1-SH1 is shown in FIG. 11, and the structural formula is shown in FIGs. 11 and 53.

The 1H-NMR spectrum of HA-MA1-SH1 is shown in FIG. 53, wherein a nuclear magnetic peak belonging to a sulfhydryl side chain located between 2.6 ppm and 3.0 ppm can be seen, demonstrating that the sulfhydryl group is successfully grafted into the structure of the hyaluronic acid.

Example 4. Synthesis of Sulfhydryl-Methacrylate-Modified Hyaluronic Acid (HA-MA2-SH1)

To a 200 mL beaker were added 1 g of HA-MA2 prepared according to the method of Preparation Example 4, 0.3 g of dithiothreitol (VWR) and 100 mL of deionized water, and the mixture was dissolved with stirring at room temperature. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-MA2-SH1 (833 mg, yield 83.3%) as a white flocculent solid.

The reaction equation for HA-MA2-SH1 is shown in FIG. 12, and the structural formula is shown in FIGs. 12 and 54.

The 1H-NMR spectrum of HA-MA2-SH1 is shown in FIG. 54, wherein a nuclear magnetic peak belonging to a sulfhydryl side chain located between 2.6 ppm and 3.0 ppm can be seen, demonstrating that the sulfhydryl group is successfully grafted into the structure of the hyaluronic acid.

Example 5. Synthesis of Sulfhydryl-Acrylate-Modified Chondroitin Sulfate (CHS-A-SH1)

To a 200 mL beaker were added 1 g of CHS-A prepared according to the method of Preparation Example 5, 0.25 g of dithiothreitol (VWR) and 100 mL of deionized water, and the mixture was dissolved with stirring at room temperature. The resulting transparent solution was stirred for an additional 12 h. The resulting solution was filled into a dialysis bag (Spectrumlabs, molecular weight cutoff: 3.5 kDa) and dialyzed against 5 L of hydrochloric acid solution at pH 4 for 5 days, with water refreshed twice a day. Finally, the solution in the dialysis bag was collected and lyophilized to obtain CHS-A-SH1 (629 mg, yield 62.9%) as a light yellow flocculent solid.

The reaction equation for CHS-A-SH1 is shown in FIG. 13, and the structural formula is shown in FIGs. 13 and 55.

The 1H-NMR spectrum of CHS-A-SH1 is shown in FIG. 55, wherein a nuclear magnetic peak belonging to a sulfhydryl side chain located between 2.6 ppm and 3.0 ppm can be seen, demonstrating that the sulfhydryl group is successfully grafted into the structure of the chondroitin sulfate.

Example 6. Synthesis of Sulfhydryl-Methacrylate-Modified Chondroitin Sulfate (CHS-MA-SH1)

To a 200 mL beaker were added 1 g of CHS-MA prepared according to the method of Preparation Example 6, 0.25 g of dithiothreitol (VWR) and 100 mL of deionized water, and the mixture was dissolved with stirring at room temperature. The resulting transparent solution was stirred for an additional 12 h. The resulting solution was filled into a dialysis bag (Spectrumlabs, molecular weight cutoff: 3.5 kDa) and dialyzed against 5 L of hydrochloric acid solution at pH 4 for 5 days, with water refreshed twice a day. Finally, the solution in the dialysis bag was collected and lyophilized to obtain CHS-MA-SH1 (642 mg, yield 64.2%) as a light yellow flocculent solid.
The reaction equation for CHS-MA-SH1 is shown in FIG. 14, and the structural formula is shown in FIGs. 14 and 56.
The 1H-NMR spectrum of CHS-MA-SH1 is shown in FIG. 56, wherein a nuclear magnetic peak belonging to a sulfhydryl side chain located between 2.6 ppm and 3.0 ppm can be seen, demonstrating that the sulfhydryl group is successfully grafted into the structure of the chondroitin sulfate.

Example 7. Synthesis of Sulfhydryl-Acrylate-Modified Gelatin (Gelatin-A-SH1)

To a 200 mL beaker were added 1 g of Gelatin-A prepared according to the method of Preparation Example 7, 0.19 g of dithiothreitol (VWR) and 100 mL of deionized water, and the mixture was dissolved with stirring at room temperature. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain Gelatin-A-SH1 (763 mg, yield 76.3%) as a light yellow flocculent solid.
The reaction equation for Gelatin-A-SH1 is shown in FIG. 15, and the structural formula is shown in FIGs. 15 and 57.
The 1H-NMR spectrum of Gelatin-A-SH1 is shown in FIG. 57, wherein a nuclear magnetic peak belonging to a sulfhydryl side chain located between 2.6 ppm and 2.8 ppm can be seen, demonstrating that the sulfhydryl group is successfully grafted into the structure of the gelatin.

Example 8. Synthesis of Sulfhydryl-Methacrylate-Modified Gelatin (Gelatin-MA-SH1)

To a 200 mL beaker were added 1 g of Gelatin-MA prepared according to the method of Preparation Example 8, 0.19 g of dithiothreitol (VWR) and 100 mL of deionized water, and the mixture was dissolved with stirring at room temperature. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain Gelatin-MA-SH1 (787 mg, yield 78.7%) as a light yellow flocculent solid.
The reaction equation for Gelatin-MA-SH1 is shown in FIG. 16, and the structural formula is shown in FIGs. 16 and 58.
The 1H-NMR spectrum of Gelatin-MA-SH1 is shown in FIG. 58, wherein a nuclear magnetic peak belonging to a sulfhydryl side chain located between 2.6 ppm and 2.7 ppm can be seen, demonstrating that the sulfhydryl group is successfully grafted into the structure of the gelatin.

Example 9. Synthesis of Sulfhydryl-Acrylate-Modified Ethylene Glycol Chitosan (CTS-A-SH1)

To a 200 mL beaker were added 1 g of CTS-A prepared according to the method of Preparation Example 9, 0.25 g of dithiothreitol (VWR) and 100 mL of deionized water, and the mixture was dissolved with stirring at room temperature. The resulting transparent solution was stirred for an additional 12 h. The resulting solution was filled into a dialysis bag (Spectrumlabs, molecular weight cutoff: 3.5 kDa) and dialyzed against 5 L of hydrochloric acid solution at pH 4 for 5 days, with water refreshed twice a day. Finally, the solution in the dialysis bag was collected and lyophilized to obtain CTS-A-SH1 (602 mg, yield 60.2%) as a light yellow flocculent solid.
The reaction equation for CTS-A-SH1 is shown in FIG. 17, and the structural formula is shown in FIGs. 17 and 59.
The 1H-NMR spectrum of CTS-A-SH1 is shown in FIG. 59, wherein a nuclear magnetic peak belonging to a sulfhydryl side chain located between 2.6 ppm and 3.0 ppm can be seen, demonstrating that the sulfhydryl group is successfully grafted into the structure of the ethylene glycol chitosan.

Example 10. Synthesis of Sulfhydryl-Methacrylate-Modified Chitosan (CTS-MA-SH1)

To a 200 mL beaker were added 1 g of CTS-MA prepared according to the method of Preparation Example 10,

0.25 g of dithiothreitol (VWR) and 100 mL of deionized water, and the mixture was dissolved with stirring at room temperature. The resulting transparent solution was stirred for an additional 12 h. The resulting solution was filled into a dialysis bag (Spectrumlabs, molecular weight cutoff: 3.5 kDa) and dialyzed against 5 L of hydrochloric acid solution at pH 4 for 5 days, with water refreshed twice a day. Finally, the solution in the dialysis bag was collected and lyophilized to obtain CTS-MA-SH1 (643 mg, yield 64.3%) as a white flocculent solid.

The reaction equation for CTS-MA-SH1 is shown in FIG. 18, and the structural formula is shown in FIGs. 18 and 60.

The 1H-NMR spectrum of CTS-MA-SH1 is shown in FIG. 60, wherein a nuclear magnetic peak belonging to a sulfhydryl side chain located between 2.5 ppm and 2.9 ppm can be seen, demonstrating that the sulfhydryl group is successfully grafted into the structure of the chitosan.

Example 11. Synthesis of Sulfhydryl-Acrylate-Modified Polyhydroxyethyl Methacrylate (PHEMA-A-SH1)

To a 200 mL beaker were added 2 g of PHEMA-A prepared according to the method of Preparation Example 11, 0.42 g of dithiothreitol (VWR), 50 mL of deionized water and 50 mL of dimethylformamide, and the mixture was dissolved with stirring at room temperature. The resulting transparent solution was stirred for an additional 12 h. The resulting solution was filled into a dialysis bag (Spectrumlabs, molecular weight cutoff: 2 kDa) and dialyzed against 5 L of hydrochloric acid solution at pH 4 for 5 days, with water refreshed twice a day. Finally, the solution in the dialysis bag was collected and lyophilized to obtain PHEMA-A-SH1 (1.67 g, yield 83.5%) as a white solid.

The reaction equation for PHEMA-A-SH1 is shown in FIG. 19, and the structural formula is shown in FIGs. 19 and 61.

The 1H-NMR spectrum of PHEMA-A-SH1 is shown in FIG. 61, wherein a nuclear magnetic peak belonging to a sulfhydryl side chain located between 2.6 ppm and 2.9 ppm can be seen, demonstrating that the sulfhydryl group is successfully grafted into the structure of the polyhydroxyethyl methacrylate.

Example 12. Synthesis of Sulfhydryl-Methacrylate-Modified Polyhydroxyethyl Methacrylate (PHEMA-MA-SH1)

To a 200 mL beaker were added 2 g of PHEMA-MA prepared according to the method of Preparation Example 12, 0.41 g of dithiothreitol (VWR), 50 mL of deionized water and 50 mL of dimethylformamide, and the mixture was dissolved with stirring at room temperature. The resulting transparent solution was stirred for an additional 12 h. The resulting solution was filled into a dialysis bag (Spectrumlabs, molecular weight cutoff: 2 kDa) and dialyzed against 5 L of hydrochloric acid solution at pH 4 for 5 days, with water refreshed twice a day. Finally, the solution in the dialysis bag was collected and lyophilized to obtain PHEMA-MA-SH1 (1.62 g, yield 81%) as a white solid.

The reaction equation for PHEMA-MA-SH1 is shown in FIG. 20, and the structural formula is shown in FIGs. 20 and 62.

The 1H-NMR spectrum of PHEMA-MA-SH1 is shown in FIG. 62, wherein a nuclear magnetic peak belonging to a sulfhydryl side chain located between 2.6 ppm and 3.0 ppm can be seen, demonstrating that the sulfhydryl group is successfully grafted into the structure of the polyhydroxyethyl methacrylate.

Example 13. Synthesis of Sulfhydryl-Modified Hyperbranched PEG Polymer (HB-PEG-SH1)

To a 200 mL beaker were added 5 g of hyperbranched PEG (HB-PEG, Blafar Ltd., Mw: 20 kDa), 0.86 g of dithiothreitol (VWR) and 100 mL of deionized water, and the mixture was dissolved with stirring at room temperature. The resulting transparent solution was stirred for an additional 12 h. The resulting solution was filled into a dialysis bag (Spectrumlabs, molecular weight cutoff: 2 kDa) and dialyzed against 5 L of hydrochloric acid solution at pH 4 for 5 days, with water refreshed twice a day. Finally, the solution in the dialysis bag was collected and lyophilized to obtain HB-PEG-SH1 (3.84 g, yield 76.8%) as a colorless viscous liquid.

The reaction equation for HB-PEG-SH1 is shown in FIG. 21, and the structural formula is shown in FIGs. 21 and 63.

The 1H-NMR spectrum of HB-PEG-SH1 is shown in FIG. 63, wherein a nuclear magnetic peak belonging to a sulfhydryl side chain located between 2.5 ppm and 2.6 ppm can be seen, demonstrating that the sulfhydryl group is successfully grafted into the structure of the hyperbranched PEG polymer.

Example 14. Synthesis of Sulfhydryl-Acrylate-Modified Polyvinyl Alcohol (PVA-A-SH1)

To a 200 mL beaker were added 1 g of PVA-A prepared according to the method of Preparation Example 13 and 100 mL of deionized water, and the solution was heated with stirring until the PVA-A was completely dissolved. Subsequently, the solution was added with 0.47 g of dithiothreitol (VWR) and dissolved with stirring at room temperature.

The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain PVA-A-SH1 (737 mg, yield 73.7%) as a white solid.

The reaction equation for PVA-A-SH1 is shown in FIG. 22, and the structural formula is shown in FIGs. 22 and 64.

The 1H-NMR spectrum of PVA-A-SH1 is shown in FIG. 64, wherein a nuclear magnetic peak belonging to a sulfhydryl side chain located between 2.6 ppm and 3.0 ppm can be seen, demonstrating that the sulfhydryl group is successfully grafted into the structure of the polyvinyl alcohol.

Example 15. Synthesis of Sulfhydryl-Methacrylate-Modified Polyvinyl Alcohol (PVA-MA-SH1)

To a 200 mL beaker were added 1 g of PVA-MA prepared according to the method of Preparation Example 14 and 100 mL of deionized water, and the solution was heated with stirring until the PVA-MA was completely dissolved. Subsequently, the solution was added with 0.47 g of dithiothreitol (VWR) and dissolved with stirring at room temperature. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain PVA-MA-SH1 (718 mg, yield 71.8%) as a white solid.

The reaction equation for PVA-MA-SH1 is shown in FIG. 23, and the structural formula is shown in FIGs. 23 and 65.

The 1H-NMR spectrum of PVA-MA-SH1 is shown in FIG. 65, wherein a nuclear magnetic peak belonging to a sulfhydryl side chain located between 2.5 ppm and 3.0 ppm can be seen, demonstrating that the sulfhydryl group is successfully grafted into the structure of the polyvinyl alcohol.

Example 16. Synthesis of Sulfhydryl-Acrylate-Modified Hyaluronic Acid (HA-A1-SH2)

To a 200 mL beaker were added 1 g of HA-A1 prepared according to the method of Preparation Example 1, 0.42 g of 1,4-butanedithiol (Sigma) and 100 mL of deionized water, and the mixture was dissolved with stirring at room temperature to obtain a transparent solution. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-A1-SH2 (852 mg, yield 85.2%) as a white flocculent solid.

The reaction equation for HA-A1-SH2 is shown in FIG. 24, and the structural formula is shown in FIGs. 24 and 66.

The 1H-NMR spectrum of HA-A1-SH2 is shown in FIG. 66, wherein a nuclear magnetic peak belonging to a sulfhydryl side chain located between 1.6 ppm and 1.9 ppm can be seen, demonstrating that the sulfhydryl group is successfully grafted into the structure of the hyaluronic acid.

Example 17. Synthesis of Sulfhydryl-Acrylate-Modified Hyaluronic Acid (HA-A1-SH3)

To a 200 mL beaker were added 1 g of HA-A1 prepared according to the method of Preparation Example 1, 0.43 g of 2-amino-1,4-butanedithiol hydrochloride (Sigma) and 100 mL of deionized water, and the mixture was dissolved with stirring at room temperature to obtain a transparent solution. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-A1-SH3 (843 mg, yield 84.3%) as a white flocculent solid.

The reaction equation for HA-A1-SH3 is shown in FIG. 25, and the structural formula is shown in FIGs. 25 and 67.

The 1H-NMR spectrum of HA-A1-SH3 is shown in FIG. 67, wherein a nuclear magnetic peak belonging to a sulfhydryl side chain located between 3.0 ppm and 3.2 ppm can be seen, demonstrating that the sulfhydryl group is successfully grafted into the structure of the hyaluronic acid.

Example 18. Synthesis of Sulfhydryl-Acrylate-Modified Hyaluronic Acid (HA-A2-SH2)

To a 200 mL beaker were added 1 g of HA-A2 prepared according to the method of Preparation Example 2, 0.42 g of 1,4-butanedithiol (Sigma) and 100 mL of deionized water, and the mixture was dissolved with stirring at room temperature to obtain a transparent solution. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-A2-SH2 (827 mg, yield 82.7%) as a white flocculent solid.

The reaction equation for HA-A2-SH2 is shown in FIG. 26, and the structural formula is shown in FIGs. 26 and 68.
The 1H-NMR spectrum of HA-A2-SH2 is shown in FIG. 68, wherein a nuclear magnetic peak belonging to a sulfhydryl side chain located between 1.6 ppm and 1.9 ppm can be seen, demonstrating that the sulfhydryl group is successfully grafted into the structure of the hyaluronic acid.

Example 19. Synthesis of Sulfhydryl-Acrylate-Modified Hyaluronic Acid (HA-A2-SH3)

To a 200 mL beaker were added 1 g of HA-A2 prepared according to the method of Preparation Example 2, 0.43 g of 2-amino-1,4-butanedithiol hydrochloride (Sigma) and 100 mL of deionized water, and the mixture was dissolved with stirring at room temperature to obtain a transparent solution. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-A2-SH3 (833 mg, yield 83.3%) as a white flocculent solid.
The reaction equation for HA-A2-SH3 is shown in FIG. 27, and the structural formula is shown in FIGs. 27 and 69.
The 1H-NMR spectrum of HA-A2-SH3 is shown in FIG. 69, wherein a nuclear magnetic peak belonging to a sulfhydryl side chain located between 3.0 ppm and 3.2 ppm can be seen, demonstrating that the sulfhydryl group is successfully grafted into the structure of the hyaluronic acid.

Example 20. Synthesis of Sulfhydryl-Acrylate-Modified Hyaluronic Acid (HA-A2-SH4)

To a 200 mL beaker were added 1 g of HA-A2 prepared according to the method of Preparation Example 2, 0.38 g of 1,3-propanedithiol (Sigma) and 100 mL of deionized water, and the mixture was dissolved with stirring at room temperature to obtain a transparent solution. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-A2-SH4 (814 mg, yield 81.4%) as a white flocculent solid.
The reaction equation for HA-A2-SH4 is shown in FIG. 28, and the structural formula is shown in FIGs. 28 and 70.
The 1H-NMR spectrum of HA-A2-SH4 is shown in FIG. 70, wherein a nuclear magnetic peak belonging to a sulfhydryl side chain located between 2.5 ppm and 2.8 ppm can be seen, demonstrating that the sulfhydryl group is successfully grafted into the structure of the hyaluronic acid.

Example 21. Synthesis of Sulfhydryl-Acrylate-Modified Hyaluronic Acid (HA-A2-SH5)

To a 200 mL beaker were added 1 g of HA-A2 prepared according to the method of Preparation Example 2, 0.52 g of 1,3-phenyldithiophenol (Sigma) and 100 mL of deionized water, and the mixture was dissolved with stirring at room temperature to obtain a transparent solution. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-A2-SH5 (836 mg, yield 83.6%) as a white flocculent solid.
The reaction equation for HA-A2-SH5 is shown in FIG. 29, and the structural formula is shown in FIGs. 29 and 71.
The 1H-NMR spectrum of HA-A2-SH5 is shown in FIG. 71, wherein a nuclear magnetic peak belonging to a sulfhydryl side chain located between 6.9 ppm and 7.4 ppm can be seen, demonstrating that the sulfhydryl group is successfully grafted into the structure of the hyaluronic acid.

Example 22. Synthesis of Sulfhydryl-Acrylate-Modified Hyaluronic Acid (HA-A2-SH6)

To a 200 mL beaker were added 1 g of HA-A2 prepared according to the method of Preparation Example 2, 0.52 g of 1,4-phenyldithiophenol (Sigma) and 100 mL of deionized water, and the mixture was dissolved with stirring at room temperature to obtain a transparent solution. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-A2-SH6 (831 mg, yield 83.1%) as a white flocculent solid.
The reaction equation for HA-A2-SH6 is shown in FIG. 30, and the structural formula is shown in FIGs. 30 and 72.
The 1H-NMR spectrum of HA-A2-SH6 is shown in FIG. 72, wherein a nuclear magnetic peak belonging to a sulfhydryl side chain located between 6.8 ppm and 7.0 ppm can be seen, demonstrating that the sulfhydryl group is successfully grafted into the structure of the hyaluronic acid.

Example 23. Synthesis of Sulfhydryl-Acrylate-Modified Hyaluronic Acid (HA-A2-SH7)

To a 200 mL beaker were added 1 g of HA-A2 prepared according to the method of Preparation Example 2, 0.96 g of sulfhydryl polyethylene glycol (Sigma) and 100 mL of deionized water, and the mixture was dissolved with stirring at room temperature to obtain a transparent solution. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-A2-SH7 (894 mg, yield 89.4%) as a white flocculent solid.

The reaction equation for HA-A2-SH7 is shown in FIG. 31, and the structural formula is shown in FIGs. 31 and 73.

The 1H-NMR spectrum of HA-A2-SH7 is shown in FIG. 73, wherein a nuclear magnetic peak belonging to a sulfhydryl side chain located at 3.6 ppm can be seen, demonstrating that the sulfhydryl group is successfully grafted into the structure of the hyaluronic acid.

Example 24. Synthesis of Sulfhydryl-Acrylate-Modified Hyaluronic Acid (HA-A2-SH8)

To a 200 mL beaker were added 1 g of HA-A2 prepared according to the method of Preparation Example 2, 0.74 g of trimethylolpropane-tris(3-sulfhydrylpropionate) (Sigma), 50 mL of deionized water and 50 mL of dimethylformamide, and the mixture was dissolved with stirring at room temperature to obtain a transparent solution. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-A2-SH8 (785 mg, yield 78.5%) as a white flocculent solid.

The reaction equation for HA-A2-SH8 is shown in FIG. 32, and the structural formula is shown in FIGs. 32 and 74.

The 1H-NMR spectrum of HA-A2-SH8 is shown in FIG. 74, wherein nuclear magnetic peaks belonging to a sulfhydryl side chain located between 0.8 ppm and 1.0 ppm, at 1.5 ppm, and between 2.6 ppm and 2.9 ppm can be seen, demonstrating that the sulfhydryl group is successfully grafted into the structure of the hyaluronic acid.

Example 25. Synthesis of Sulfhydryl-Methacrylate-Modified Hyaluronic Acid (HA-MA1-SH5)

To a 200 mL beaker were added 1 g of HA-MA1 prepared according to the method of Preparation Example 3, 0.50 g of 1,3-phenyldithiophenol (Sigma) and 100 mL of deionized water, and the mixture was dissolved with stirring at room temperature to obtain a transparent solution. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-MA1-SH5 (828 mg, yield 82.8%) as a white flocculent solid.

The reaction equation for HA-MA1-SH5 is shown in FIG. 33, and the structural formula is shown in FIGs. 33 and 75.

The 1H-NMR spectrum of HA-MA1-SH5 is shown in FIG. 75, wherein a nuclear magnetic peak belonging to a sulfhydryl side chain located between 6.9 ppm and 7.4 ppm can be seen, demonstrating that the sulfhydryl group is successfully grafted into the structure of the hyaluronic acid.

Example 26. Synthesis of Sulfhydryl-Methacrylate-Modified Hyaluronic Acid (HA-MA1-SH6)

To a 200 mL beaker were added 1 g of HA-MA1 prepared according to the method of Preparation Example 3, 0.50 g of 1,4-phenyldithiophenol (Sigma) and 100 mL of deionized water, and the mixture was dissolved with stirring at room temperature to obtain a transparent solution. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-MA1-SH6 (833 mg, yield 83.3%) as a white flocculent solid.

The reaction equation for HA-MA1-SH6 is shown in FIG. 34, and the structural formula is shown in FIGs. 34 and 76.

The 1H-NMR spectrum of HA-MA1-SH6 is shown in FIG. 76, wherein a nuclear magnetic peak belonging to a sulfhydryl side chain located between 6.9 ppm and 7.0 ppm can be seen, demonstrating that the sulfhydryl group is successfully grafted into the structure of the hyaluronic acid.

Example 27. Synthesis of Sulfhydryl-Methacrylate-Modified Hyaluronic Acid (HA-MA2-SH7)

To a 200 mL beaker were added 1 g of HA-MA2 prepared according to the method of Preparation Example 4, 0.92

g of sulfhydryl polyethylene glycol (Sigma) and 100 mL of deionized water, and the mixture was dissolved with stirring at room temperature to obtain a transparent solution. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-MA2-SH7 (876 mg, yield 87.6%) as a white flocculent solid.

The reaction equation for HA-MA2-SH7 is shown in FIG. 35, and the structural formula is shown in FIGs. 35 and 77.

The 1H-NMR spectrum of HA-MA2-SH7 is shown in FIG. 77, wherein a nuclear magnetic peak belonging to a sulfhydryl side chain located at 3.6 ppm can be seen, demonstrating that the sulfhydryl group is successfully grafted into the structure of the hyaluronic acid.

Example 28. Synthesis of Sulfhydryl-Methacrylate 2-Modified Hyaluronic Acid (HA-MA2-SH8)

To a 200 mL beaker were added 1 g of HA-MA2 prepared according to the method of Preparation Example 4, 0.68 g of trimethylolpropane-tris(3-sulfhydrylpropionate) (Sigma), 50 mL of deionized water and 50 mL of dimethylformamide, and the mixture was dissolved with stirring at room temperature to obtain a transparent solution. The resulting transparent solution was stirred for an additional 12 h. The resulting solution was filled into a dialysis bag (Spectrumlabs, molecular weight cutoff: 8 kDa) and dialyzed against 5 L of hydrochloric acid solution at pH 4 for 5 days, with water refreshed twice a day. Finally, the solution in the dialysis bag was collected and lyophilized to obtain HA-MA2-SH8 (825 mg, yield 82.5%) as a white flocculent solid.

The reaction equation for HA-MA2-SH8 is shown in FIG. 36, and the structural formula is shown in FIG. 36 and 78.

The 1H-NMR spectrum of HA-MA2-SH8 is shown in FIG. 78, wherein nuclear magnetic peaks belonging to a sulfhydryl side chain located between 0.8 ppm and 1.0 ppm, at 1.5 ppm, and between 2.6 ppm and 2.9 ppm can be seen, demonstrating that the sulfhydryl group is successfully grafted into the structure of the hyaluronic acid.

Example 29. Determination of Sulfhydryl Content of Sulfhydryl-Modified Polymer Compounds by Ellman Method

Preparation process:

1. Preparation of a test buffer: 0.1 mol/L Na2HPO4 (containing 1 mM EDTA, adjusted to pH 8.0 with concentrated hydrochloric acid).
2. Preparation of a standard working solution: 30 mmol/L cysteine solution.
3. Preparation of an Ellman reagent stock solution: 0.1 mol/L Ellman reagent solution.
4. Preparation of a standard solution:

| Molar concentration of sulfhydryl | 0 mmol/L | 0.5 mmol/L | 1.0 mmol/L | 1.5 mmol/L | 2.0 mmol/L |
|---|---|---|---|---|---|
| Standard working solution (μL) | 0 | 4 | 8 | 12 | 16 |
| Buffer (μL) | 240 | 236 | 232 | 228 | 224 |
| Total volume (μL) | 240 | 240 | 240 | 240 | 240 |

5. Preparation of a test sample solution: an appropriate amount of the sulfhydryl-modified polymer compound sample was dissolved in the buffer to prepare 1 mg/mL solution to be tested (triplicates for each sample).

Testing process:

1. The cysteine standard solution was prepared in a 0.5 mL centrifuge tube according to step 4 above.
2. In an additional 1.5 mL centrifuge tube, 50 μL of Ellman assay solution was added to 1 mL buffer to obtain an assay solution.
3. 240 μL of the standard solution/test sample solution were each mixed with the Ellman assay solution in step 2 of the testing process, and reacted at room temperature for 15 min.
4. After 15 min, the absorbance at 412 nm was determined using a microplate reader.
5. The thiol content in the product can be calculated according to the absorbance/concentration standard curve of the obtained standard solution.

The standard curve of the sulfhydryl content is shown in FIG. 79, and the determination results of the sulfhydryl content are shown in Table 1.

Example 30. Determination of Dynamic Viscosity of Sulfhydryl-Modified Polymer Compounds 500 mg of sulfhydryl-modified polymer compound was dissolved in 50 mL of deionized water to obtain a 1% w/v solution. The dynamic viscosity of the resulting solution was determined at 25 °C using a rotary viscometer. The results are shown in Table 1 (PHEMA-A-SH1 and PHEMA-MA-SH1 were not determined for dynamic viscosity, because they were too viscous after dissolution and appeared to be gel-like).

Table 1. Determination results of sulfhydryl content and dynamic viscosity of sulfhydryl-modified polymer compounds

| Sample | Ellman assay results | Determination results of viscosity |
|---|---|---|
| | Sulfhydryl content (mmol/g) | Dynamic viscosity (mPa·s) |
| HA-A1-SH1 | 1.357 | 420 |
| HA-A2-SH1 | 1.424 | 416 |
| HA-MA1-SH1 | 1.322 | 387 |
| HA-MA2-SH1 | 1.362 | 441 |
| CHS-A-SH1 | 1.152 | 206 |
| CHS-MA-SH2 | 1.245 | 284 |
| Gelatin-A-SH1 | 0.626 | 317 |
| Gelatin-MA-SH1 | 0.614 | 288 |
| CTS-A-SH1 | 1.832 | 265 |
| CTS-MA-SH1 | 1.763 | 292 |
| PHEMA-A-SH1 | 1.736 | - |
| PHEMA-MA-SH1 | 1.719 | - |
| HB-PEG-SH1 | 0.756 | 76 |
| PVA-A-SH1 | 1.982 | 64 |
| PVA-MA-SH1 | 1.857 | 69 |
| HA-A1-SH2 | 1.428 | 452 |
| HA-A1-SH3 | 1.347 | 398 |
| HA-A2-SH2 | 1.471 | 435 |
| HA-A2-SH3 | 1.413 | 412 |
| HA-A2-SH4 | 1.458 | 487 |
| HA-A2-SH5 | 1.347 | 437 |
| HA-A2-SH6 | 1.298 | 416 |
| HA-A2-SH7 | 0.974 | 473 |
| HA-A2-SH8 | 2.471 | 451 |
| HA-MA1-SH5 | 1.242 | 436 |
| HA-MA1-SH6 | 1.317 | 429 |
| HA-MA2-SH7 | 0.857 | 481 |
| HA-MA2-SH8 | 2.146 | 447 |

Example 31. Determination of Molecular Weight and Distribution of Sulfhydryl-Modified Polymer Compounds by GPC

The mobile phase of GPC was 0.05 M sodium sulfate solution, with a flow rate of 1 mL/min and a column temperature of 30 °C. The curve of the standard polyethylene glycol polymer was used as the standard curve.

5 mg of sulfhydryl-modified polymer compound was dissolved in 1 mL of 0.05 M sodium sulfate solution, filtered

through a 0.22 μM filter, and determined by GPC. The results of molecular weight and distribution are shown in Table 2 (PHEMA-A-SH1 and PHEMA-MA-SH1 were not determined for molecular weight, because they were too viscous after dissolution to pass through the filter).

Table 2. Determination results of the molecular weight and molecular weight distribution of sulfhydryl-modified polymer compounds

| Sample | Mn (Da) | Mw (Da) | PDI |
|---|---|---|---|
| HA-A1-SH1 | 114599 | 338178 | 2.95 |
| HA-A2-SH1 | 90222 | 426199 | 4.72 |
| HA-MA1-SH1 | 74053 | 454233 | 6.13 |
| HA-MA2-SH1 | 52132 | 427591 | 8.20 |
| CHS-A-SH1 | 34178 | 84127 | 2.46 |
| CHS-MA-SH2 | 28114 | 90174 | 3.21 |
| Gelatin-A-SH1 | 14524 | 57898 | 3.99 |
| Gelatin-MA-SH1 | 17204 | 55217 | 3.21 |
| CTS-A-SH1 | 54127 | 264214 | 4.88 |
| CTS-MA-SH1 | 47517 | 214285 | 4.51 |
| PHEMA-A-SH1 | - | - | - |
| PHEMA-MA-SH1 | - | - | - |
| HB-PEG-SH1 | 8841 | 20412 | 2.31 |
| PVA-A-SH1 | 79854 | 95874 | 1.20 |
| PVA-MA-SH1 | 75471 | 98627 | 1.31 |
| HA-A1-SH2 | 102221 | 454335 | 4.44 |
| HA-A1-SH3 | 72720 | 429952 | 5.91 |
| HA-A2-SH2 | 103770 | 373400 | 3.60 |
| HA-A2-SH3 | 83819 | 411866 | 4.91 |
| HA-A2-SH4 | 73382 | 417944 | 5.70 |
| HA-A2-SH5 | 57322 | 416987 | 7.27 |
| HA-A2-SH6 | 76601 | 337406 | 4.40 |
| HA-A2-SH7 | 77628 | 419439 | 5.40 |
| HA-A2-SH8 | 61804 | 375555 | 6.08 |
| HA-MA1-SH5 | 63887 | 391562 | 6.13 |
| HA-MA1-SH6 | 108308 | 397962 | 3.67 |
| HA-MA2-SH7 | 69148 | 373393 | 5.40 |
| HA-MA2-SH8 | 99257 | 337377 | 3.39 |

Example 32. Determination of Water Retention of Sulfhydryl-Modified Polymer Compounds

50 mg of sulfhydryl-modified polymer compound was added to a 20 mL glass bottle weighed in advance, and dissolved with 5 mL of deionized water to obtain a 1% solution. The mass of the solution m0 was obtained by the mass subtraction method. The glass bottle was placed in a shaker at 37 °C, and weighed at regular intervals to obtain the mass of the solution mt. The water retention of the sulfhydryl-modified polymer compounds can be calculated according to the following formula:

$$\text{Water retention percentage (\%)} = mt / m0 \times 100\%.$$

The test results are listed in Table 3.

Table 3. Comparison table of water retention rate index

| Sample | Water retention rate (%) | | | | |
|---|---|---|---|---|---|
| | Time point (day) | | | | |
| | 0 | 1 | 2 | 4 | 6 |
| HA-A1-SH1 | 100 | 92.7 | 81.1 | 50.3 | 25.9 |
| HA-A2-SH1 | 100 | 93.4 | 81.7 | 49.1 | 27.6 |
| HA-MA1-SH1 | 100 | 91.6 | 79.1 | 46.9 | 25.4 |
| HA-MA2-SH1 | 100 | 92.6 | 82.3 | 48.5 | 28.1 |
| HA-A1-SH2 | 100 | 89.4 | 76.1 | 39.5 | 16.9 |
| HA-A1-SH3 | 100 | 89.2 | 77.6 | 41.6 | 18.5 |
| HA-A2-SH2 | 100 | 88.6 | 74.4 | 36.7 | 15.6 |
| HA-A2-SH3 | 100 | 86.9 | 77.8 | 33.2 | 13.9 |
| HA-A2-SH4 | 100 | 91.5 | 81.5 | 38.3 | 21.4 |
| HA-A2-SH5 | 100 | 89.4 | 80.5 | 38.8 | 21.1 |
| HA-A2-SH6 | 100 | 87.8 | 76.8 | 47.5 | 24.5 |
| HA-A2-SH7 | 100 | 88.5 | 77.4 | 46.5 | 26.2 |
| HA-A2-SH8 | 100 | 86.8 | 74.9 | 44.4 | 24.8 |
| HA-MA1-SH5 | 100 | 87.7 | 78.3 | 46.5 | 26.6 |
| HA-MA1-SH6 | 100 | 84.7 | 72.1 | 37.4 | 16.0 |
| HA-MA2-SH7 | 100 | 84.3 | 73.5 | 39.4 | 18.4 |
| HA-MA2-SH8 | 100 | 83.9 | 70.5 | 34.8 | 14.8 |

Example 33. Determination of Oxidation Resistance of Sulfhydryl-Modified Polymer Compounds by DPPH Free Radical Capture Method

An absolute ethanol solution of 25 μmol/L 1,1-diphenyl-2-trinitrophenylhydrazine (TNBS) was precisely prepared as a working solution. A certain amount of working solution was diluted with ethanol to obtain a series of standard solutions (0 μmol/L, 5 μmol/L, 10 μmol/L, 15 μmol/L, 20 μmol/L and 25 μmol/L).

The PBS solutions of sulfhydryl substituted polymer compounds were precisely prepared to obtain a series of test sample solutions at 0.1 mg/mL.

90 μL of TNBS working solution and 10 μL of test sample solution were mixed well, and stored away from light at room temperature for 30 min. After that, the absorbance of the TNBS standard solution and the test sample mixed solution was determined at 517 nm for plotting a standard curve, and the concentration of the residual DPPH in the test sample was calculated according to the obtained standard curve. The free radical capture capacity (%) of the test sample was calculated according to the following formula:

$$\text{Free radical capture capacity (\%)} = (1 - (\text{Csample} / \text{CDPPH})) \times 100\%.$$

The DPPH standard curve is shown in FIG. 80. The free radical capture capacity is shown in FIG. 81.

The examples of the present invention have been described above. However, the present invention is not limited to the above examples.

## Claims

1. A sulfhydryl-modified polymer compound, wherein the sulfhydryl-modified polymer compound comprises at least one of the following structures:

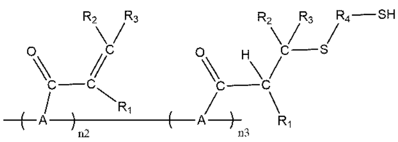

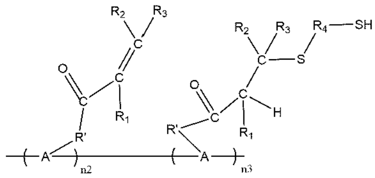

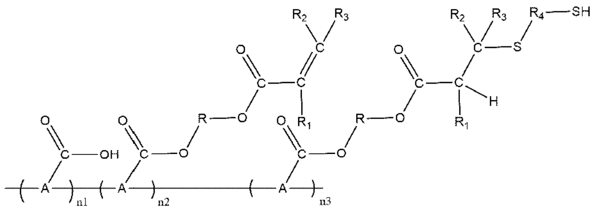

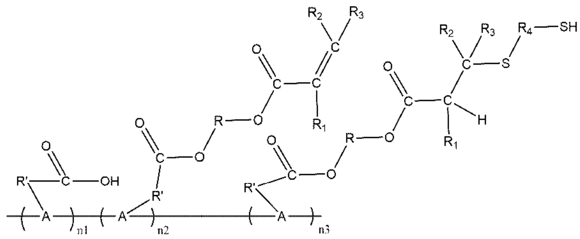

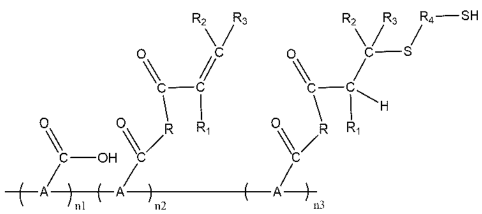

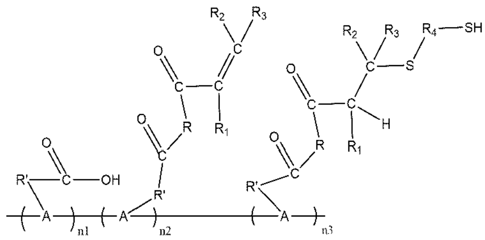

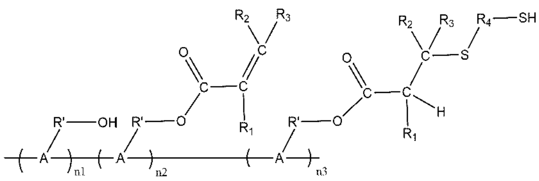

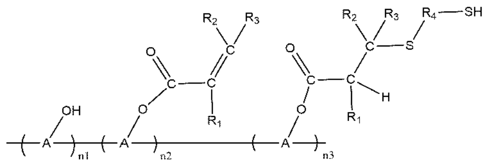

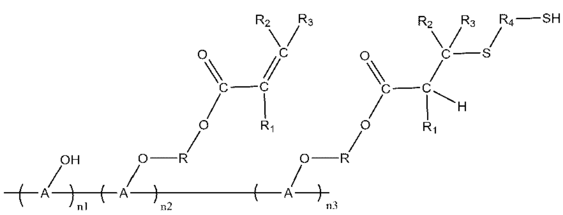

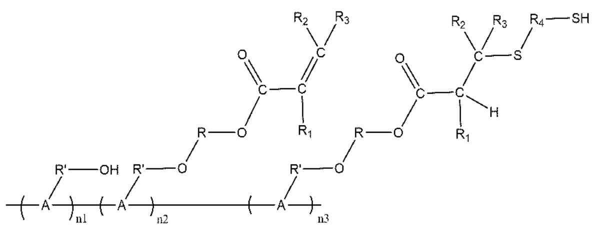

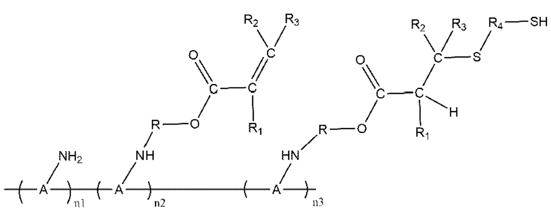

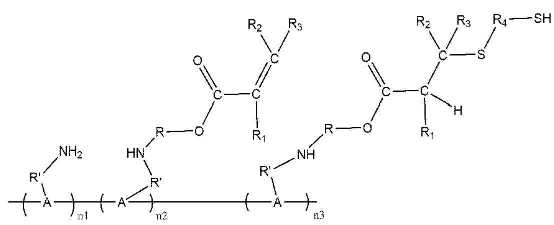

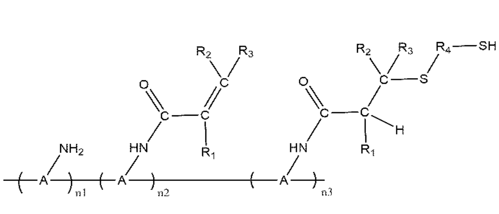

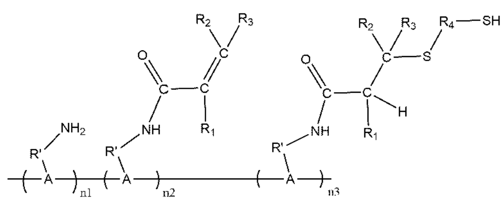

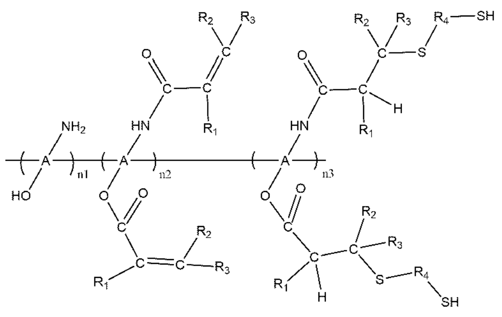

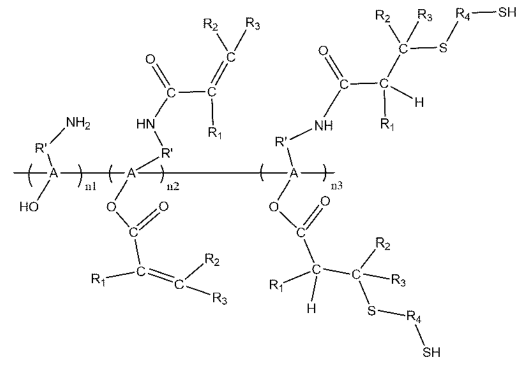

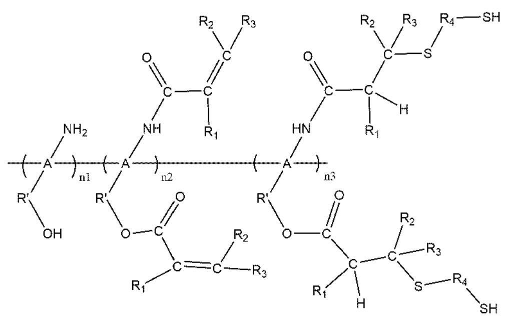

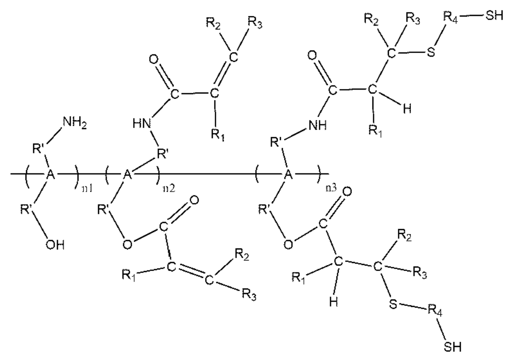

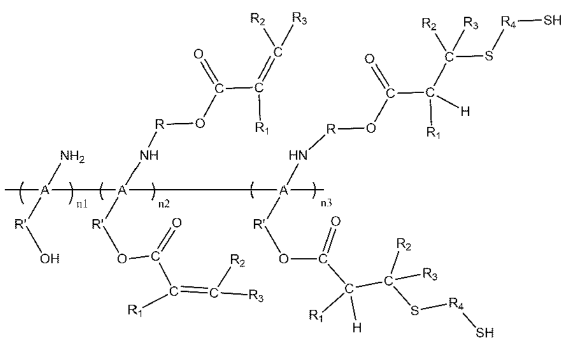

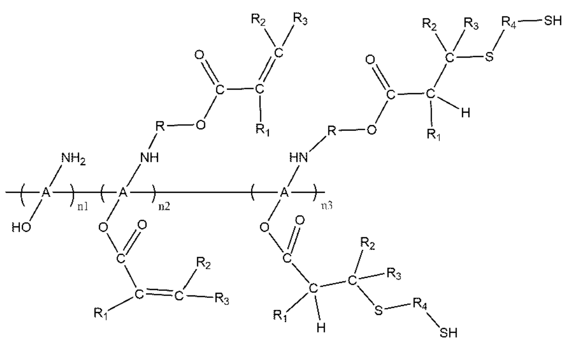

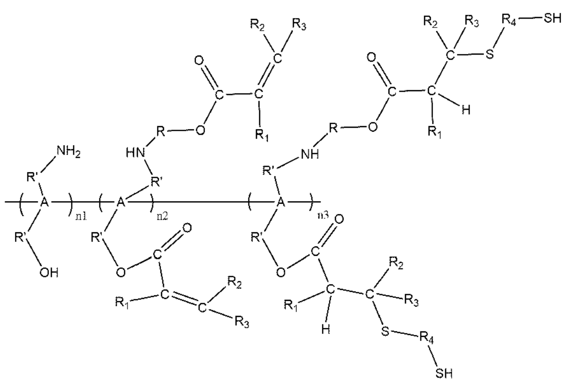

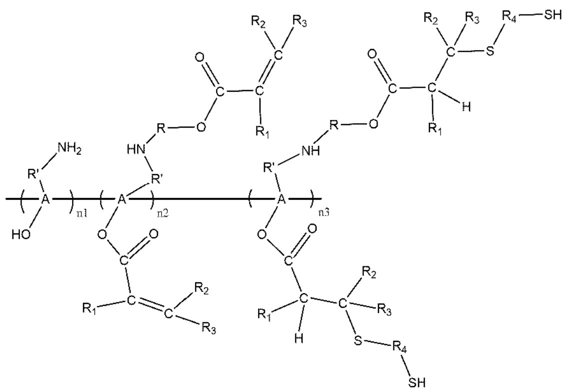

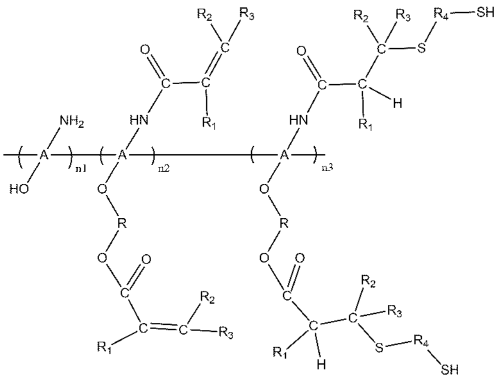

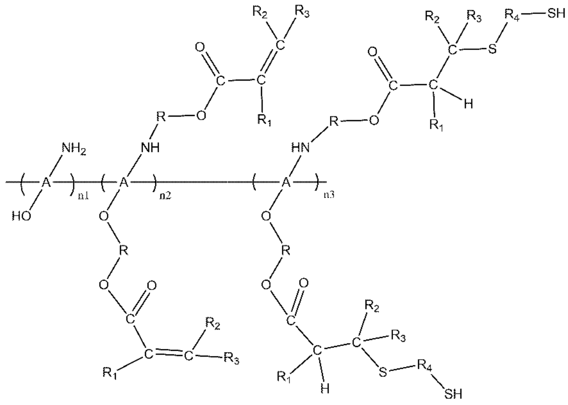

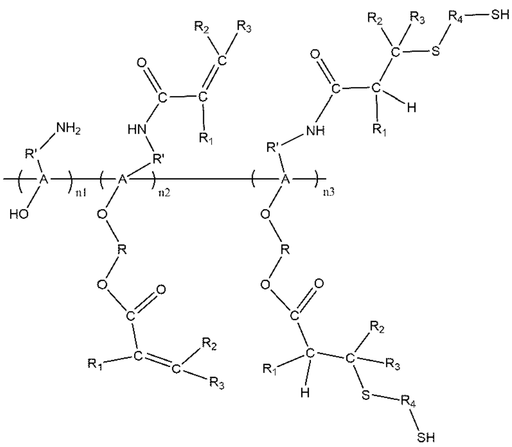

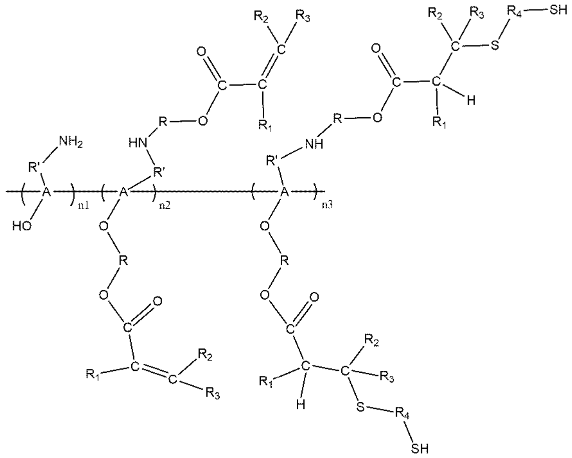

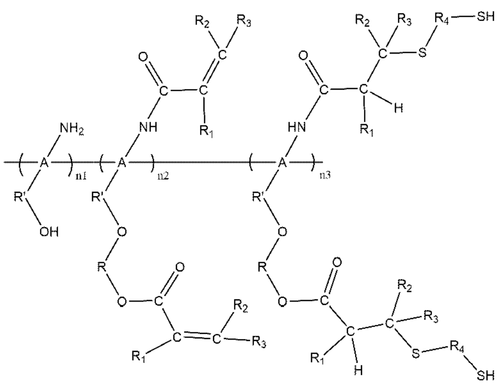

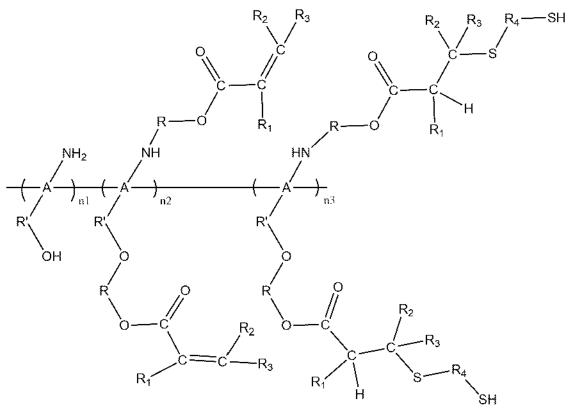

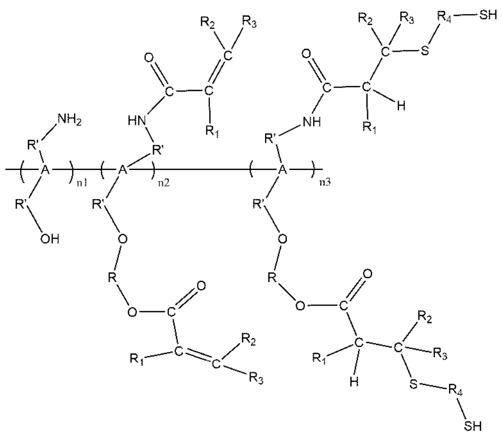

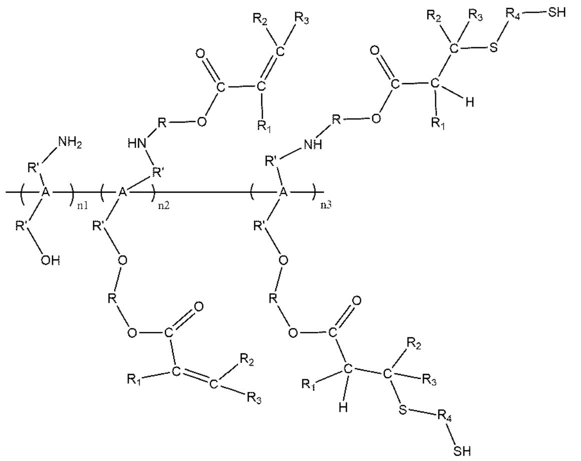

in the above structures, A is a fragment of the un-modified polymer compound comprising at least one selected from the -COOH, the $-NH_2$, the -OH, the acrylate group of formula a, the acrylamide group of formula b and the acryloyl group of formula c in the structure;

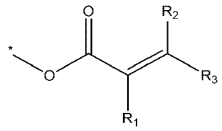 formula a 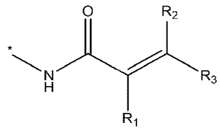 formula b 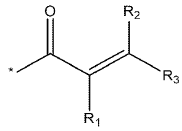 formula c

R is selected from

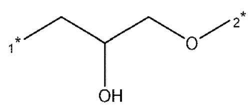 , 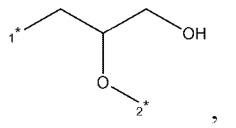 ,

hydrocarbylene, arylene, an amide residue, a hydrazide residue; * represents a linking site; $_1$* represents a linking site to a left-hand group of R; $_2$* represents a linking site to a right-hand group of R;
$R_1$ is selected from hydrogen, halogen, an aliphatic group, an aromatic group;
$R_2$ and $R_3$ are the same or different and independently from each other are selected from hydrogen, halogen, an aliphatic group, an aromatic group;
R' group is a heteroatom-containing group, hydrocarbylene, arylene or the following linker:

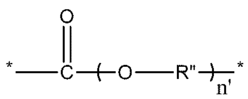

in the above formula, R" is hydrocarbylene or arylene, n' is an integer from 1 to 1000, and * represents a linking site;
(n2+n3)/(n1+n2+n3) represents a degree of acryloylation; n3/(n1+n2+n3) represents a degree of sulfhydrylation corresponding to the above sulfhydryl content of the sulfhydryl-modified polymer compound as determined by the Ellman method; the n1 can be 0, and if it is 0, the degree of acryloylation is not limited, and n3/(n2+n3) alone represents the degree of sulfhydrylation corresponding to the above sulfhydryl content of the sulfhydryl-modified polymer compound as determined by the Ellman method; the n2 can be 0, and if it is 0, n3/(n1+n3) represents both the degree of acryloylation and the degree of sulfhydrylation corresponding to the above sulfhydryl content of the sulfhydryl-modified polymer compound as determined by the Ellman method;
a sulfhydryl content of the sulfhydryl-modified polymer compound as determined by the Ellman method is 0.01-30 mmol/g;
wherein the $-S-R_4-SH$ fragment is introduced from the following polysulfhydryl compounds including:

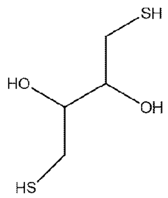
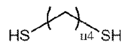
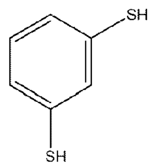
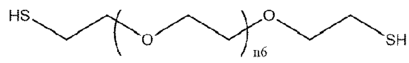
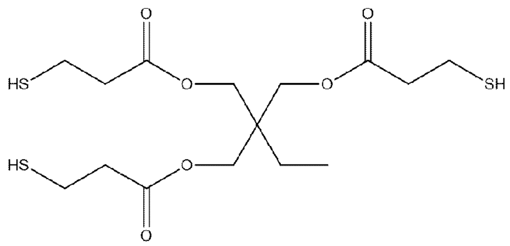
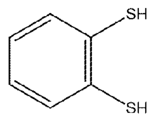
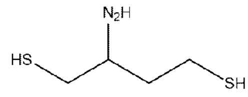
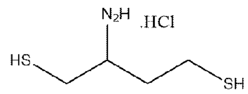
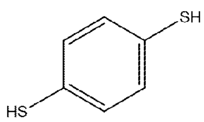
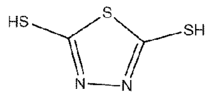
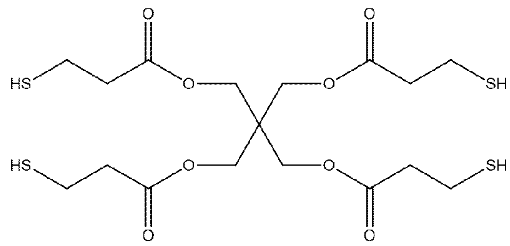
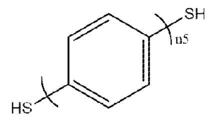

4-arm-PEG-SH

6-arm-PEG-SH

8-arm-PEG-SH

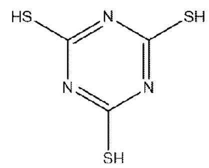

wherein n4 is an integer from 2 to 30; n5 is an integer from 1 to 30; n6 is an integer from 1 to 30; 4-arm-PEG-SH represents a PEG polymer containing four sulfhydryl groups; 6-arm-PEG-SH represents a PEG polymer containing six sulfhydryl groups; 8-arm-PEG-SH represents a PEG polymer containing eight sulfhydryl groups; the PEG is an abbreviation for polyethylene glycol.

2. The sulfhydryl-modified polymer compound according to claim 1, wherein n4 is 2, 3, 4, 5 or 6; n5 is 1, 2, 3, 4 or 5; n6 is 1, 2, 3, 4 or 5.

3. The sulfhydryl-modified polymer compound according to claim 1, wherein the sulfhydryl content of the sulfhydryl-modified polymer compound as determined by an Ellman method is 0.1-10.0 mmol/g.

4. The sulfhydryl-modified polymer compound according to claim 1, wherein the sulfhydryl content of the sulfhydryl-modified polymer compound as determined by an Ellman method is 0.3-5.0 mmol/g, preferably 0.5-3.0 mmol/g.

5. The sulfhydryl-modified polymer compound according to claim 1, wherein the A is a structure shown as follows:

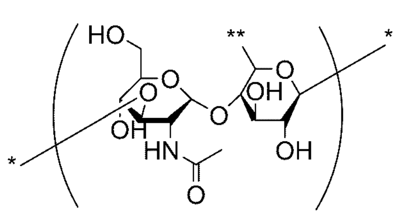
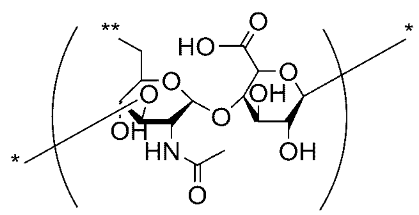

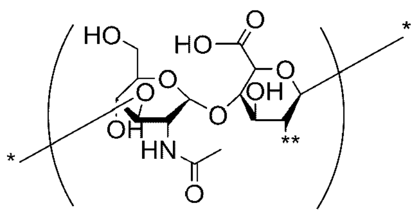

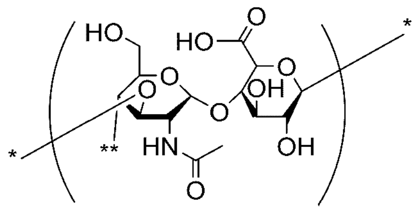
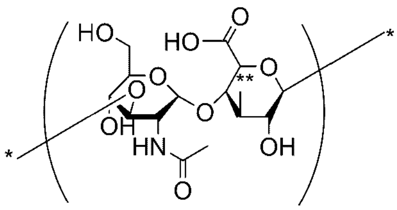
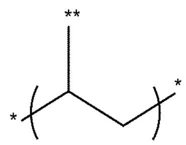

in each of the above structures, * represents a linking site between repeating units of the main chain; ** represents a linking site between -COOH, $-NH_2$, -OH, an acrylate group of formula a, an acrylamide group of formula b or an acryloyl group of formula c and the fragment, or a linking site between an R' group and the fragment;
or the A is a fragment or a repeating unit remaining in the following polymers Gelatin-A, Gelatin-MA, CTS-A, CTS-MA, PHEMA-A, PHEMA-MA, HB-PEG, PVA-A, PVA-MA, CHS-A or CHS-MA with the side chain containing the acrylamide group removed:

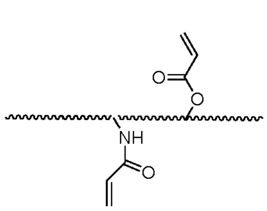
Gelatin-A

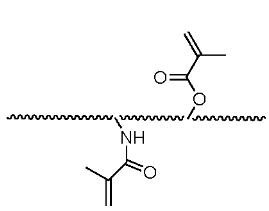
Gelatin-MA

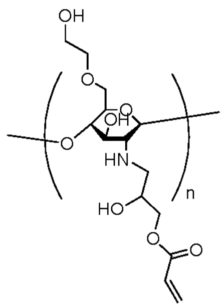
CTS-A

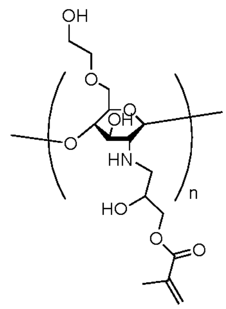
CTS-MA

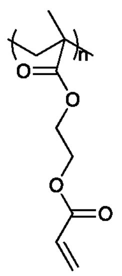
PHEMA-A

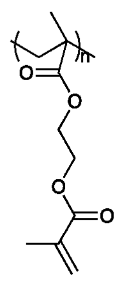
PHEMA-MA

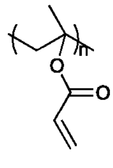
PVA-A

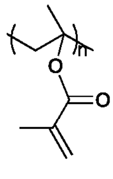
PVA-MA

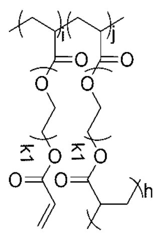
HB-PEG

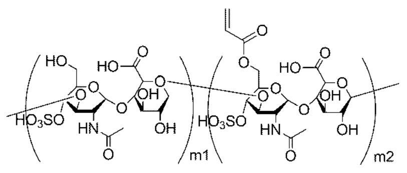
CHS-A

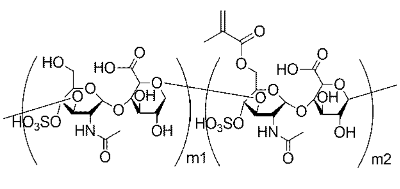
CHS-MA

Gelatin-A, Gelatin-MA, CTS-A, CTS-MA, PHEMA-A, PHEMA-MA, HB-PEG, PVA-A, PVA-MA, CHS-A and CHS-MA are abbreviations for the names of polymers having the above structures.

**6.** A preparation method for the sulfhydryl-modified polymer compound according to any one of claims 1 to 5, comprising the following steps:

1) acryloylating the polymer compound comprising at least one selected from the -COOH, the $-NH_2$ and the -OH in the structure, namely linking at least one selected from the -COOH, the $-NH_2$ and the -OH comprised in the structure of the polymer compound, directly or indirectly, to the following group:

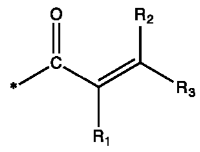

wherein $R_1$, $R_2$ and $R_3$ are defined as above, and * represents a linking site;
alternatively, directly using the polymer compound comprising at least one selected from the acrylate group of formula a, the acrylamide group of formula b, and the acryloyl group of formula c in the structure as a reaction starting material;

2) reacting at least one of polymer compounds obtained in step 1) with a polysulfhydryl compound HS-$R_4$-SH to obtain the sulfhydryl-modified polymer compound, wherein $R_4$ is defined as above.

**7.** The preparation method according to claim 6, comprising the following steps:

1) acryloylating the polymer compound comprising at least one selected from the -COOH, the -$NH_2$ and the -OH in the structure, namely linking at least one selected from the -COOH, the -$NH_2$ and the -OH comprised in the structure of the polymer compound, via an -R- group or directly, to the following group:

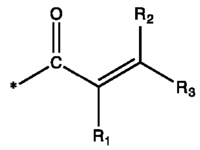

wherein R, $R_1$, $R_2$ and $R_3$ are defined as above, and * represents a linking site;
alternatively, directly using the polymer compound comprising at least one selected from the acrylate group of formula a, the acrylamide group of formula b, and the acryloyl group of formula c in the structure as a reaction starting material;

2) reacting at least one of polymer compounds obtained in step 1) with a polysulfhydryl compound HS-$R_4$-SH to obtain the sulfhydryl-modified polymer compound, wherein $R_4$ is defined as above.

**8.** The preparation method according to claim 6 or 7, wherein in step 1), the acryloylating step can be performed by reacting the to-be-modified polymer compound with an acrylate compound, or by reacting the to-be-modified polymer compound with an acryloyl chloride compound or an acrylic anhydride compound;

preferably, in step 1), the acryloylating step is performed by reacting acryloyl chloride and derivatives thereof or acrylic anhydride and derivatives thereof with the polymer compound comprising at least one from -OH and -$NH_2$; or performed by reacting glycidyl acrylate and derivatives thereof with the polymer compound comprising at least one selected from -COOH, -OH and -$NH_2$;
preferably, in step 1), the acryloylating step can be an unconventional reaction step, namely using a method other than the above method to synthesize a polymer compound comprising a structure of formula c;
preferably, in step 2), the reaction with the polysulfhydryl compound HS-$R_4$-SH is performed in a solvent; preferably, the solvent is water or an organic solvent, and further can be deionized water or dimethylformamide;
preferably, in step 2), the reaction with the polysulfhydryl compound HS-$R_4$-SH is performed under low to high temperature conditions; for example, the reaction temperature is 0-80 °C, and further can be 10-70 °C, and for example, the reaction can be performed at room temperature;
preferably, in step 2), the reaction time for the reaction with the polysulfhydryl compound HS-$R_4$-SH is 0.1-100 h;
Preferably, in step 2), the pH range for the reaction with the polysulfhydryl compound HS-$R_4$-SH is -1 to 15; for example, the reaction pH can be 6-8; and for another example, 7.

## Patentansprüche

**1.** Sulfhydryl-modifizierte Polymerverbindung, wobei die Sulfhydryl-modifizierte Polymerverbindung mindestens eine der folgenden Strukturen umfasst:

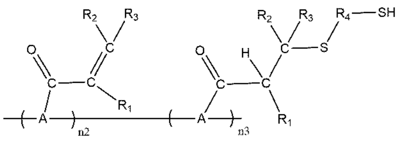
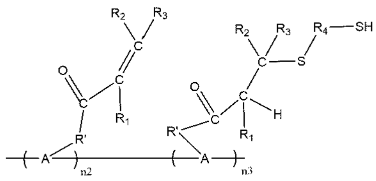
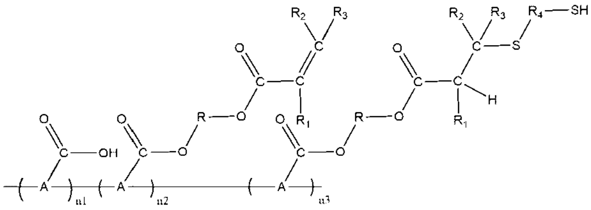
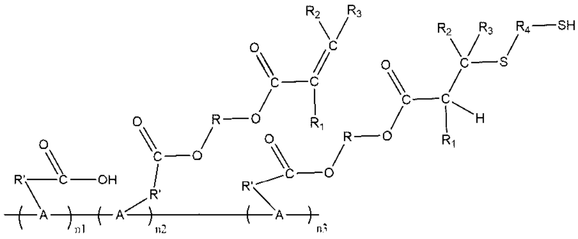
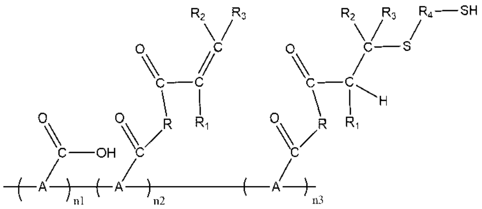
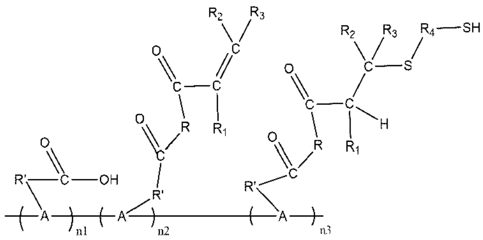
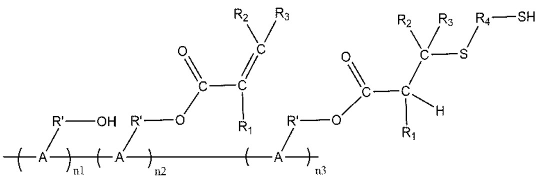
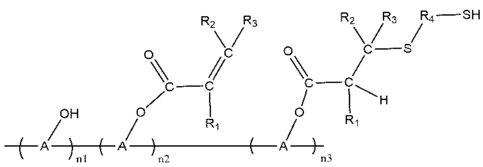
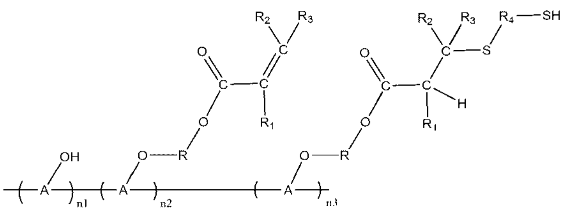
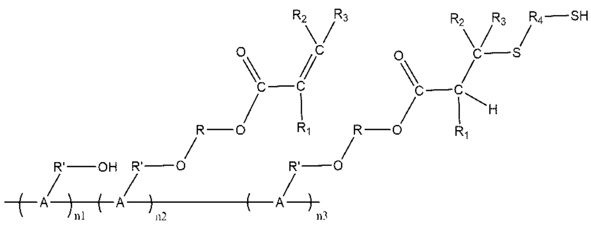
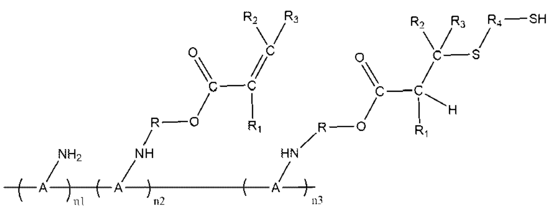
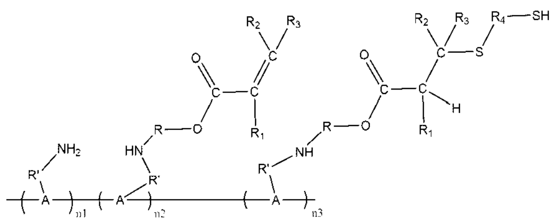
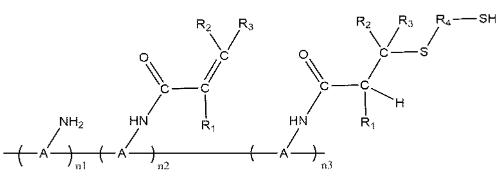
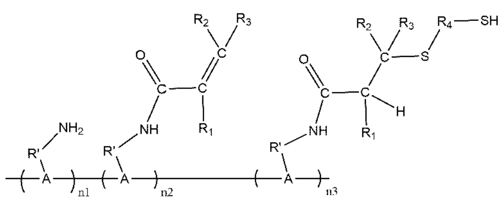

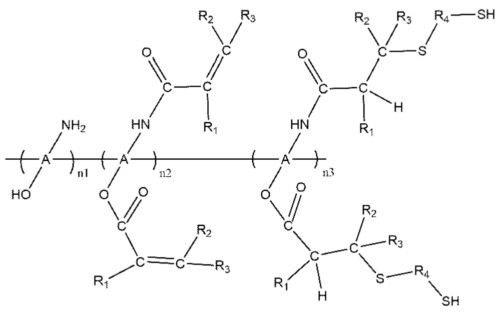
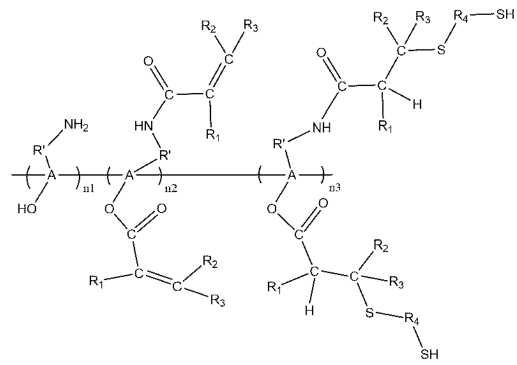

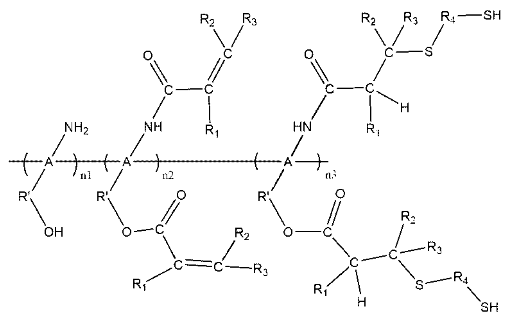
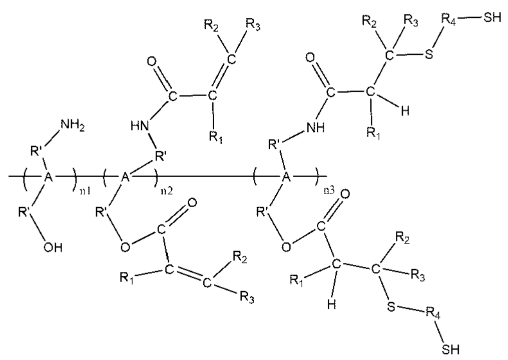

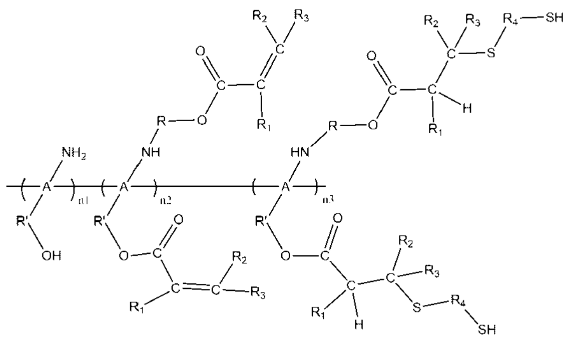
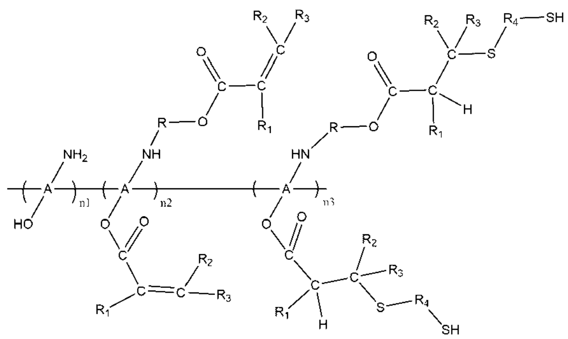

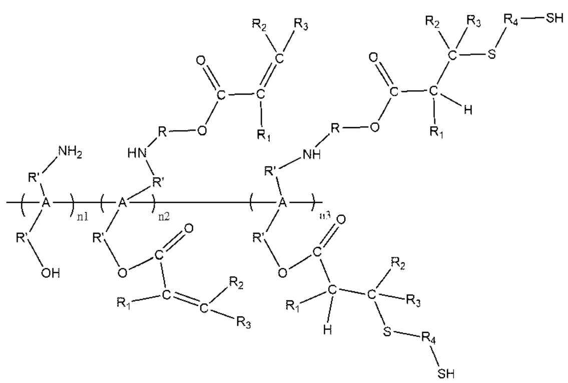
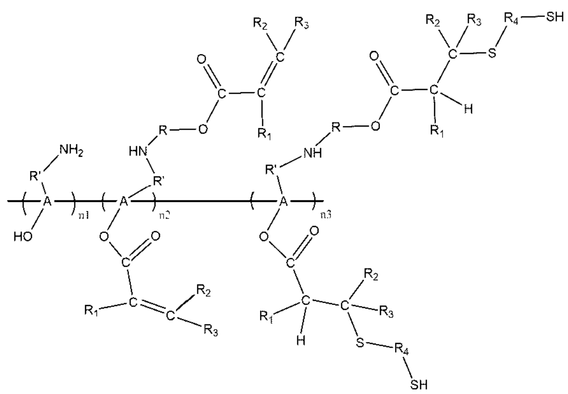

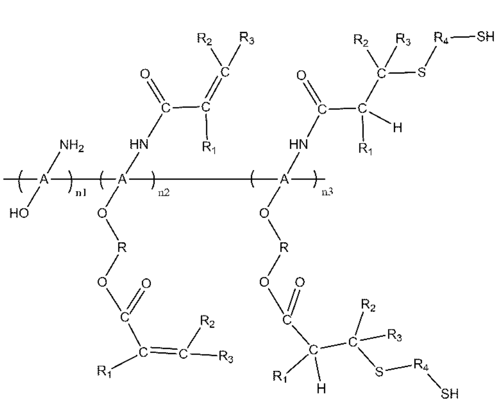

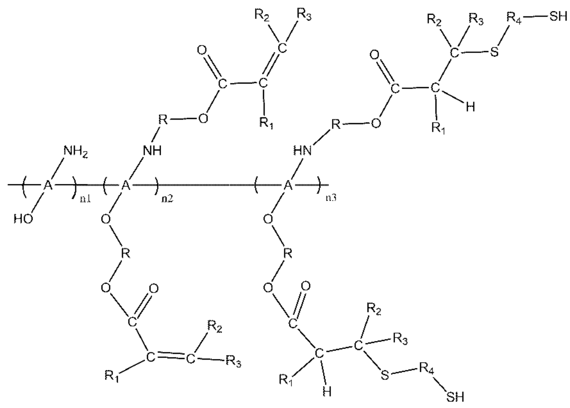

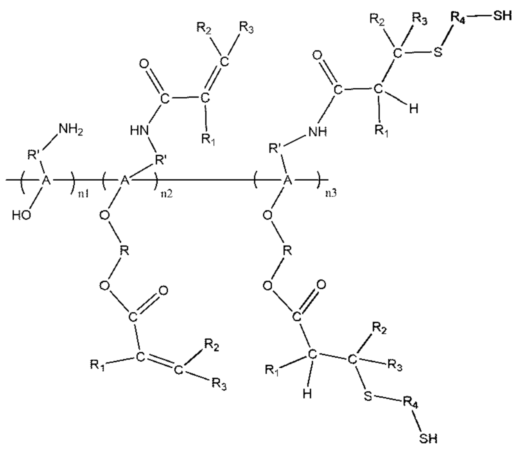

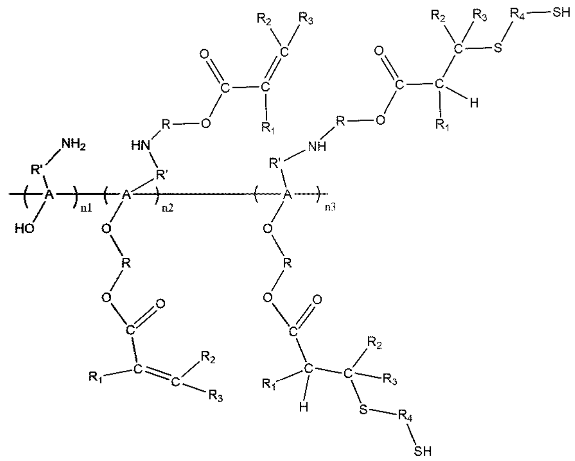

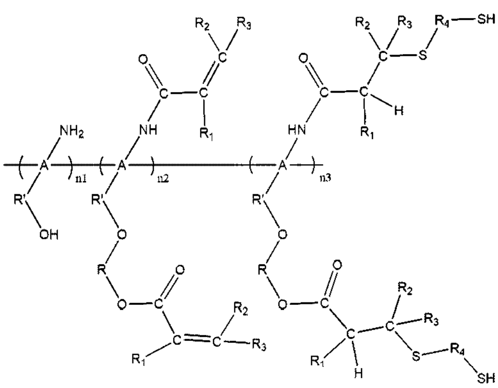

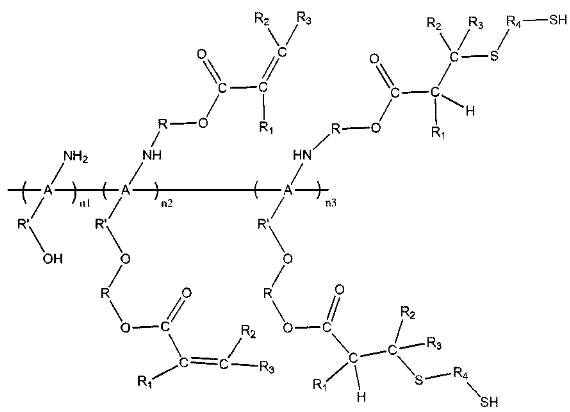

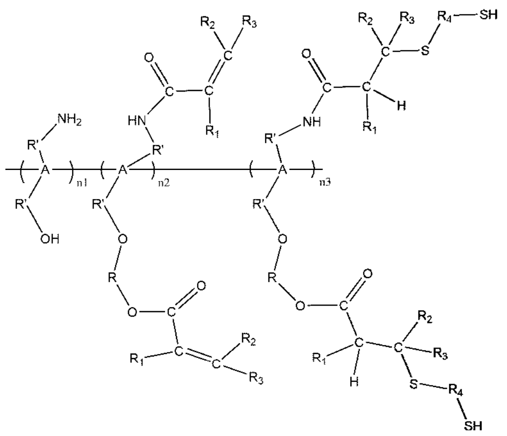

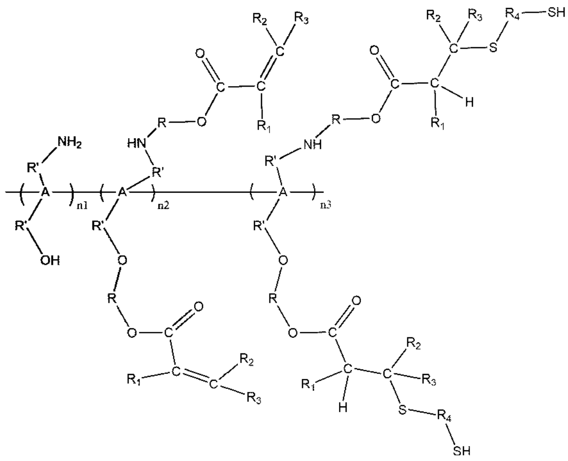

wobei in den vorstehenden Strukturen A ein Fragment der unmodifizierten Polymerverbindung ist, das mindestens eines ausgewählt aus dem -COOH, dem $-NH_2$, dem -OH, der Acrylatgruppe der Formel a, der Acrylamidgruppe der Formel b und der Acryloylgruppe der Formel c in der Struktur umfasst;

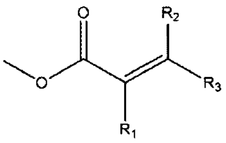 Formel a 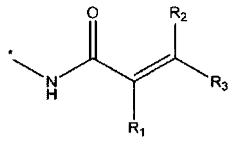 Formel b 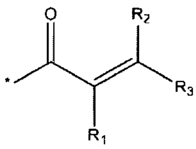 Formel c

R ausgewählt ist aus

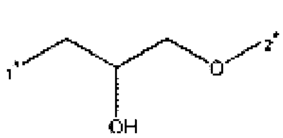 , 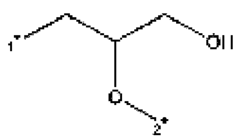

Hydrocarbylen, Arylen, einem Amidrest, einem Hydrazidrest; * eine Verknüpfungsstelle darstellt; $_1$* eine Verknüpfungsstelle zu einer linksseitigen Gruppe von R darstellt; $_2$* eine Verknüpfungsstelle zu einer rechtsseitigen Gruppe von R darstellt;

$R_1$ ausgewählt ist aus Wasserstoff, Halogen, einer aliphatischen Gruppe, einer aromatischen Gruppe;

$R_2$ und $R_3$ gleich oder unterschiedlich sind und unabhängig voneinander ausgewählt sind aus Wasserstoff, Halogen, einer aliphatischen Gruppe, einer aromatischen Gruppe;

R'-Gruppe eine Heteroatom-haltige Gruppe, Hydrocarbylen, Arylen oder der folgende Linker ist:

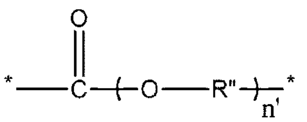

in der vorstehenden Formel R" Hydrocarbylen oder Arylen ist, n' eine ganze Zahl von 1 bis 1000 ist und * eine Verknüpfungsstelle darstellt;

(n2+n3)/(n1+n2+n3) einen Grad der Acryloylierung darstellt; n3/(n1+n2+n3) einen Grad der Sulfhydrylierung darstellt, der dem vorstehenden Sulfhydrylgehalt der Sulfhydryl-modifizierten Polymerverbindung entspricht, wie nach dem Ellman-Verfahren bestimmt; das n1 0 sein kann und, falls es 0 ist, der Grad der Acryloylierung nicht begrenzt ist, und n3/(n2+n3) allein den Grad der Sulfhydrylierung darstellt, der dem vorstehenden Sulfhydrylgehalt der Sulfhydryl-modifizierten Polymerverbindung entspricht, wie nach dem Ellman-Verfahren bestimmt; das n2 0 sein kann und, falls es 0 ist, n3/(n1+n3) sowohl den Grad der Acryloylierung als auch den Grad der Sulfhydrylierung darstellt, der dem vorstehenden Sulfhydrylgehalt der Sulfhydryl-modifizierten Polymerverbindung entspricht, wie nach dem Ellman-Verfahren bestimmt;

ein Sulfhydrylgehalt der Sulfhydryl-modifizierten Polymerverbindung, wie nach dem Ellman-Verfahren bestimmt,

0,01-30 mmol/g beträgt;
wobei das -S-$R_4$-SH-Fragment aus den folgenden Polysulfhydrylverbindungen eingeführt wird, einschließlich:

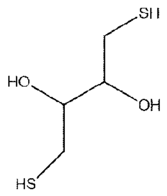
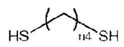
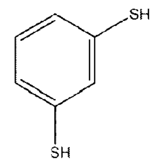
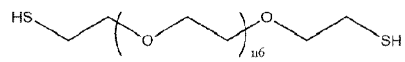
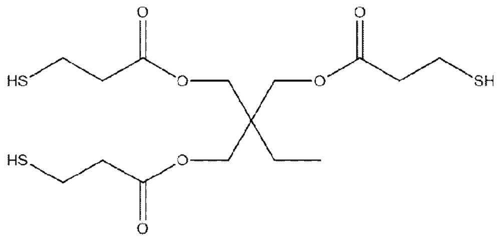
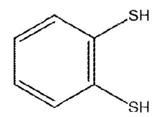
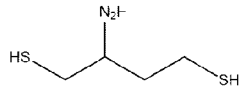
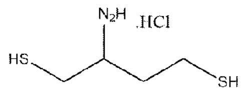
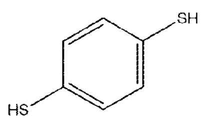
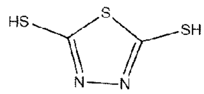
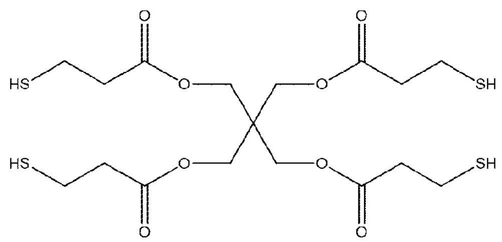
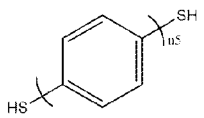

4-arm-PEG-SH

6-arm-PEG-SH

8-arm-PEG-SH

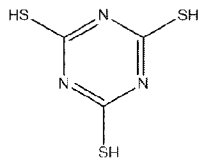

wobei n4 eine ganze Zahl von 2 bis 30 ist; n5 eine ganze Zahl von 1 bis 30 ist; n6 eine ganze Zahl von 1 bis 30 ist; 4-Arm-PEG-SH ein PEG-Polymer mit vier Sulfhydrylgruppen darstellt; 6-Arm-PEG-SH ein PEG-Polymer mit sechs Sulfhydrylgruppen darstellt; 8-Arm-PEG-SH ein PEG-Polymer mit acht Sulfhydrylgruppen darstellt; das PEG eine Abkürzung für Polyethylenglykol ist.

**2.** Sulfhydryl-modifizierte Polymerverbindung nach Anspruch 1, wobei n4 2, 3, 4, 5 oder 6 ist; n5 1, 2, 3, 4 oder 5 ist; n6 1, 2, 3, 4 oder 5 ist.

**3.** Sulfhydryl-modifizierte Polymerverbindung nach Anspruch 1, wobei der Sulfhydrylgehalt der Sulfhydryl-modifizierten Polymerverbindung, wie nach einem Ellman-Verfahren bestimmt, 0,1-10,0 mmol/g beträgt.

**4.** Sulfhydryl-modifizierte Polymerverbindung nach Anspruch 1, wobei der Sulfhydrylgehalt der Sulfhydryl-modifizierten Polymerverbindung, wie nach einem Ellman-Verfahren bestimmt, 0,3-5,0 mmol/g, bevorzugt 0,5-3,0 mmol/g, beträgt.

**5.** Sulfhydryl-modifizierte Polymerverbindung nach Anspruch 1, wobei das A eine Struktur ist, die wie folgt gezeigt ist:

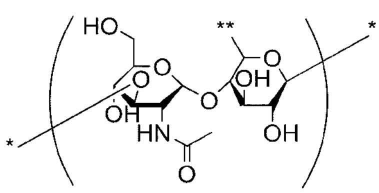
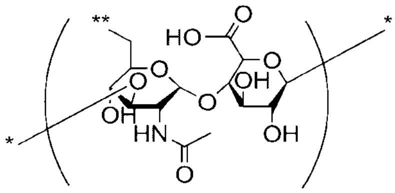
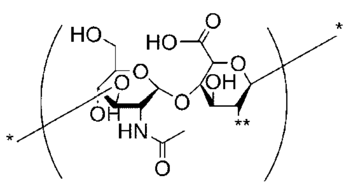

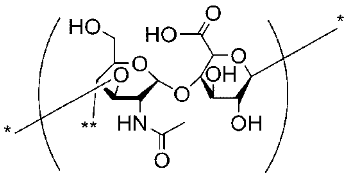 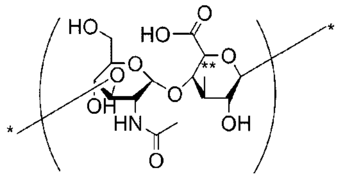 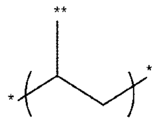

wobei in jeder der vorstehenden Strukturen * eine Verknüpfungsstelle zwischen sich wiederholenden Einheiten der Hauptkette darstellt; ** eine Verknüpfungsstelle zwischen -COOH, $-NH_2$, -OH, einer Acrylatgruppe der Formel a, einer Acrylamidgruppe der Formel b oder einer Acryloylgruppe der Formel c und dem Fragment oder eine Verknüpfungsstelle zwischen einer R'-Gruppe und dem Fragment darstellt;
oder das A ein Fragment oder eine sich wiederholende Einheit ist, die in den folgenden Polymeren Gelatin-A, Gelatin-MA, CTS-A, CTS-MA, PHEMA-A, PHEMA-MA, HB-PEG, PVA-A, PVA-MA, CHS-A oder CHS-MA mit entfernter Seitenkette, die die Acrylamidgruppe enthält, verbleibt:

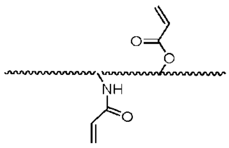
Gelatin-A

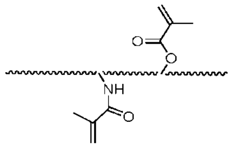
Gelatin-MA

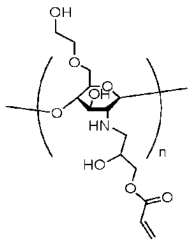
CTS-A

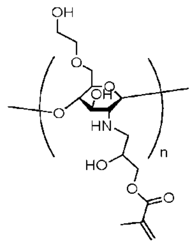
CTS-MA

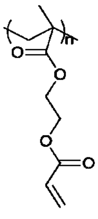
**PHEMA-A**

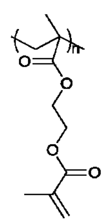
**PHEMA-MA**

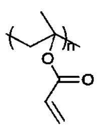
**PVA-A**

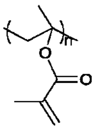
**PVA-MA**

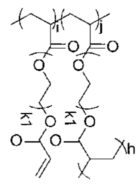
HB-PEG

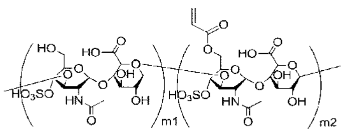
CHS-A

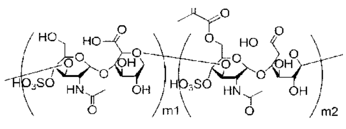
CHS-MA

wobei Gelatin-A, Gelatin-MA, CTS-A, CTS-MA, PHEMA-A, PHEMA-MA, HB-PEG, PVA-A, PVA-MA, CHS-A und CHS-MA Abkürzungen für die Namen von Polymeren mit den vorstehenden Strukturen sind.

**6.** Herstellungsverfahren für die Sulfhydryl-modifizierte Polymerverbindung nach einem der Ansprüche 1 bis 5, umfassend die folgenden Schritte:

1) Acryloylieren der Polymerverbindung, die mindestens eines, das ausgewählt ist aus dem -COOH, dem $-NH_2$ und dem -OH, in der Struktur umfasst, insbesondere Verknüpfen mindestens eines, das ausgewählt ist aus dem -COOH, dem $-NH_2$ und dem -OH, das in der Struktur der Polymerverbindung enthalten ist, direkt oder indirekt mit der folgenden Gruppe:

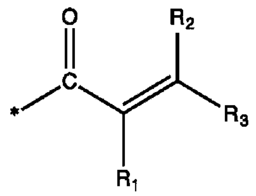

wobei $R_1$, $R_2$ und $R_3$ wie oben definiert sind und * eine Verknüpfungsstelle darstellt;
alternativ direktes Verwenden der Polymerverbindung, die mindestens eines, das ausgewählt ist aus der Acrylatgruppe der Formel a, der Acrylamidgruppe der Formel b und der Acryloylgruppe der Formel c, in der Struktur umfasst, als Reaktionsausgangsmaterial;

2) Umsetzen mindestens einer der in Schritt 1) erhaltenen Polymerverbindungen mit einer Polysulfhydrylverbindung HS-$R_4$-SH, um die Sulfhydryl-modifizierte Polymerverbindung zu erhalten, wobei $R_4$ wie oben definiert ist.

**7.** Herstellungsverfahren nach Anspruch 6, umfassend die folgenden Schritte:

1) Acryloylieren der Polymerverbindung, die mindestens eines, das ausgewählt ist aus dem -COOH, dem -$NH_2$ und dem -OH, in der Struktur umfasst, insbesondere Verknüpfen mindestens eines, das ausgewählt ist aus dem -COOH, dem -$NH_2$ und dem -OH, das in der Struktur der Polymerverbindung enthalten ist, über eine -R-Gruppe oder direkt mit der folgenden Gruppe:

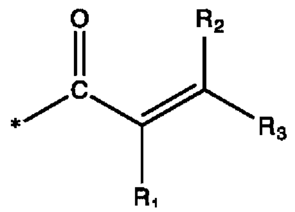

wobei R, $R_1$, $R_2$ und $R_3$ wie oben definiert sind und * eine Verknüpfungsstelle darstellt;
alternativ direktes Verwenden der Polymerverbindung, die mindestens eines, das ausgewählt ist aus der Acrylatgruppe der Formel a, der Acrylamidgruppe der Formel b und der Acryloylgruppe der Formel c, in der Struktur umfasst, als Reaktionsausgangsmaterial;

2) Umsetzen mindestens einer der in Schritt 1) erhaltenen Polymerverbindungen mit einer Polysulfhydrylverbindung HS-$R_4$-SH, um die Sulfhydryl-modifizierte Polymerverbindung zu erhalten, wobei $R_4$ wie oben definiert ist.

**8.** Herstellungsverfahren nach Anspruch 6 oder 7, wobei in Schritt 1) der Acryloylierungsschritt durch Umsetzen der zu modifizierenden Polymerverbindung mit einer Acrylatverbindung oder durch Umsetzen der zu modifizierenden Polymerverbindung mit einer Acryloylchloridverbindung oder einer Acrylanhydridverbindung durchgeführt werden kann;

wobei bevorzugt in Schritt 1) der Acryloylierungsschritt durch Umsetzen von Acryloylchlorid und Derivaten davon oder Acrylanhydrid und Derivaten davon mit der Polymerverbindung, die mindestens eines aus -OH und -$NH_2$ umfasst, durchgeführt wird; oder durch Umsetzen von Glycidylacrylat und Derivaten davon mit der Polymerverbindung, die mindestens eines, das ausgewählt ist aus -COOH, -OH und -$NH_2$, umfasst, durchgeführt wird;
wobei bevorzugt in Schritt 1) der Acryloylierungsschritt ein unkonventioneller Reaktionsschritt sein kann, insbesondere Verwenden eines anderen Verfahrens als des vorstehenden Verfahrens zum Synthetisieren einer Polymerverbindung, die eine Struktur der Formel c umfasst;
wobei bevorzugt in Schritt 2) die Reaktion mit der Polysulfhydrylverbindung HS-$R_4$-SH in einem Lösungsmittel durchgeführt wird; bevorzugt das Lösungsmittel Wasser oder ein organisches Lösungsmittel ist und ferner deionisiertes Wasser oder Dimethylformamid sein kann;
wobei bevorzugt in Schritt 2) die Reaktion mit der Polysulfhydrylverbindung HS-$R_4$-SH unter Bedingungen mit niedriger bis hoher Temperatur durchgeführt wird; zum Beispiel die Reaktionstemperatur 0-80 °C beträgt und

ferner 10-70 °C betragen kann und zum Beispiel die Reaktion bei Raumtemperatur durchgeführt werden kann; wobei bevorzugt in Schritt 2) die Reaktionszeit für die Reaktion mit der Polysulfhydrylverbindung HS-$R_4$-SH 0,1-100 h beträgt;

wobei bevorzugt in Schritt 2) der pH-Bereich für die Reaktion mit der Polysulfhydrylverbindung HS-$R_4$-SH -1 bis 15 beträgt; in einem Beispiel der Reaktions-pH-Wert 6-8 betragen kann; und in einem weiteren Beispiel 7 betragen kann.

## Revendications

**1.** Composé polymère modifié par un sulfhydryle, ledit composé polymère modifié par un sulfhydryle comprenant au moins l'une des structures suivantes :

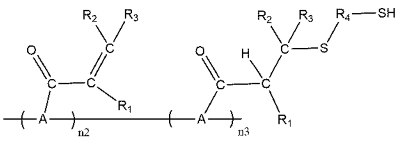
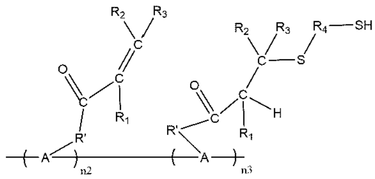
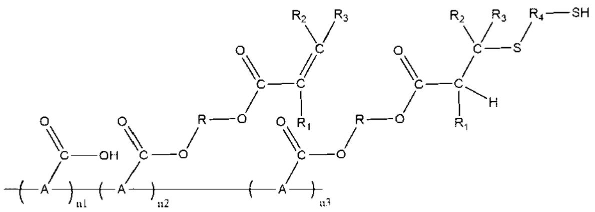
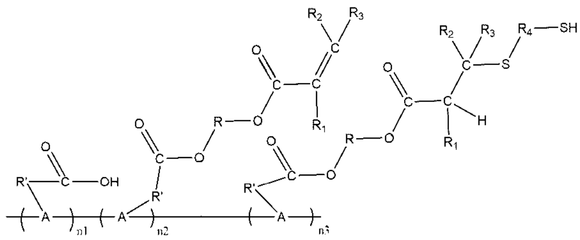
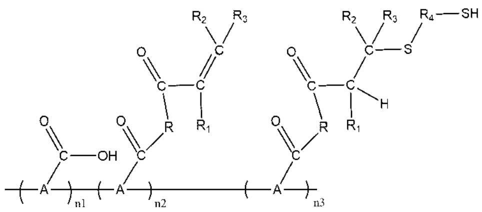
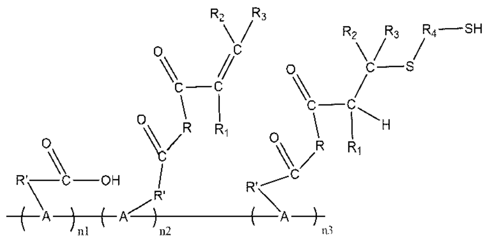
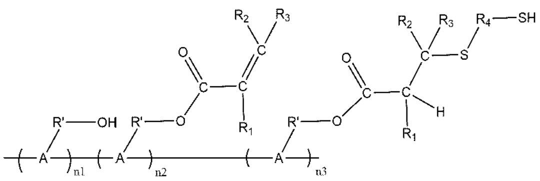
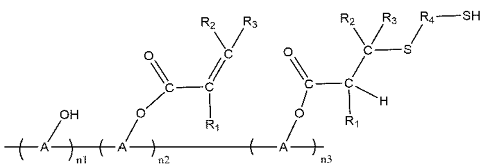
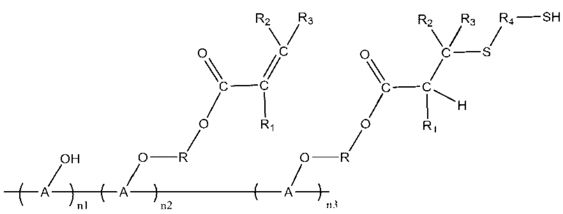
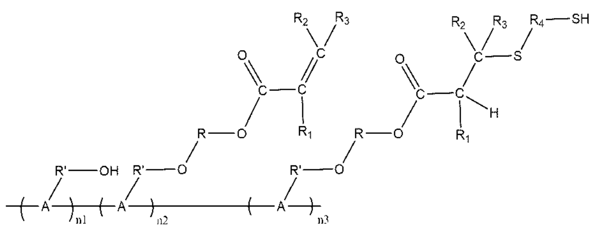

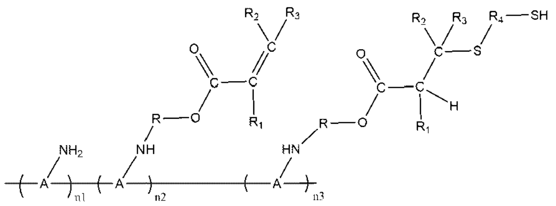

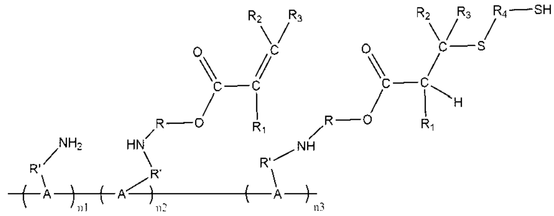

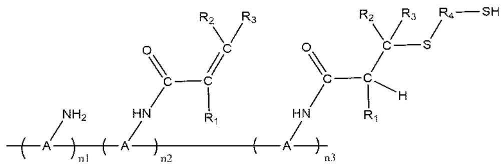

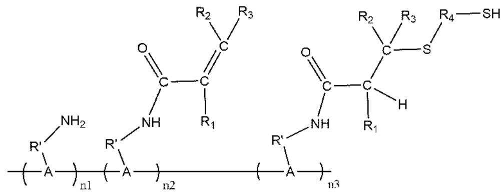

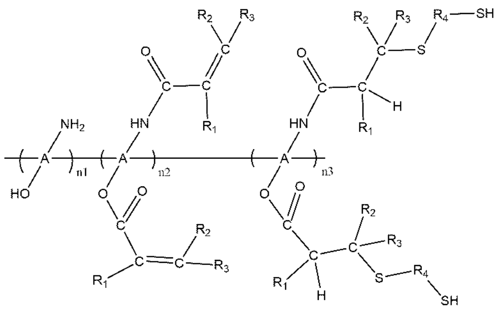

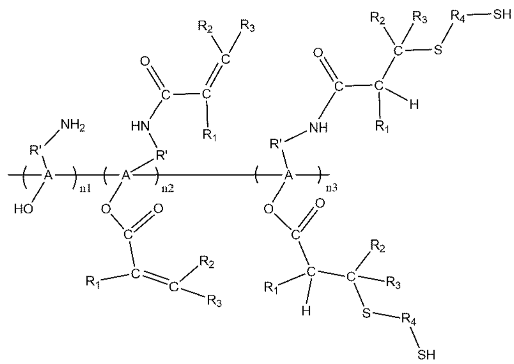

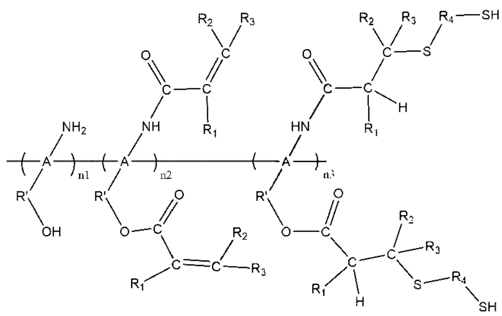

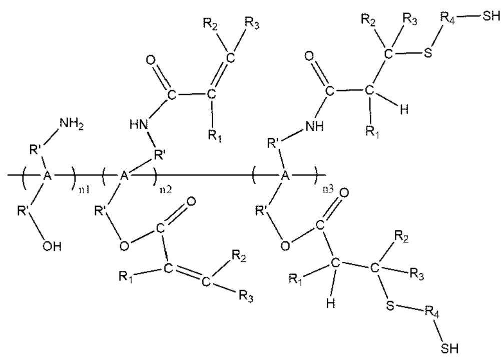

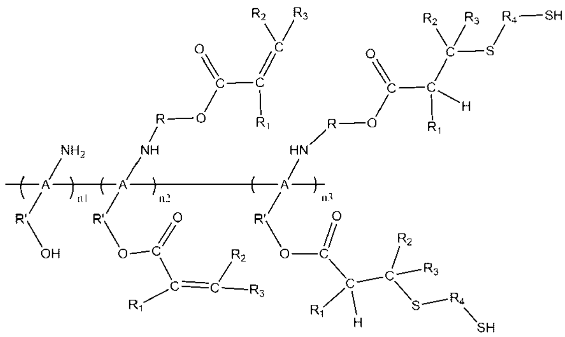

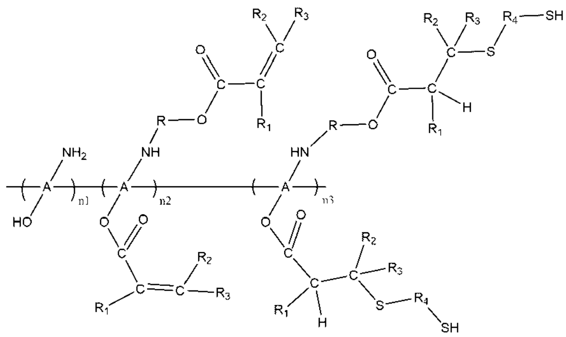

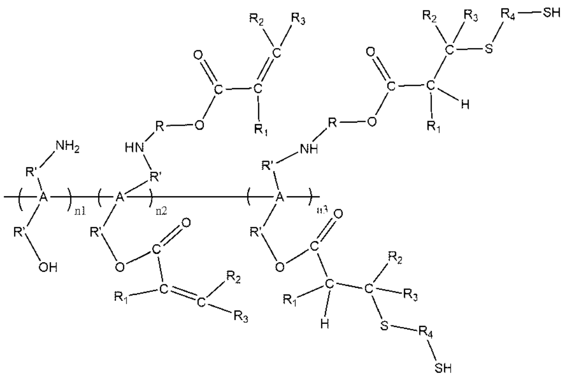

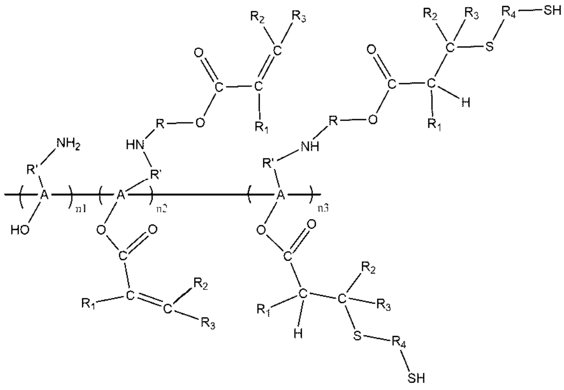

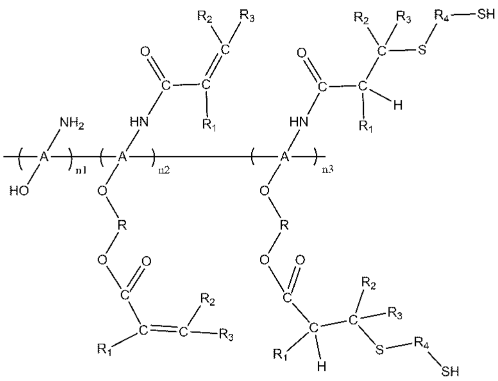

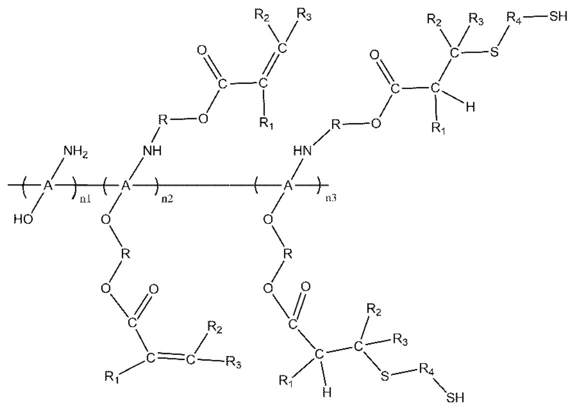

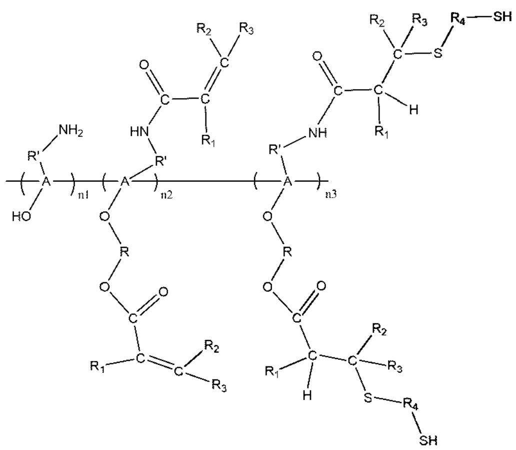

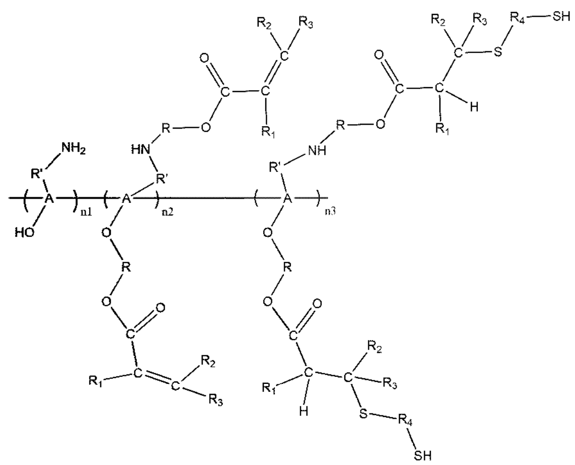

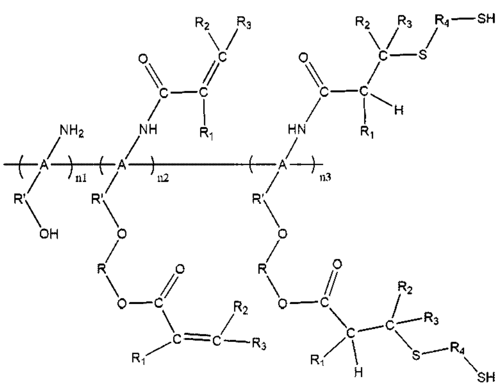

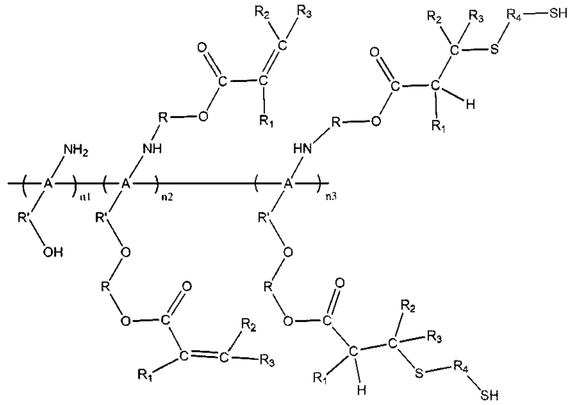

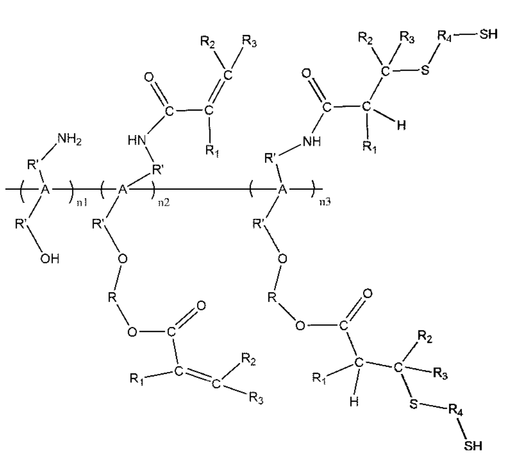

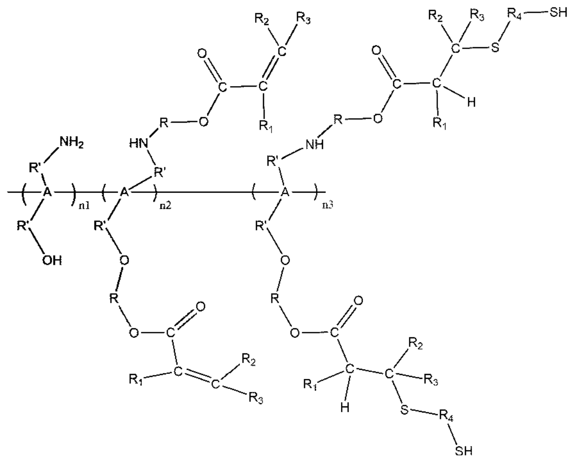

dans les structures ci-dessus, A est un fragment du composé polymère non modifié comprenant au moins l'un choisi parmi le -COOH, le -$NH_2$, le -OH, le groupe acrylate de formule a, le groupe acrylamide de formule b et le groupe acryloyle de formule c dans la structure ;

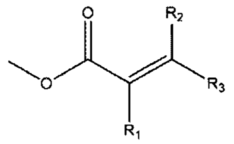
formule a

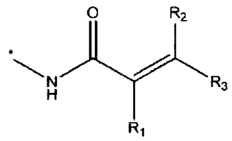
formule b

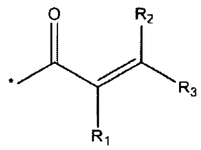
formule c

R est choisi parmi

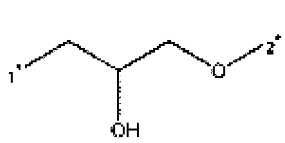
,
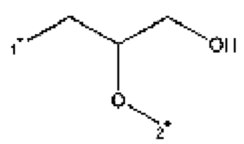

l'hydrocarbylène, l'arylène, un résidu d'amide, un résidu d'hydrazide; * représente un site de liaison ; $_1$* représente un site de liaison à un groupe gauche de R ; $_2$* représente un site de liaison à un groupe droit de R ;
$R_1$ est choisi parmi l'hydrogène, l'halogène, un groupe aliphatique, un groupe aromatique ;
$R_2$ et $R_3$ sont identiques ou différents et indépendamment l'un de l'autre sont choisis parmi l'hydrogène, l'halogène, un groupe aliphatique, un groupe aromatique ;
le groupe R' est un groupe contenant un hétéroatome, un hydrocarbylène, un arylène ou le lieur suivant :

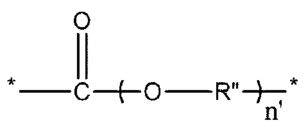

dans la formule ci-dessus, R" est un hydrocarbylène ou un arylène, n' est un nombre entier de 1 à 1000, et * représente un site de liaison ;
(n2+n3)/(n1+n2+n3) représente un degré d'acryloylation ; n3/(n1+n2+n3) représente un degré de sulfhydrylation correspondant à la teneur en sulfhydryle ci-dessus du composé polymère modifié par un sulfhydryle tel que déterminé par la méthode d'Ellman ; le n1 peut être égal à 0, et s'il est égal à 0, le degré d'acryloylation n'est pas limité, et n3/(n2+n3) seul représente le degré de sulfhydrylation correspondant à la teneur en sulfhydryle ci-dessus du composé polymère modifié par un sulfhydryle tel que déterminé par la méthode d'Ellman ; le n2 peut être égal à 0, et s'il est égal à 0, n3/(n1+n3) représente à la fois le degré d'acryloylation et le degré de sulfhydrylation correspondant à la teneur en sulfhydryle ci-dessus du composé polymère modifié par un sulfhydryle tel que déterminé par la méthode d'Ellman ;
une teneur en sulfhydryle du composé polymère modifié par un sulfhydryle tel que déterminé par la méthode d'Ellman est de 0,01 à 30 mmol/g ;

dans lequel le fragment -S-$R_4$-SH est introduit à partir des composés polysulfhydryles suivants comprenant :

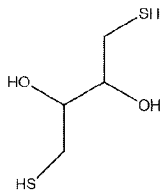
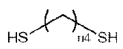
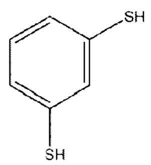
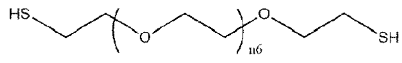
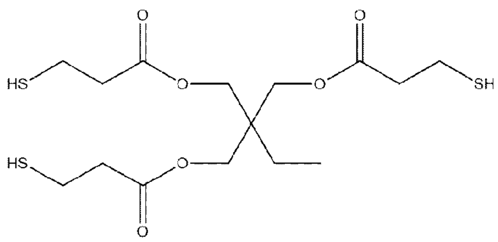
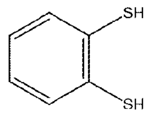
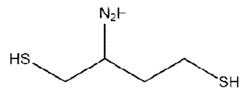
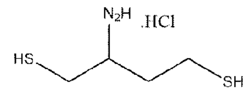
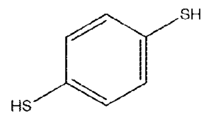
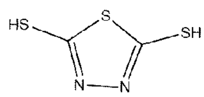
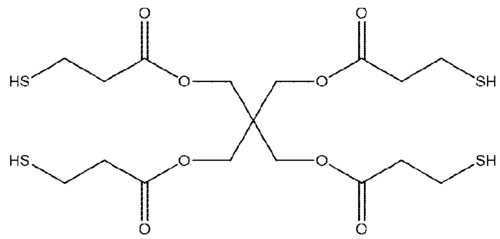
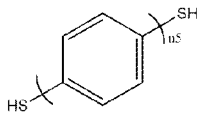

4-arm-PEG-SH

6-arm-PEG-SH

8-arm-PEG-SH

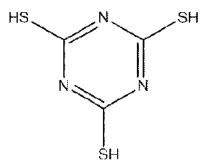

dans lequel n4 est un nombre entier de 2 à 30 ; n5 est un nombre entier de 1 à 30 ; n6 est un nombre entier de 1 à 30 ;

le PEG-SH à 4 bras représente un polymère PEG contenant quatre groupes sulfhydryles ; le PEG-SH à 6 bras représente un polymère PEG contenant six groupes sulfhydryles ; le PEG-SH à 8 bras représente un polymère PEG contenant huit groupes sulfhydryles ; le PEG est une abréviation de polyéthylène glycol.

**2.** Composé polymère modifié par un sulfhydryle selon la revendication 1, dans lequel n4 est égal à 2, 3, 4, 5 ou 6; n5 est égal à 1, 2, 3, 4 ou 5 ; n6 est égal à 1, 2, 3, 4 ou 5.

**3.** Composé polymère modifié par un sulfhydryle selon la revendication 1, dans lequel la teneur en sulfhydryle du composé polymère modifié par un sulfhydryle tel que déterminé par une méthode d'Ellman est de 0,1 à 10 mmol/g.

**4.** Composé polymère modifié par un sulfhydryle selon la revendication 1, dans lequel la teneur en sulfhydryle du composé polymère modifié par un sulfhydryle tel que déterminé par une méthode d'Ellman est de 0,3 à 5 mmol/g, de préférence de 0,5 à 3 mmol/g.

**5.** Composé polymère modifié par un sulfhydryle selon la revendication 1, dans lequel le A est une structure représentée comme suit :

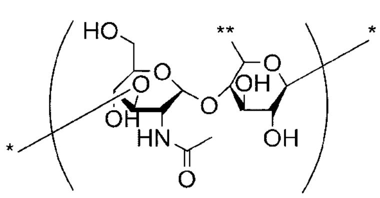
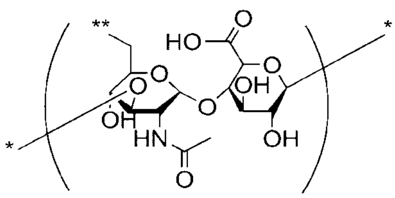

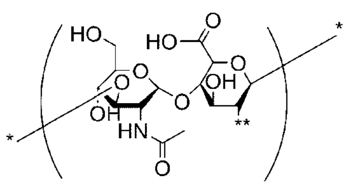

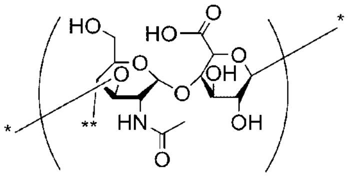
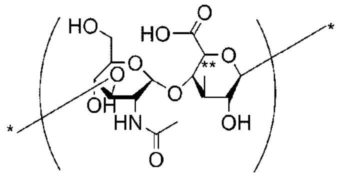
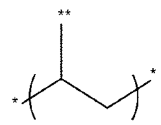

dans chacune des structures ci-dessus, * représente un site de liaison entre des unités de répétition de la chaîne principale ; ** représente un site de liaison entre -COOH, $-NH_2$, -OH, un groupe acrylate de formule a, un groupe acrylamide de formule b ou un groupe acryloyle de formule c et le fragment, ou un site de liaison entre un groupe R' et le fragment ;

ou le A est un fragment ou une unité de répétition restant dans les polymères suivants : Gélatine A, Gélatine MA, CTS-A, CTS-MA, PHEMA-A, PHEMA-MA, HB-PEG, PVA-A, PVA-MA, CHS-A ou CHS-MA avec la chaîne latérale contenant le groupe acrylamide éliminée :

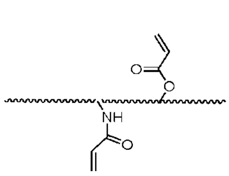
Gélatine A

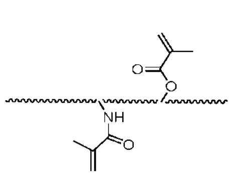
Gélatine MA

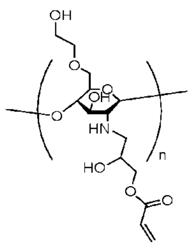
CTS-A

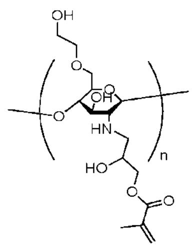
CTS-MA

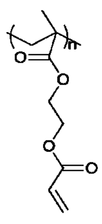
PHEMA-A

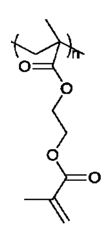
PHEMA-MA

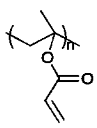
PVA-A

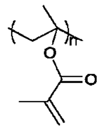
PVA-MA

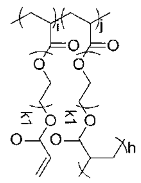
HB-PEG

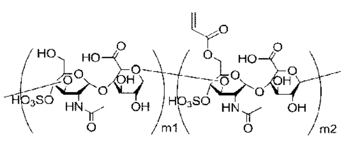
CHS-A

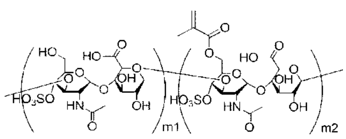
CHS-MA

Gélatine A, Gélatine MA, CTS-A, CTS-MA, PHEMA-A, PHEMA-MA, HB-PEG, PVA-A, PVA-MA, CHS-A et CHS-MA sont des abréviations pour les noms des polymères présentant les structures ci-dessus.

**6.** Procédé de préparation pour le composé polymère modifié par un sulfhydryle selon l'une quelconque des revendications 1 à 5, comprenant les étapes suivantes :

1) l'acryloylation du composé polymère comprenant au moins l'un choisi parmi le -COOH, le $-NH_2$ et le -OH dans la structure, à savoir la liaison d'au moins l'un choisi parmi le -COOH, le $-NH_2$ et le -OH compris dans la structure du composé polymère, directement ou indirectement, au groupe suivant :

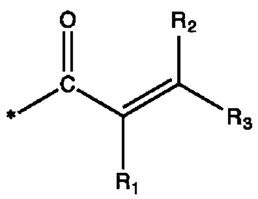

dans lequel $R_1$, $R_2$ et $R_3$ sont définis comme ci-dessus, et * représente un site de liaison ;
en variante, l'utilisation directe du composé polymère comprenant au moins l'un choisi parmi le groupe acrylate de formule a, le groupe acrylamide de formule b et le groupe acryloyle de formule c dans la structure en tant que matériau de départ de réaction ;

2) la réaction d'au moins un des composés polymères obtenus à l'étape 1) avec un composé polysulfhydryle HS-$R_4$-SH pour obtenir le composé polymère modifié par un sulfhydryle, dans lequel $R_4$ est défini comme ci-dessus.

**7.** Procédé de préparation selon la revendication 6, comprenant les étapes suivantes :

1) l'acryloylation du composé polymère comprenant au moins l'un choisi parmi le -COOH, le -$NH_2$ et le -OH dans la structure, à savoir la liaison d'au moins l'un choisi parmi le -COOH, le -$NH_2$ et le -OH compris dans la structure du composé polymère, par l'intermédiaire d'un groupe - R- ou directement, au groupe suivant :

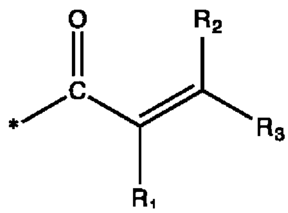

dans lequel R, $R_1$, $R_2$ et $R_3$ sont définis comme ci-dessus, et * représente un site de liaison ;
en variante, l'utilisation directe du composé polymère comprenant au moins l'un choisi parmi le groupe acrylate de formule a, le groupe acrylamide de formule b et le groupe acryloyle de formule c dans la structure en tant que matériau de départ de réaction ;

2) la réaction d'au moins un des composés polymères obtenus à l'étape 1) avec un composé polysulfhydryle HS-$R_4$-SH pour obtenir le composé polymère modifié par un sulfhydryle, dans lequel $R_4$ est défini comme ci-dessus.

**8.** Procédé de préparation selon la revendication 6 ou 7, dans lequel à l'étape 1), l'étape d'acryloylation peut être effectuée par réaction du composé polymère à modifier avec un composé acrylate, ou par réaction du composé polymère à modifier avec un composé chlorure d'acryloyle ou un composé anhydride acrylique ;

de préférence, à l'étape 1), l'étape d'acryloylation est effectuée par réaction du chlorure d'acryloyle et de ses dérivés ou de l'anhydride acrylique et de ses dérivés avec le composé polymère comprenant au moins l'un parmi -OH et -$NH_2$ ; ou effectuée par réaction de l'acrylate de glycidyle et de ses dérivés avec le composé polymère comprenant au moins l'un choisi parmi -COOH, -OH et -$NH_2$ ;
de préférence, à l'étape 1), l'étape d'acryloylation peut être une étape de réaction non conventionnelle, à savoir l'utilisation d'un procédé autre que le procédé ci-dessus pour synthétiser un composé polymère comprenant une structure de formule c ;
de préférence, à l'étape 2), la réaction avec le composé polysulfhydryle HS-$R_4$-SH est effectuée dans un solvant ; de préférence, le solvant est de l'eau ou un solvant organique, et peut en outre être de l'eau désionisée ou du diméthylformamide ;
de préférence, à l'étape 2), la réaction avec le composé polysulfhydryle HS-$R_4$-SH est effectuée dans des conditions de basse à haute température ; par exemple, la température de réaction est de 0 à 80 °C, et peut en outre être de 10 à 70 °C, et par exemple, la réaction peut être effectuée à température ambiante ;
de préférence, à l'étape 2), le temps de réaction pour la réaction avec le composé polysulfhydryle HS-$R_4$-SH est de 0,1 à 100 h ;
de préférence, à l'étape 2), la plage de pH pour la réaction avec le composé polysulfhydryle HS-$R_4$-SH est de -1 à 15 ; par exemple, le pH de réaction peut être de 6 à 8 ; et pour un autre exemple, 7.

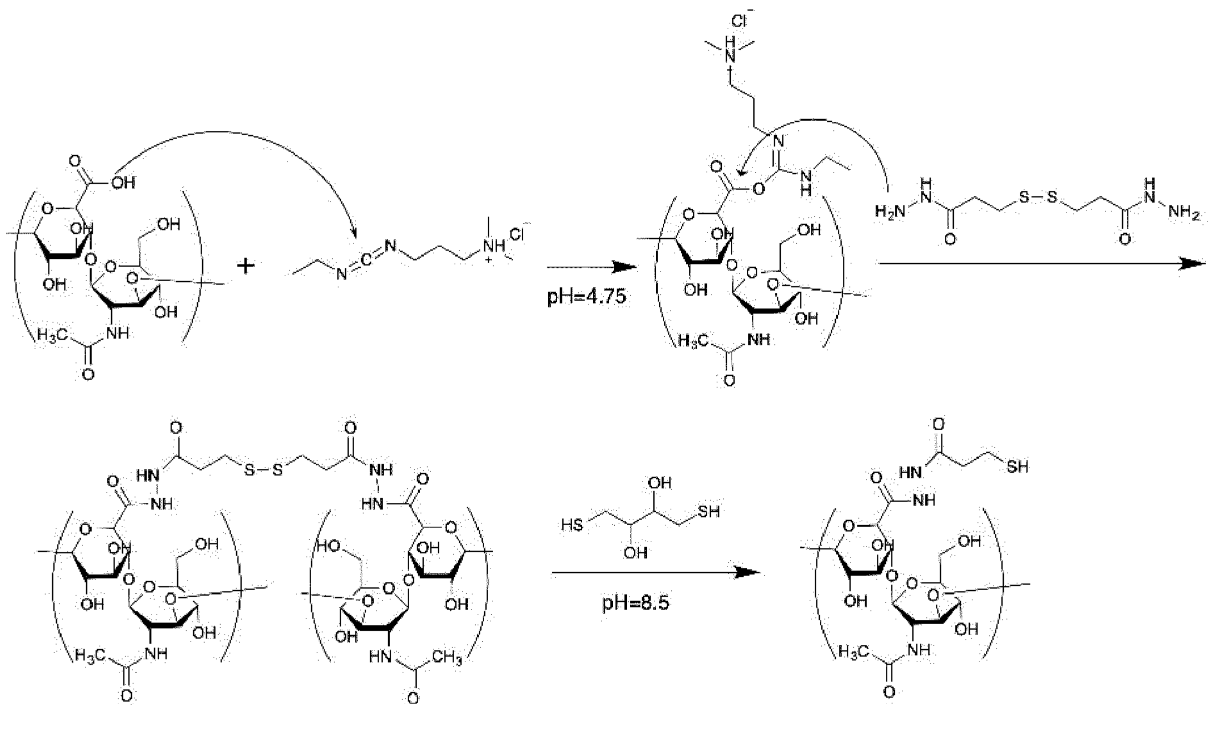


FIG. 1

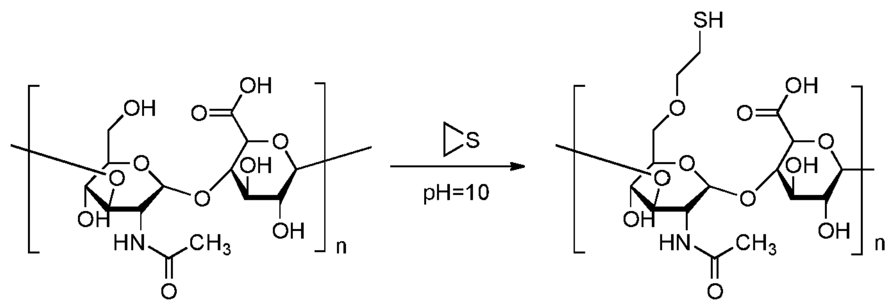


FIG. 2

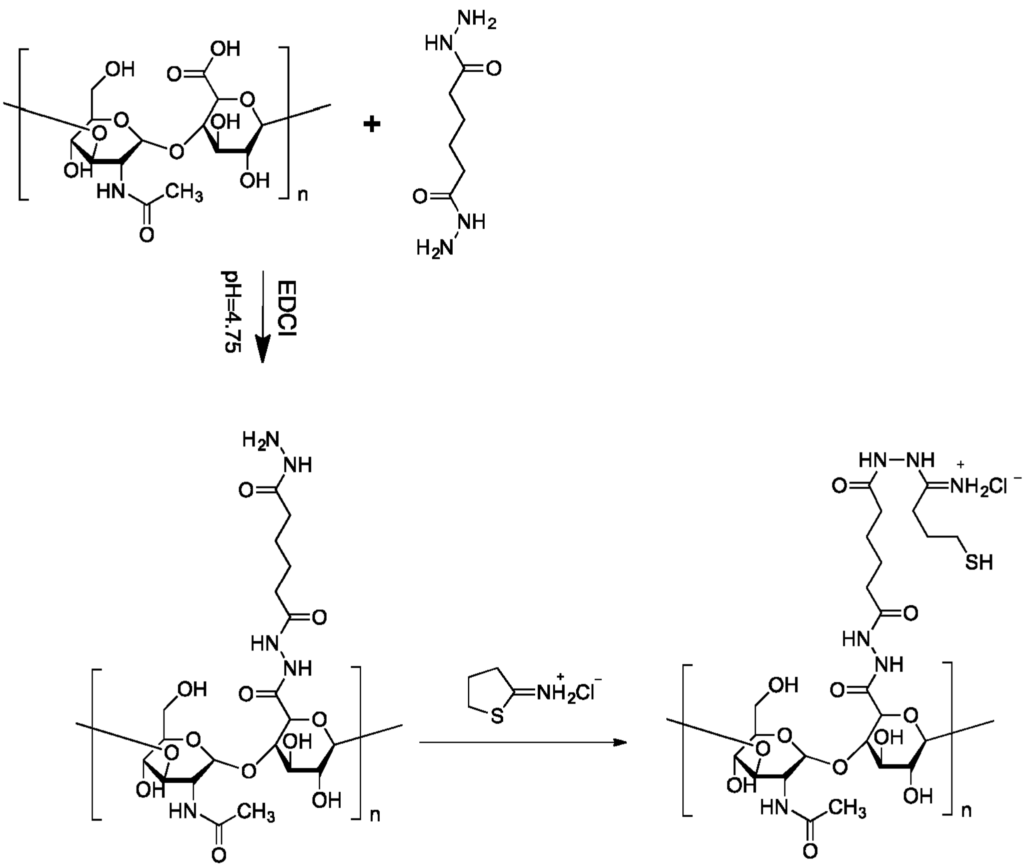


FIG. 3

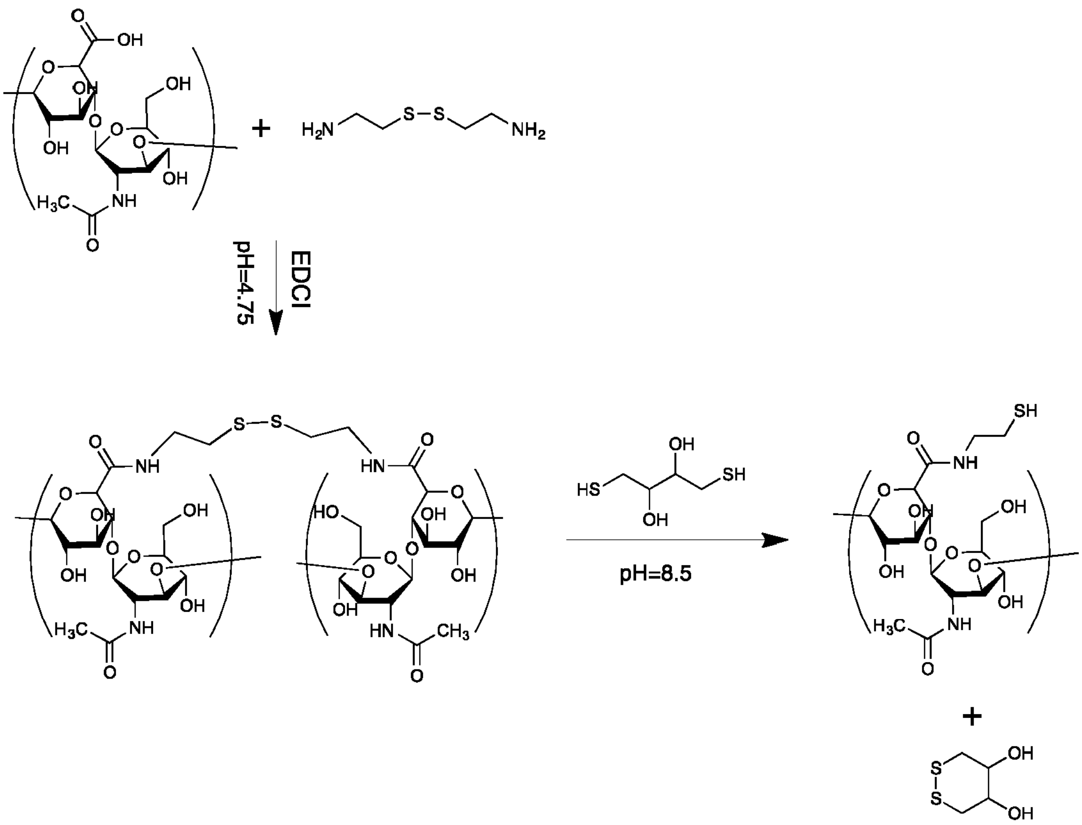


FIG. 4

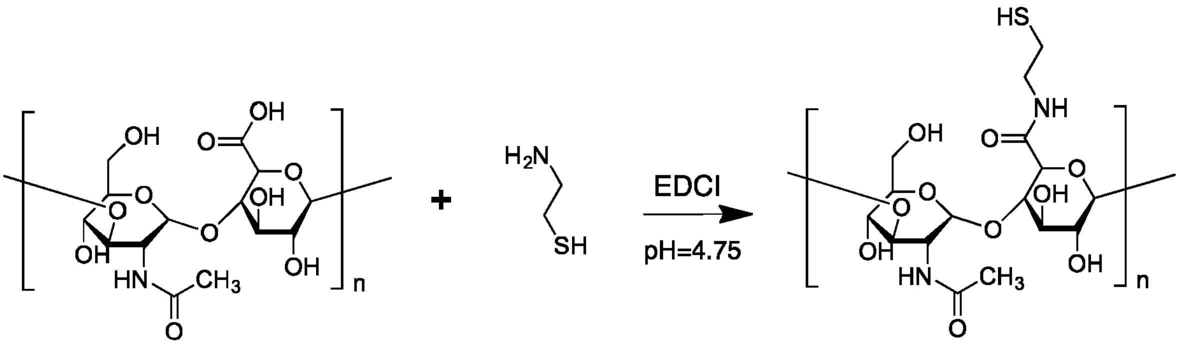


FIG. 5

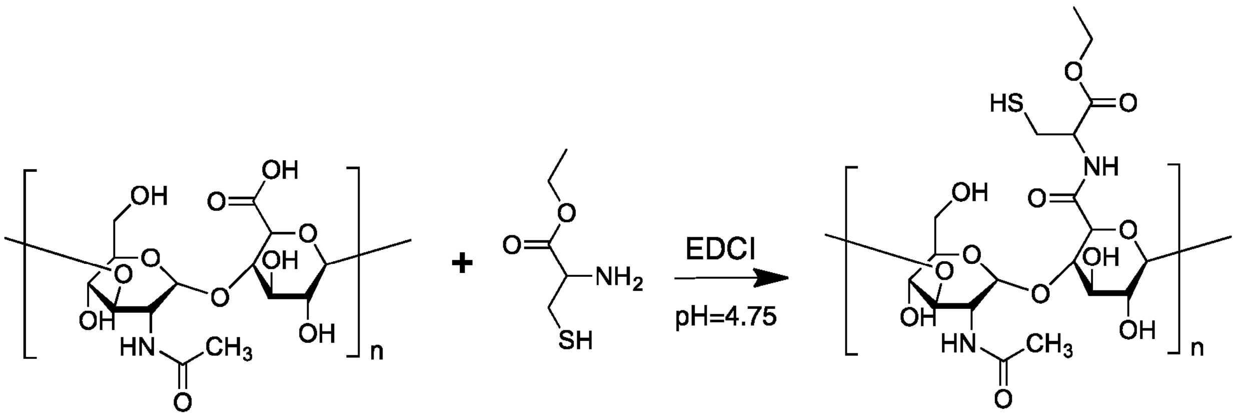


FIG. 6

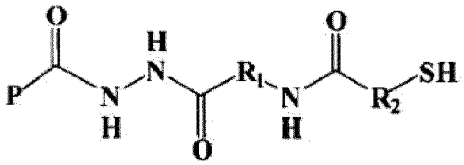

(I)

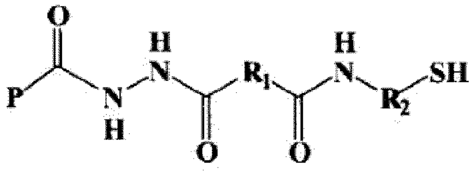

(II)

FIG. 7

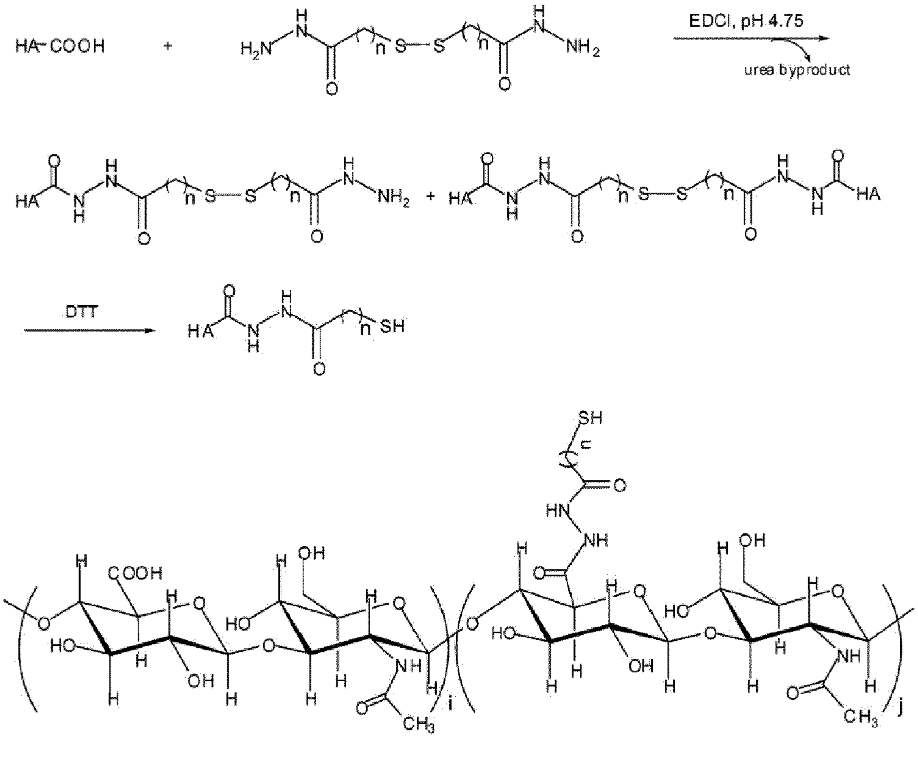


**n = 2, HA-DTPH**
**= 3, HA-DTBH**

FIG. 8

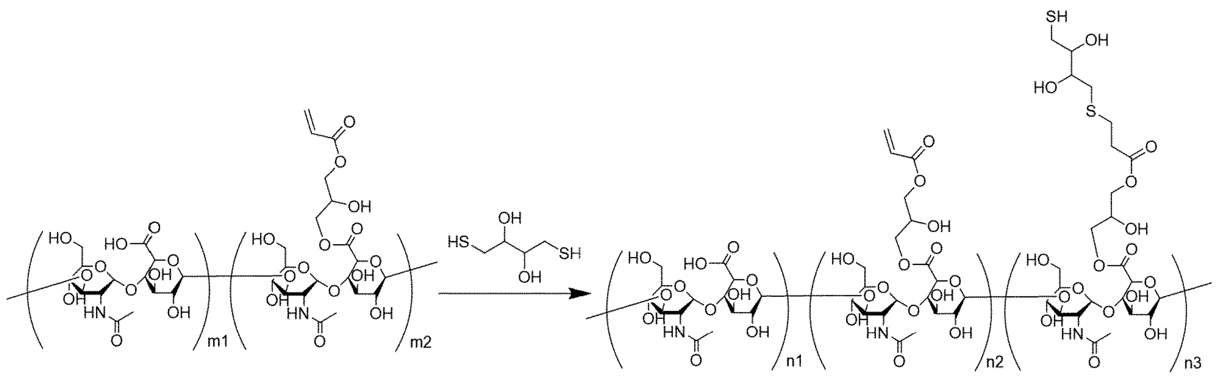

HA-A1

HA-A1-SH1

FIG. 9

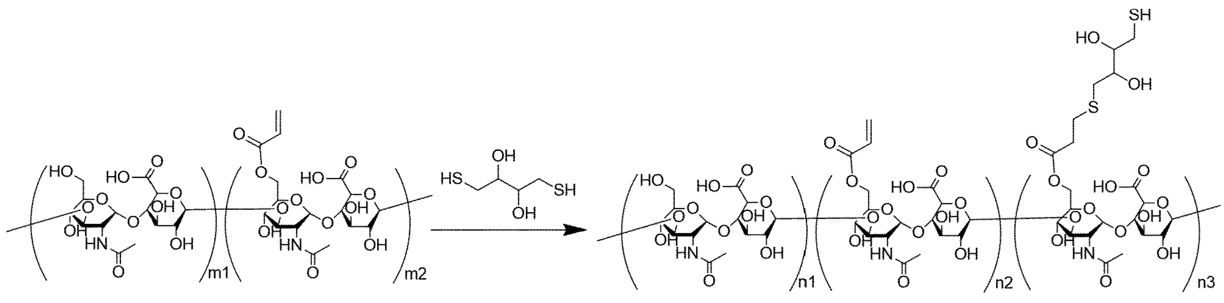

HA-A2

HA-A2-SH1

FIG. 10

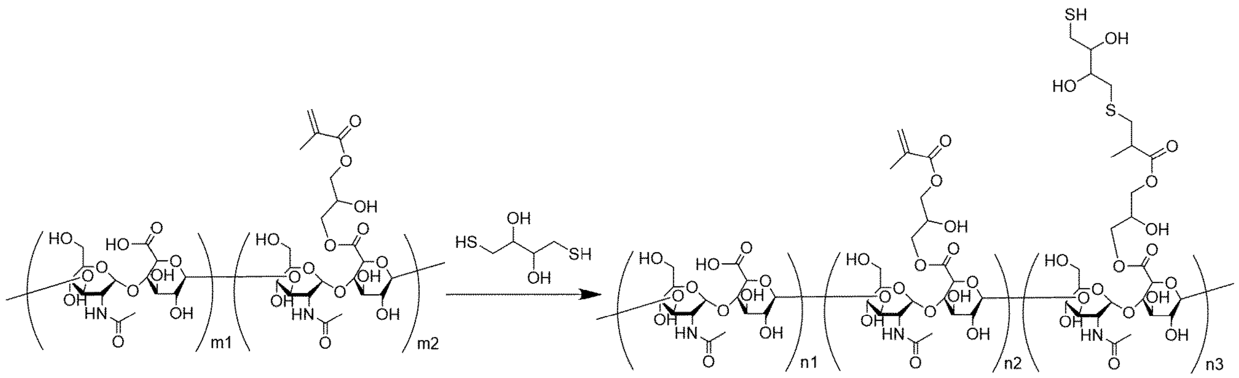

HA-MA1

HA-MA1-SH1

FIG. 11

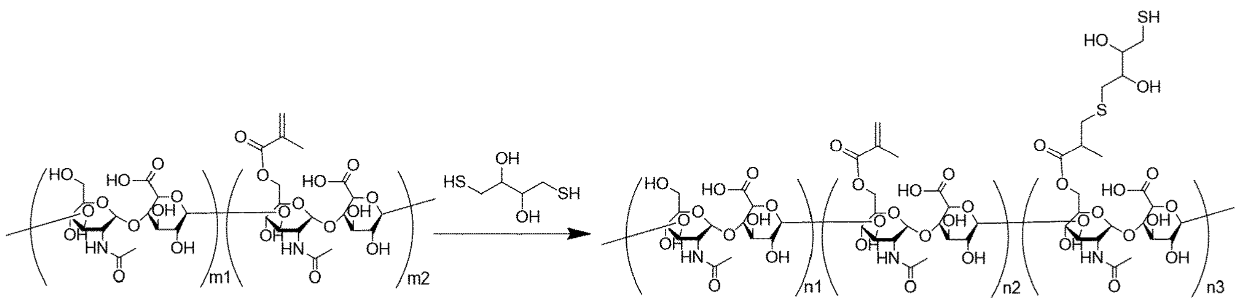

HA-MA2

HA-MA2-SH1

FIG. 12

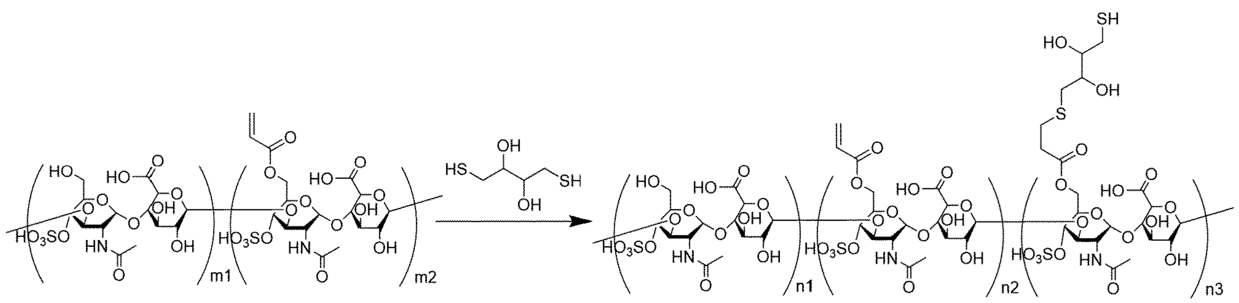

CHS-A

CHS-A-SH1

FIG. 13

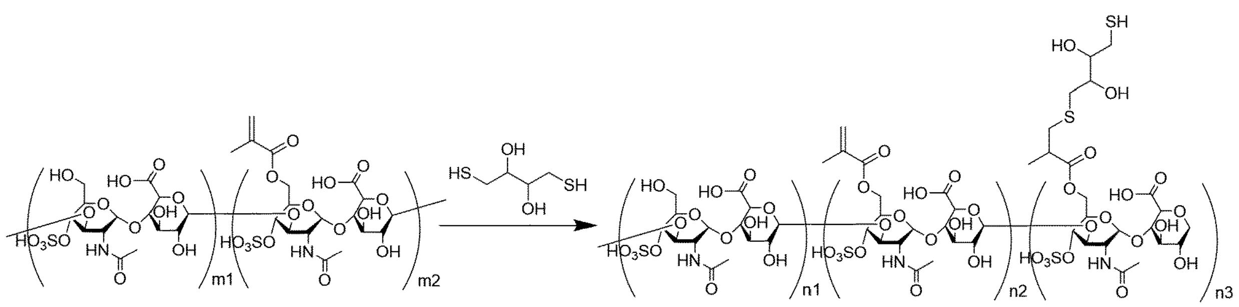

CHS-MA

CHS-MA-SH1

FIG. 14

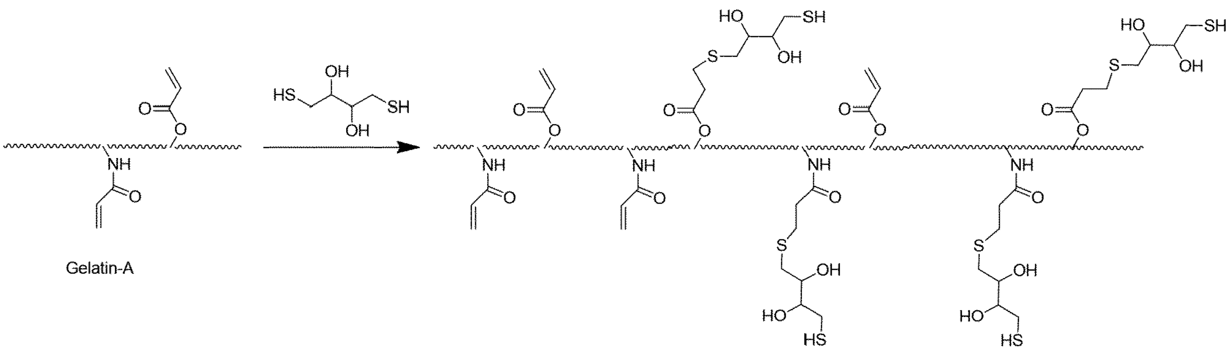

Gelatin-A

Gelatin-A-SH1

FIG. 15

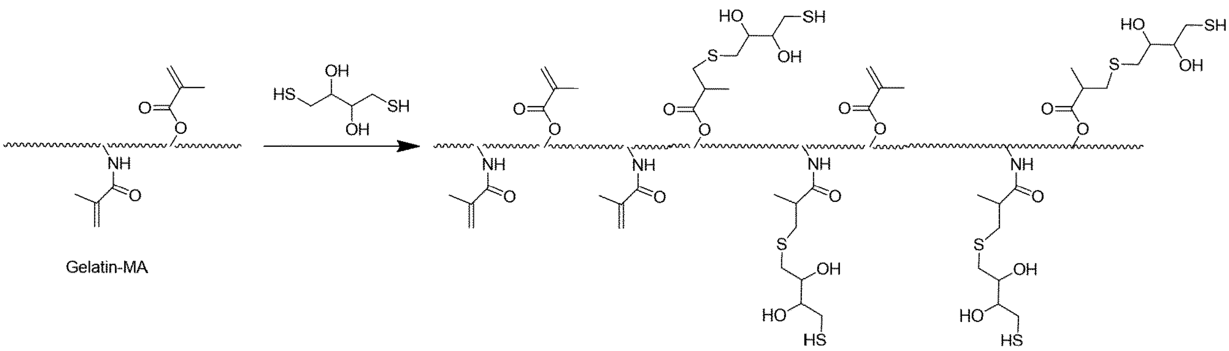

Gelatin-MA

Gelatin-MA-SH1

FIG. 16

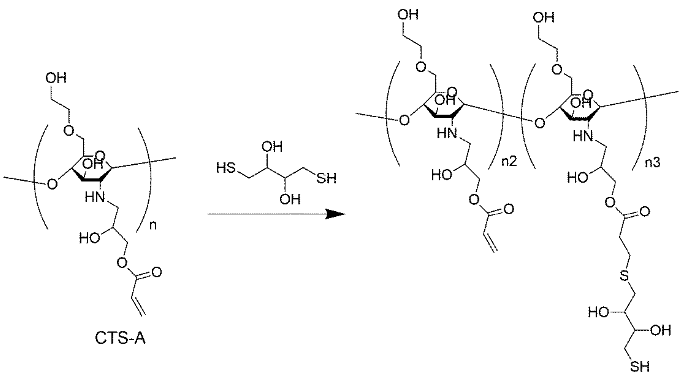

CTS-A

CTS-A-SH1

FIG. 17

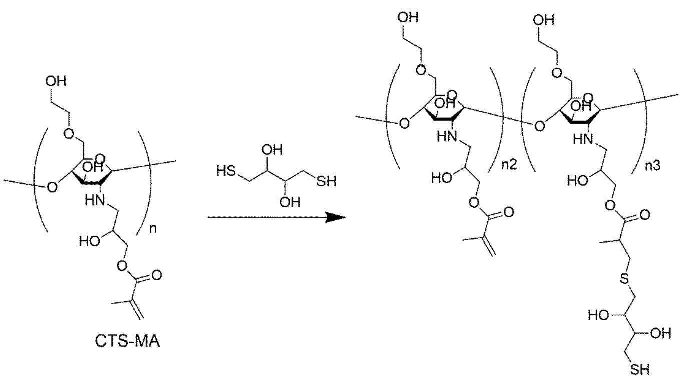

CTS-MA

CTS-MA-SH1

FIG. 18

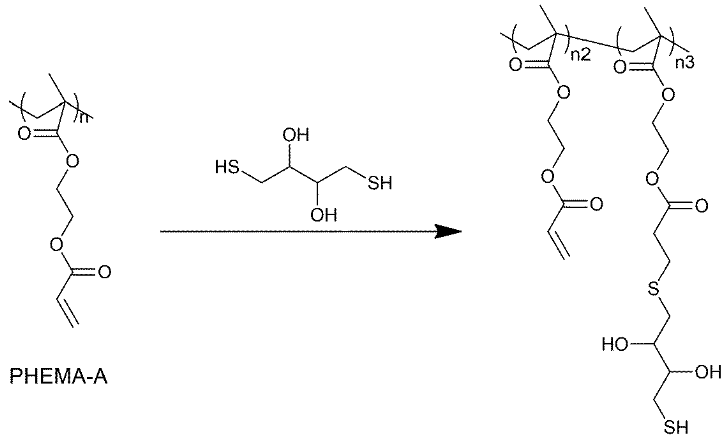

PHEMA-A

PHEMA-A-SH1

FIG. 19

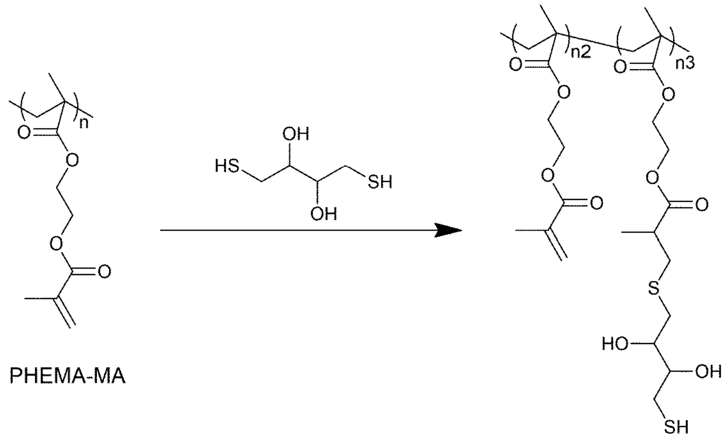

PHEMA-MA

PHEMA-MA-SH1

FIG. 20

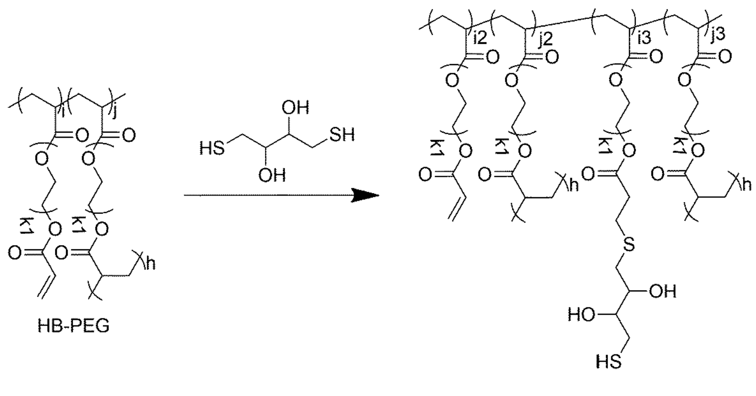

HB-PEG

HB-PEG-SH1

FIG. 21

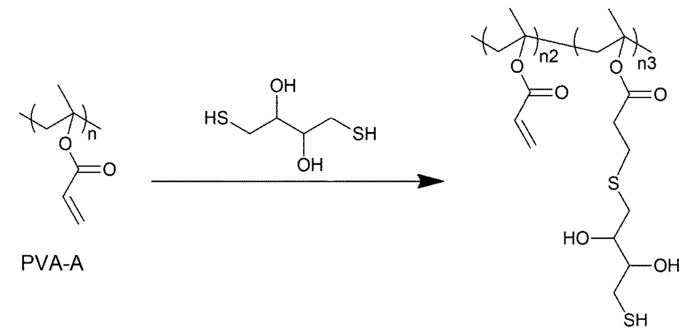

PVA-A

PVA-A-SH1

FIG. 22

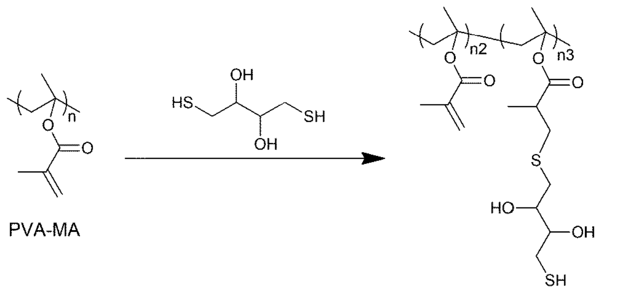

PVA-MA

PVA-MA-SH1

FIG. 23

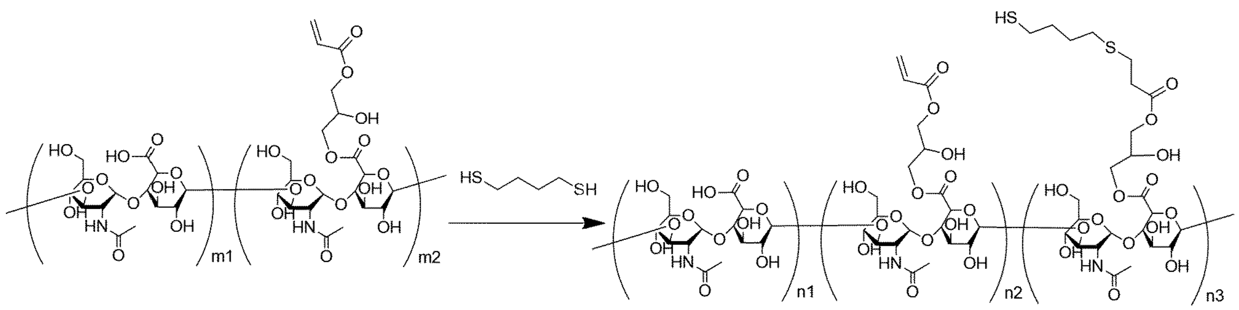

HA-A1

HA-A1-SH2

FIG. 24

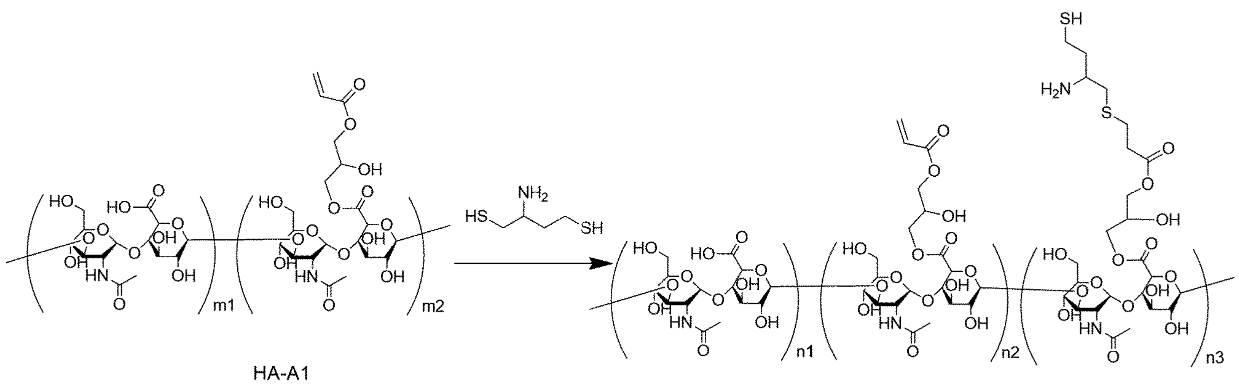

HA-A1

HA-A1-SH3

FIG. 25

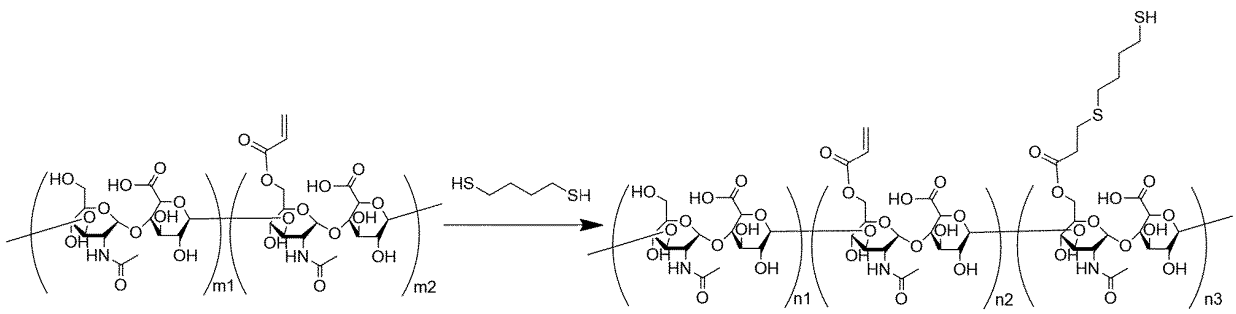

HA-A2 HA-A2-SH2

FIG. 26

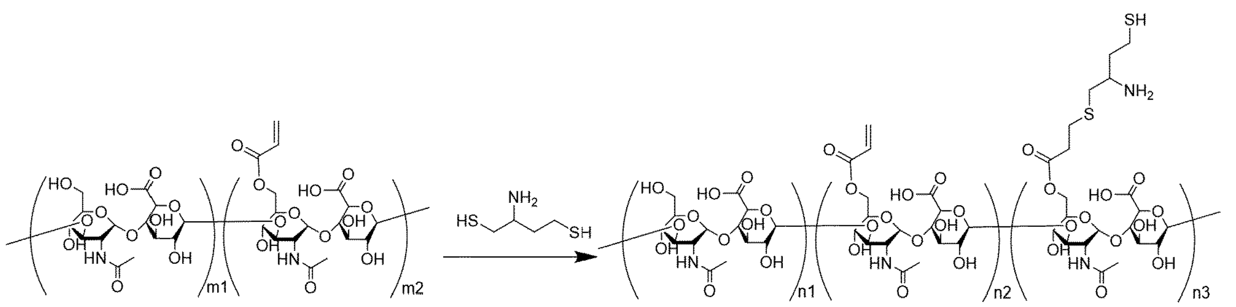

HA-A2 HA-A2-SH3

FIG. 27

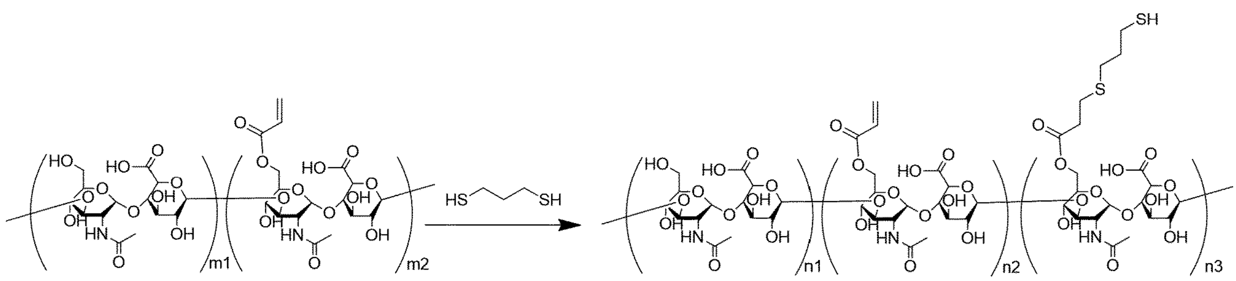

HA-A2 HA-A2-SH4

FIG. 28

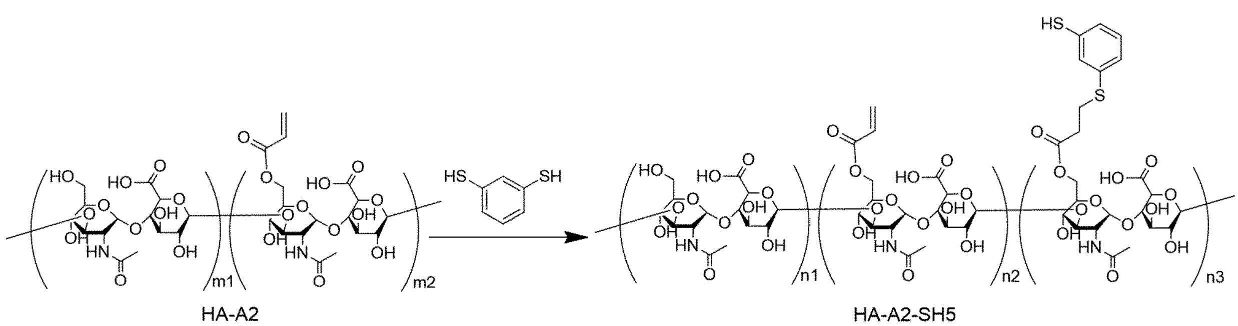

HA-A2 HA-A2-SH5

FIG. 29

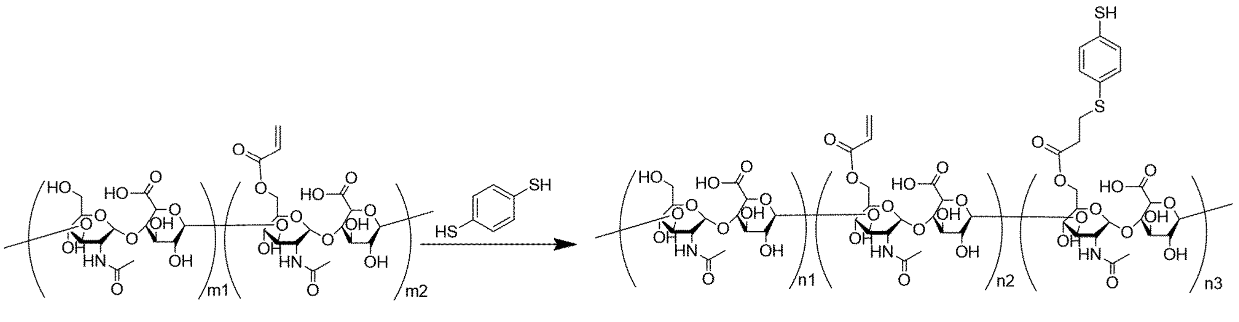

HA-A2

HA-A2-SH6

FIG. 30

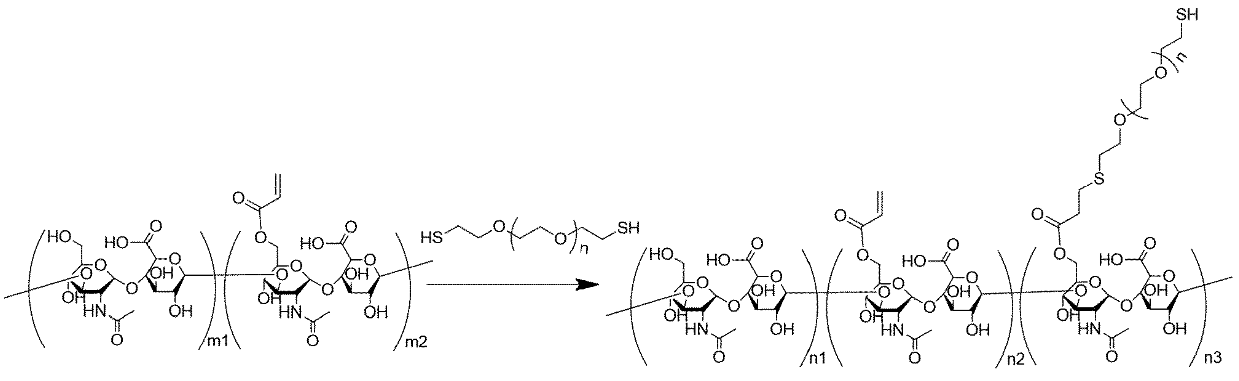

HA-A2

HA-A2-SH7

FIG. 31

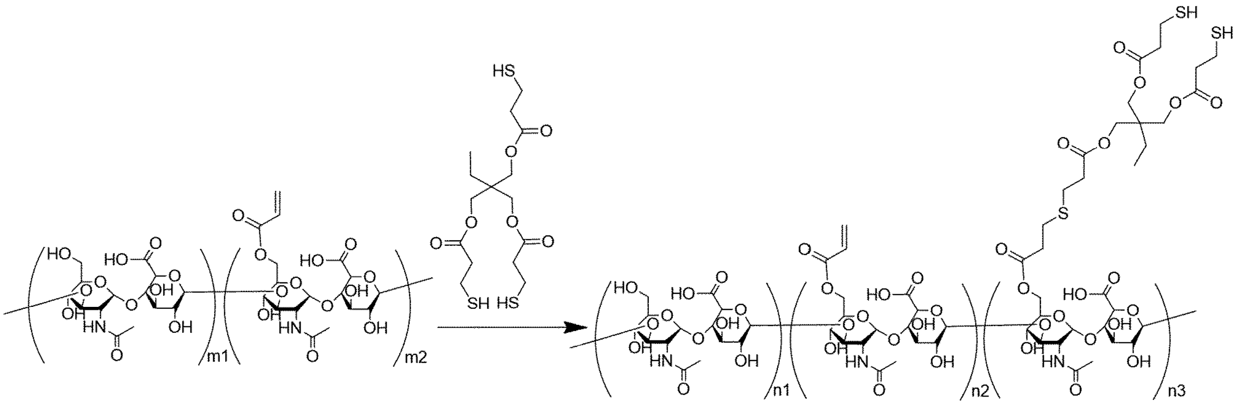

HA-A2

HA-A2-SH8

FIG. 32

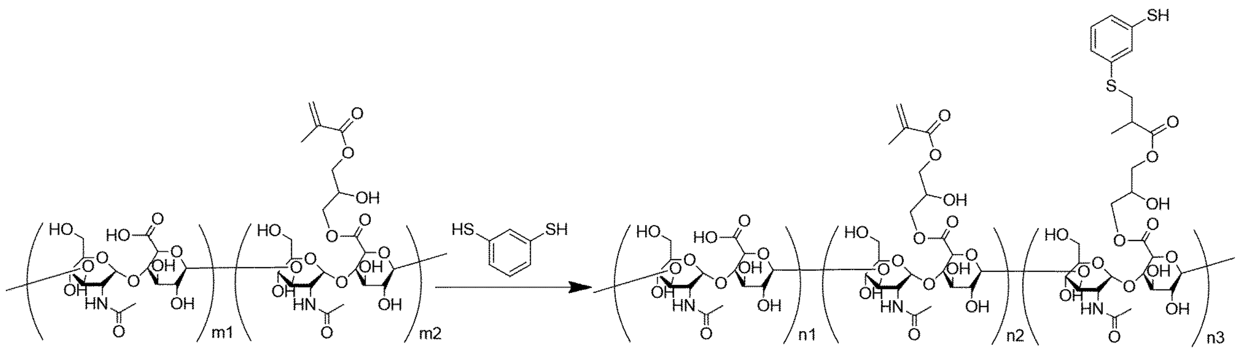

HA-MA1

HA-MA1-SH5

FIG. 33

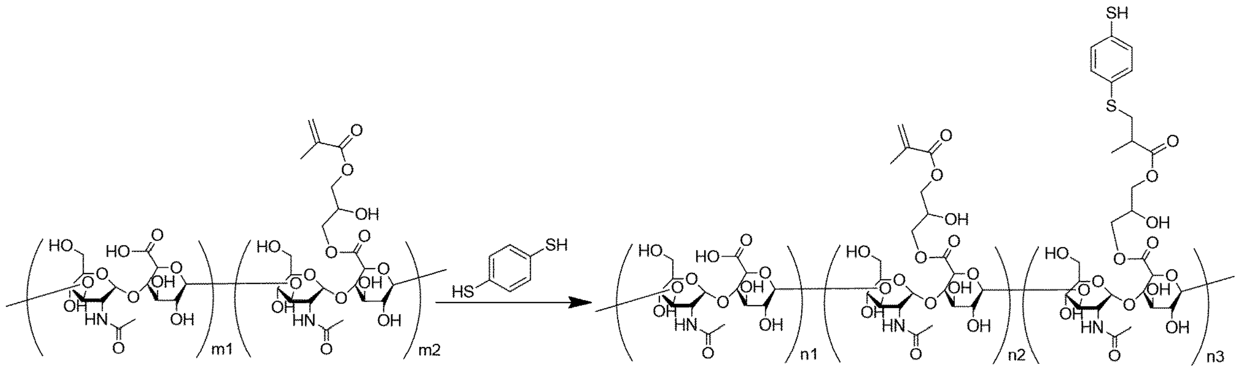

HA-MA1

HA-MA1-SH6

FIG. 34

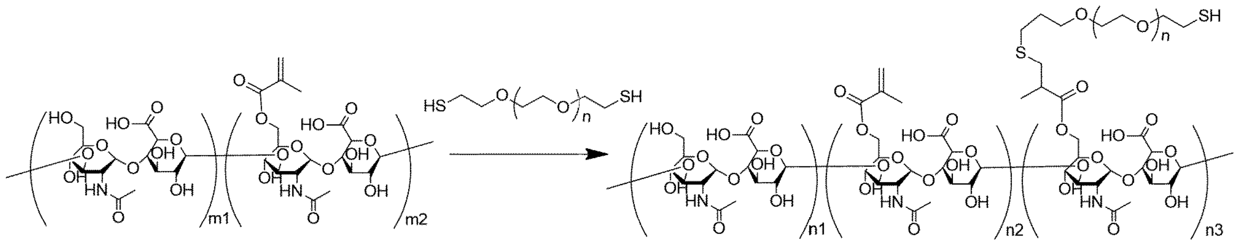

HA-MA2

HA-MA2-SH7

FIG. 35

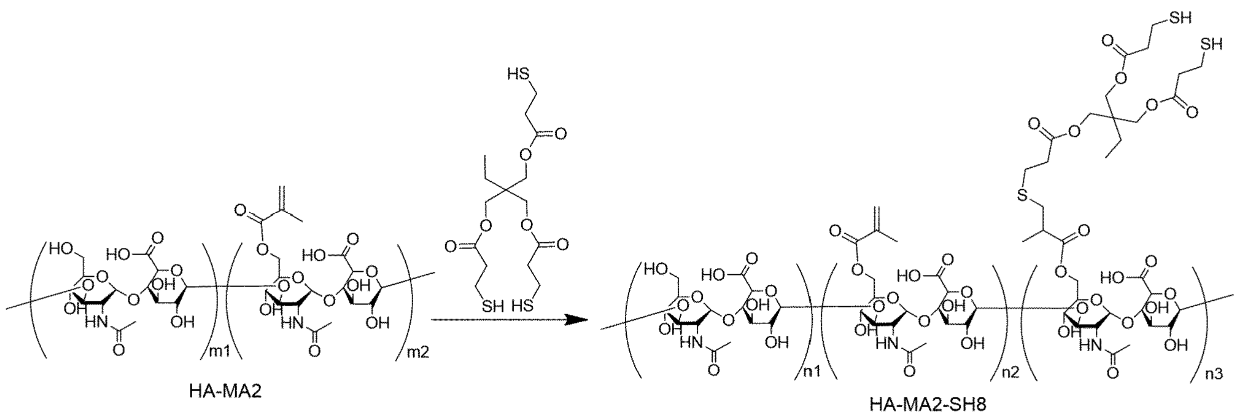

HA-MA2

HA-MA2-SH8

FIG. 36

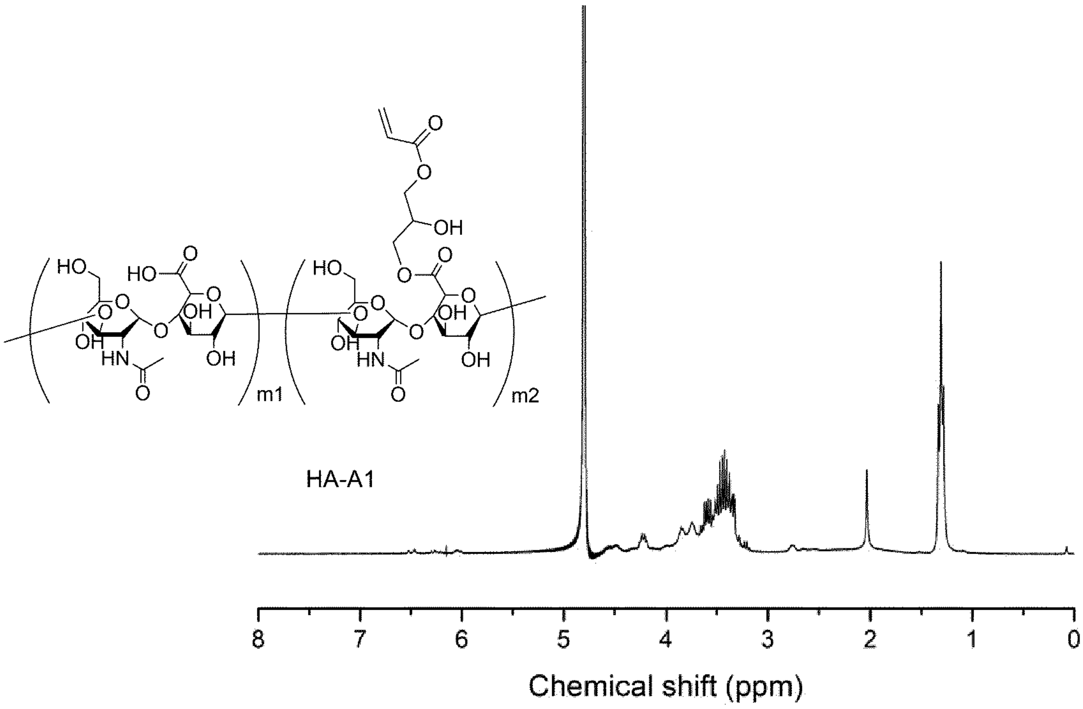
HA-A1
8 7 6 5 4 3 2 1 0
Chemical shift (ppm)

FIG. 37

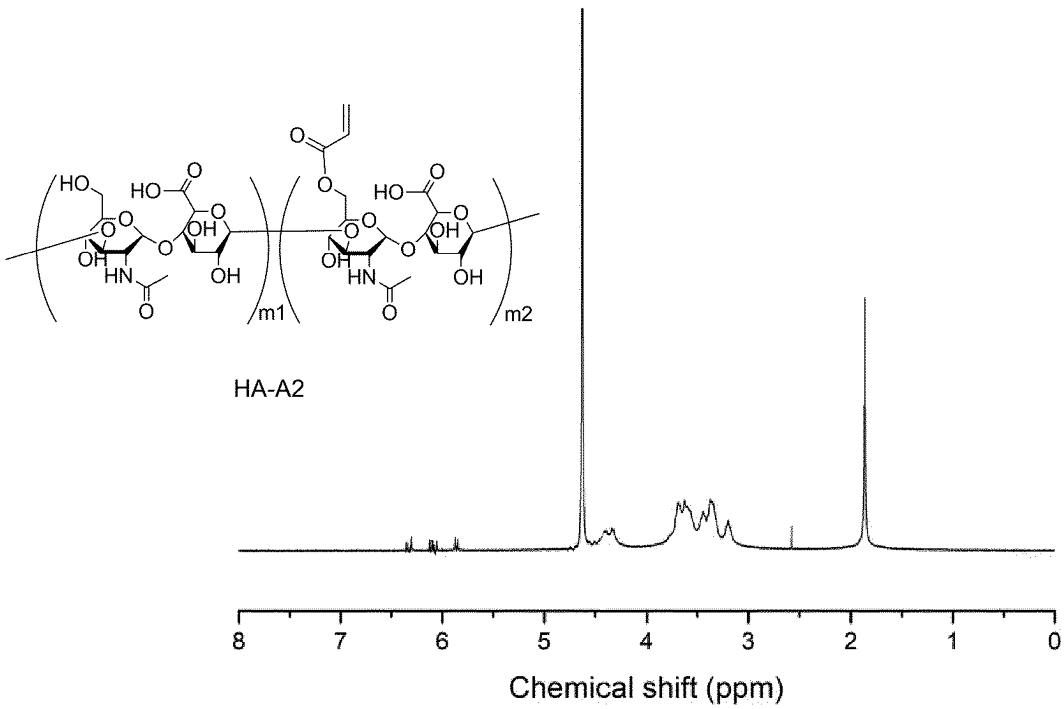
HA-A2
8 7 6 5 4 3 2 1 0
Chemical shift (ppm)

FIG. 38

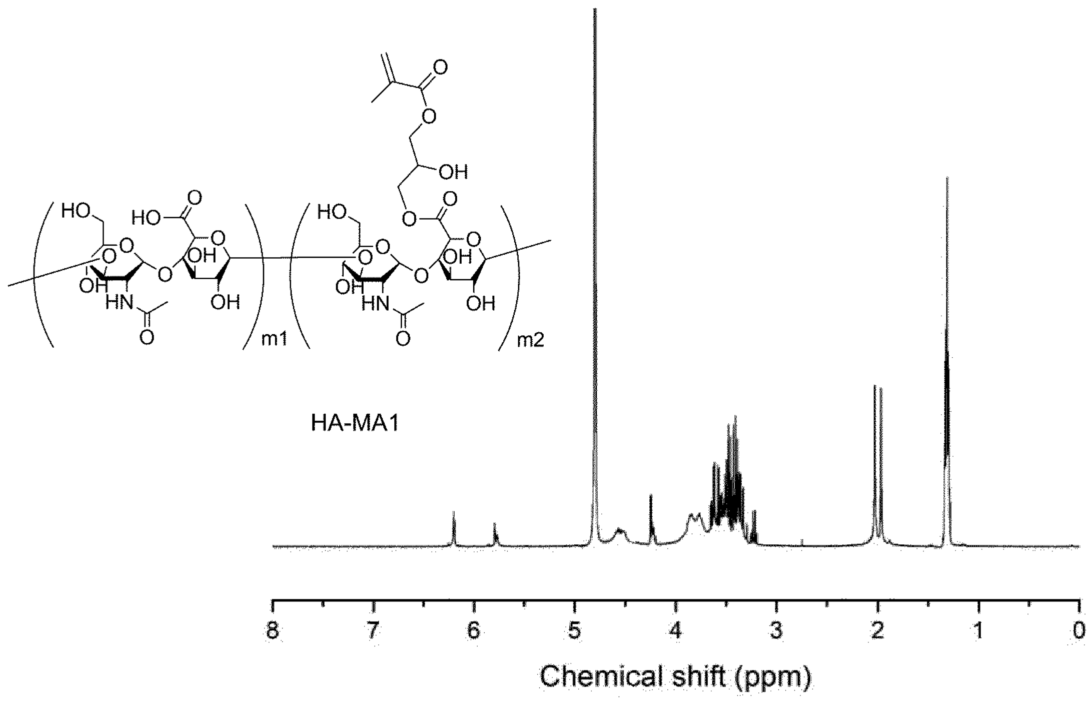
HA-MA1
8
7
6
5
4
3
2
1
0
Chemical shift (ppm)

FIG. 39

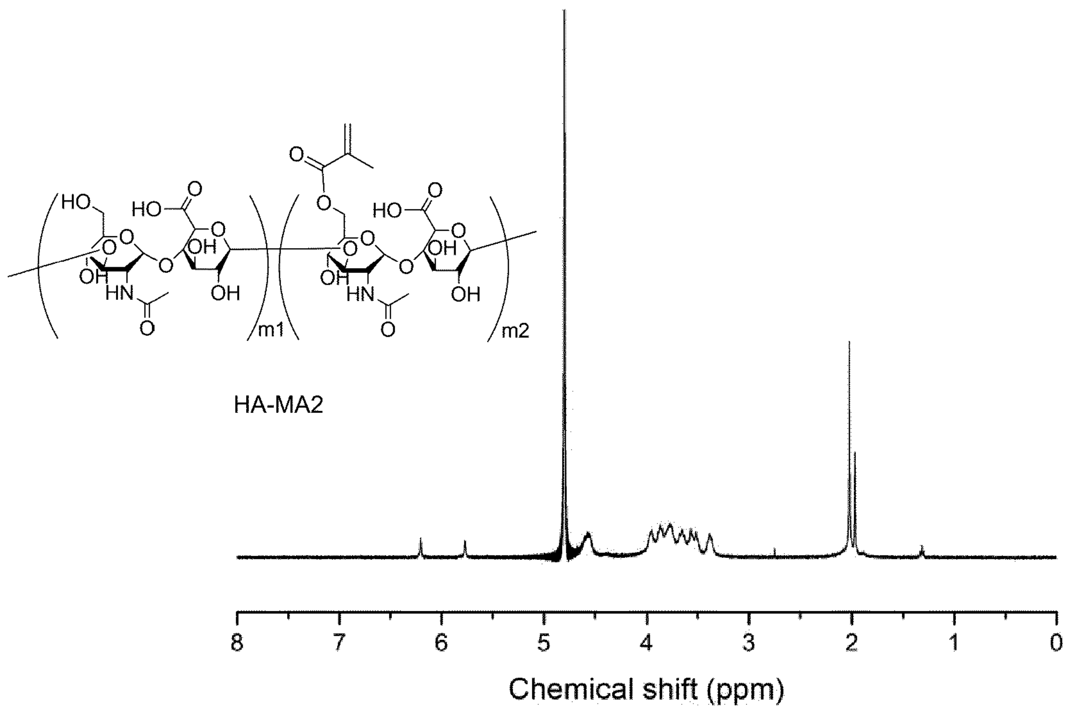
HA-MA2
8
7
6
5
4
3
2
1
0
Chemical shift (ppm)

FIG. 40

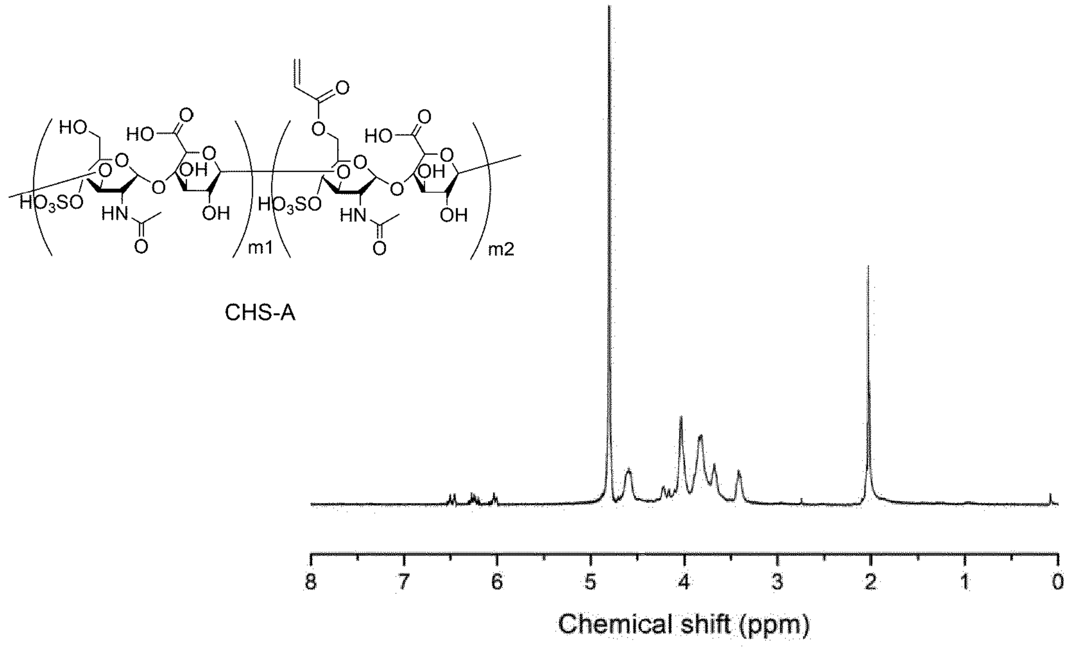
CHS-A
8 7 6 5 4 3 2 1 0
Chemical shift (ppm)

FIG. 41

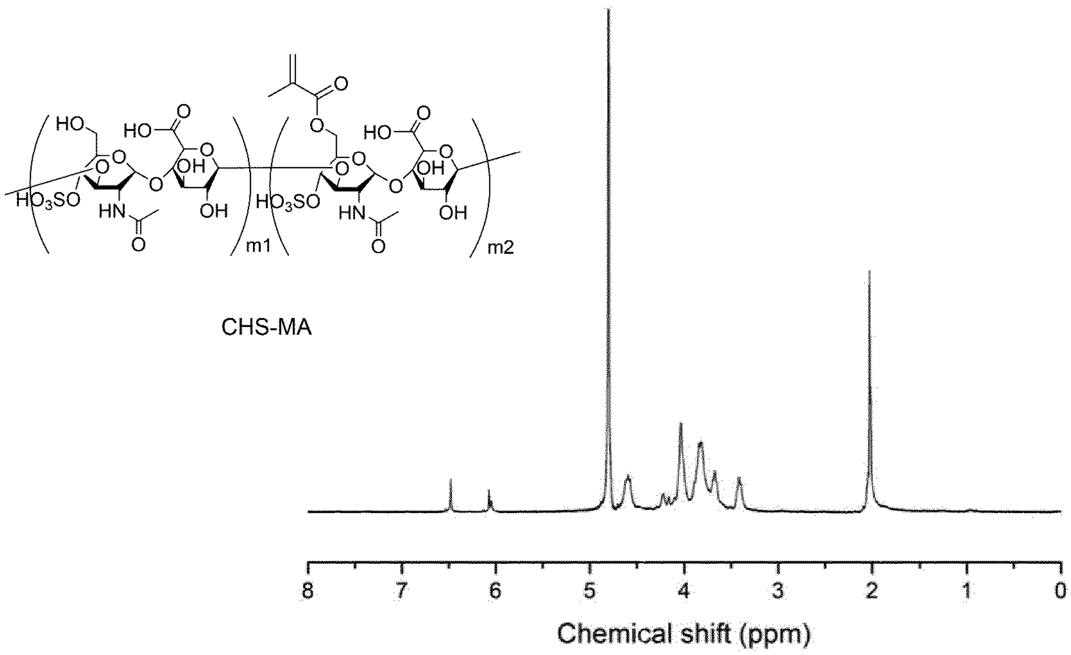
CHS-MA
8 7 6 5 4 3 2 1 0
Chemical shift (ppm)

FIG. 42

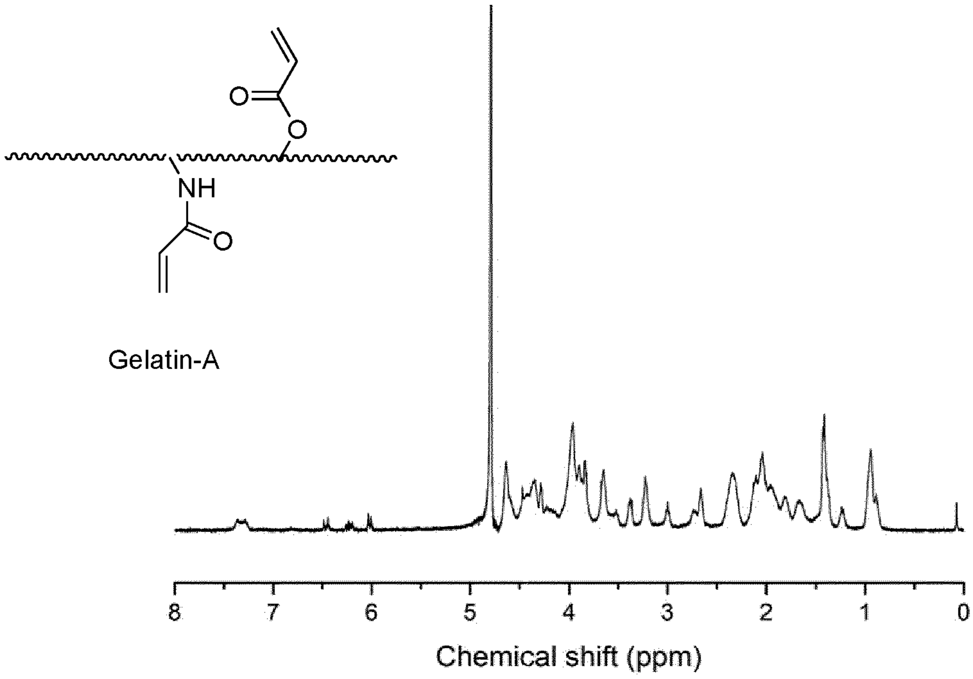


Gelatin-A

FIG. 43

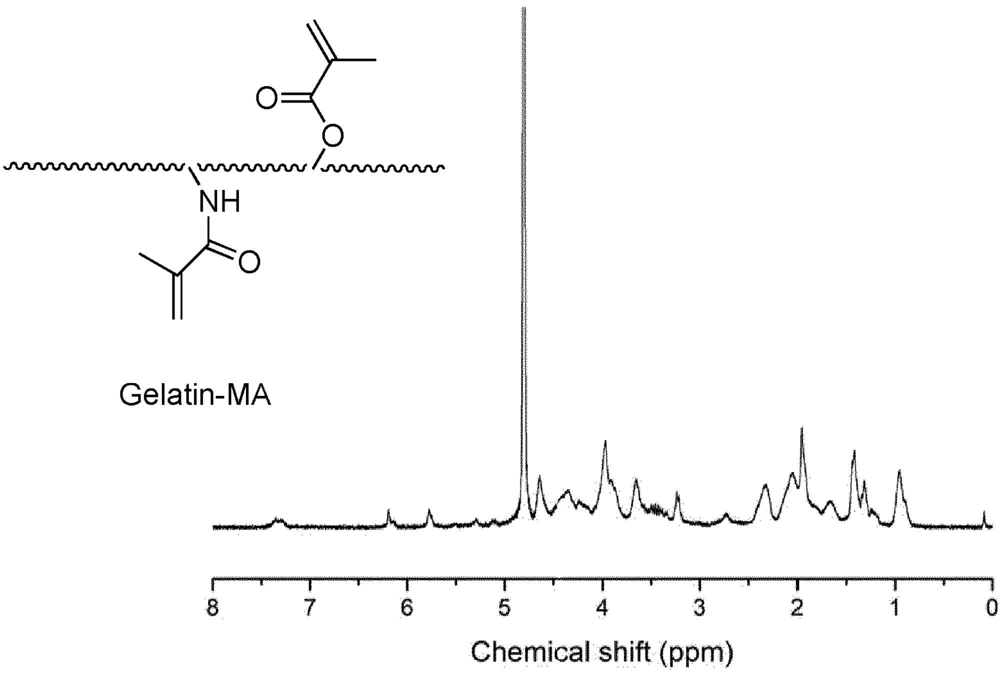


Gelatin-MA

FIG. 44

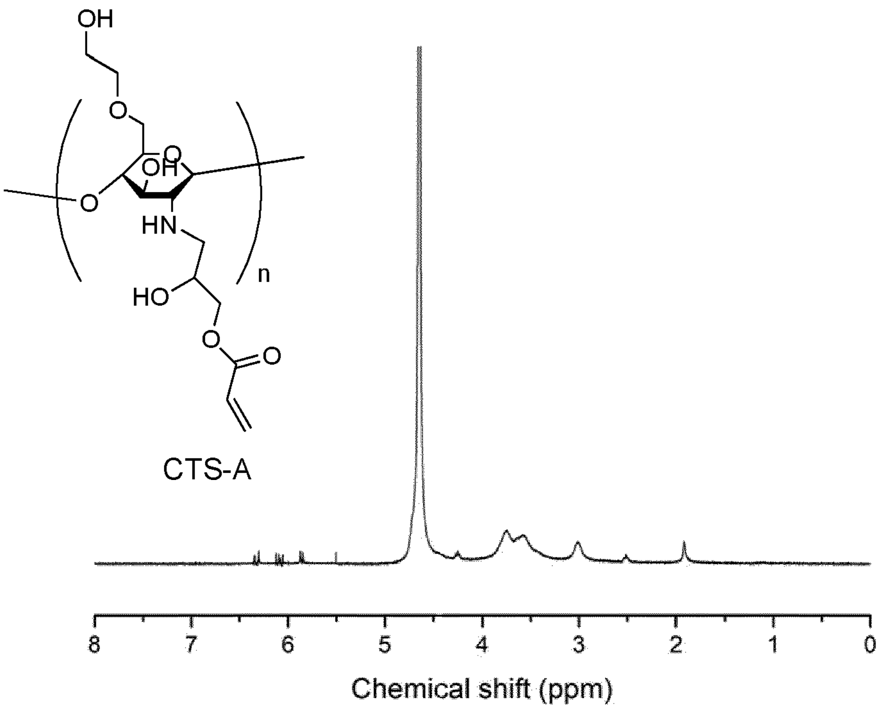
CTS-A
8
7
6
5
4
3
2
1
0
Chemical shift (ppm)

FIG. 45

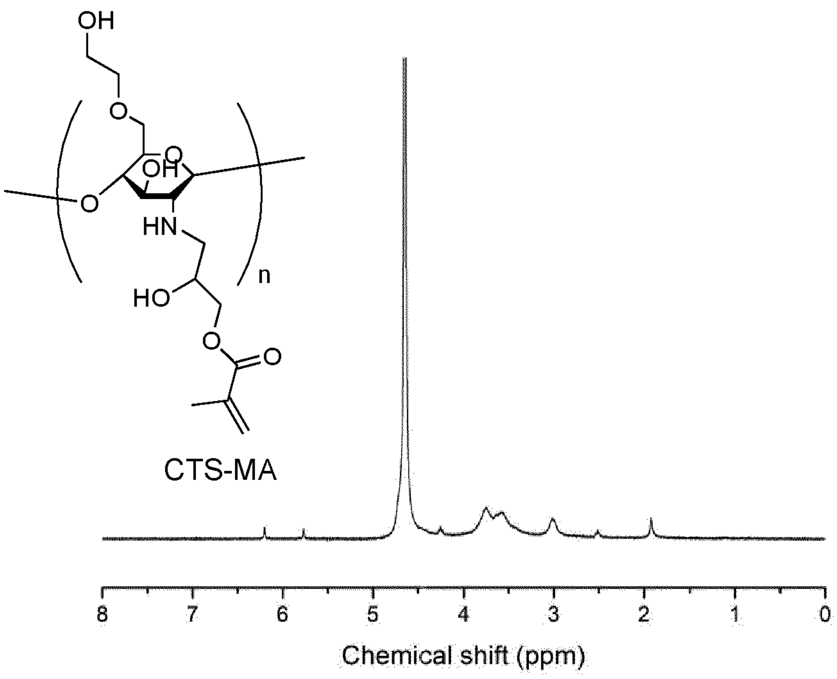
CTS-MA
8
7
6
5
4
3
2
1
0
Chemical shift (ppm)

FIG. 46

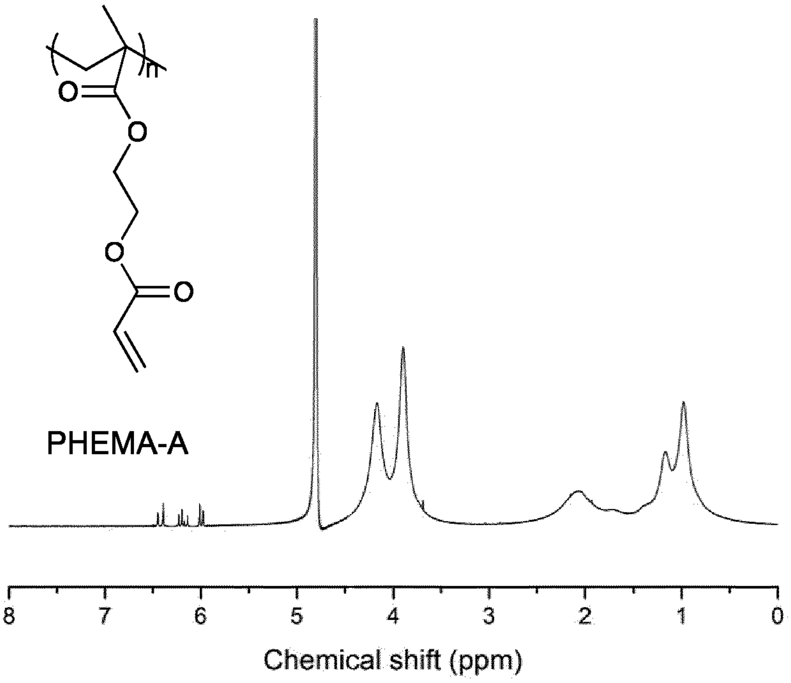
PHEMA-A
8
7
6
5
4
3
2
1
0
Chemical shift (ppm)

FIG. 47

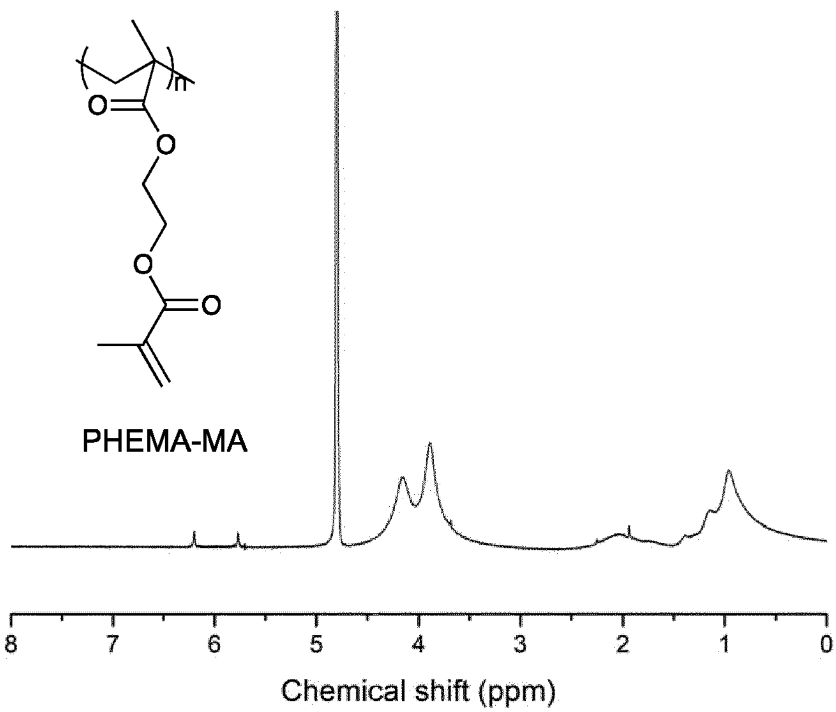
PHEMA-MA
8
7
6
5
4
3
2
1
0
Chemical shift (ppm)

FIG. 48

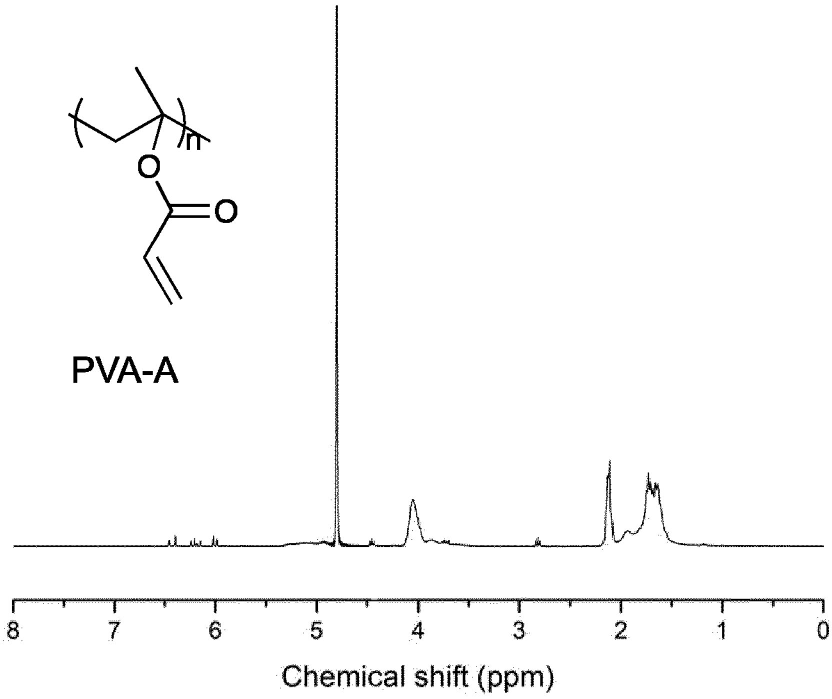
PVA-A
8
7
6
5
4
3
2
1
0
Chemical shift (ppm)

FIG. 49

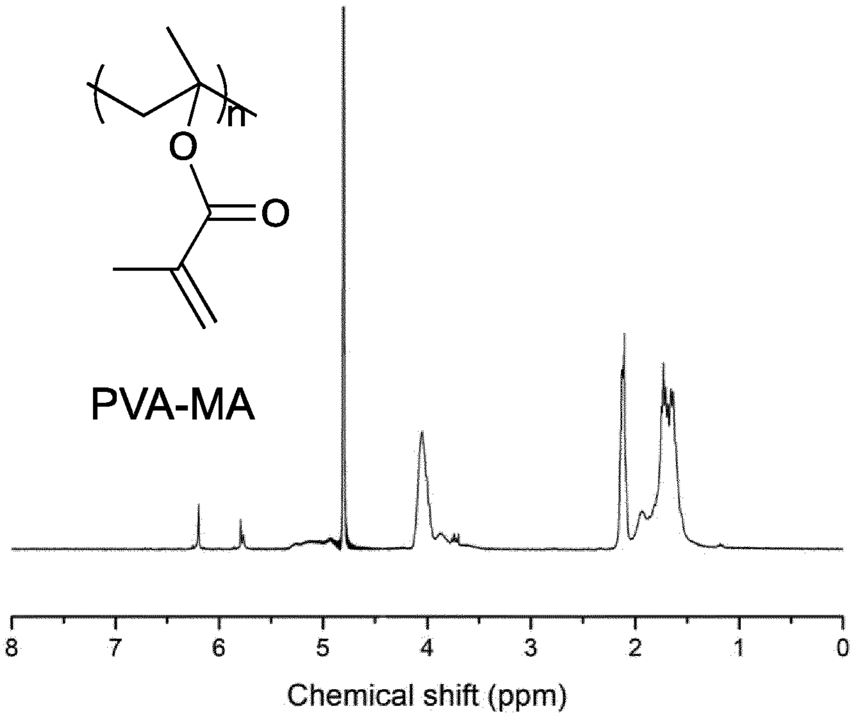
PVA-MA
8
7
6
5
4
3
2
1
0
Chemical shift (ppm)

FIG. 50

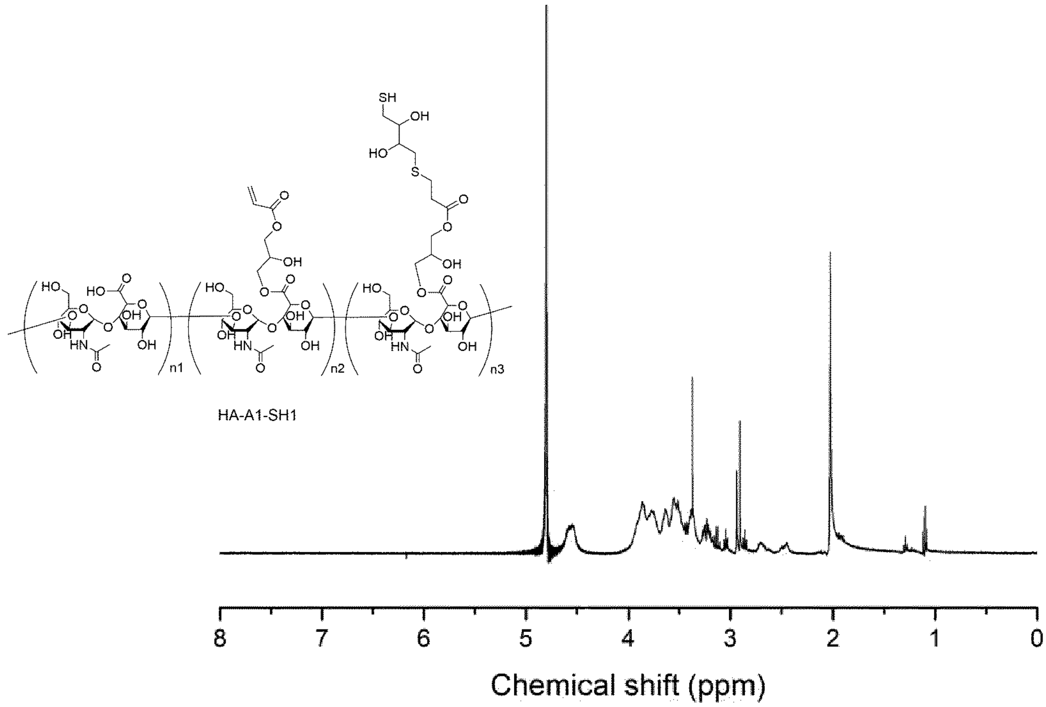
HA-A1-SH1
8
7
6
5
4
3
2
1
0
Chemical shift (ppm)

FIG. 51

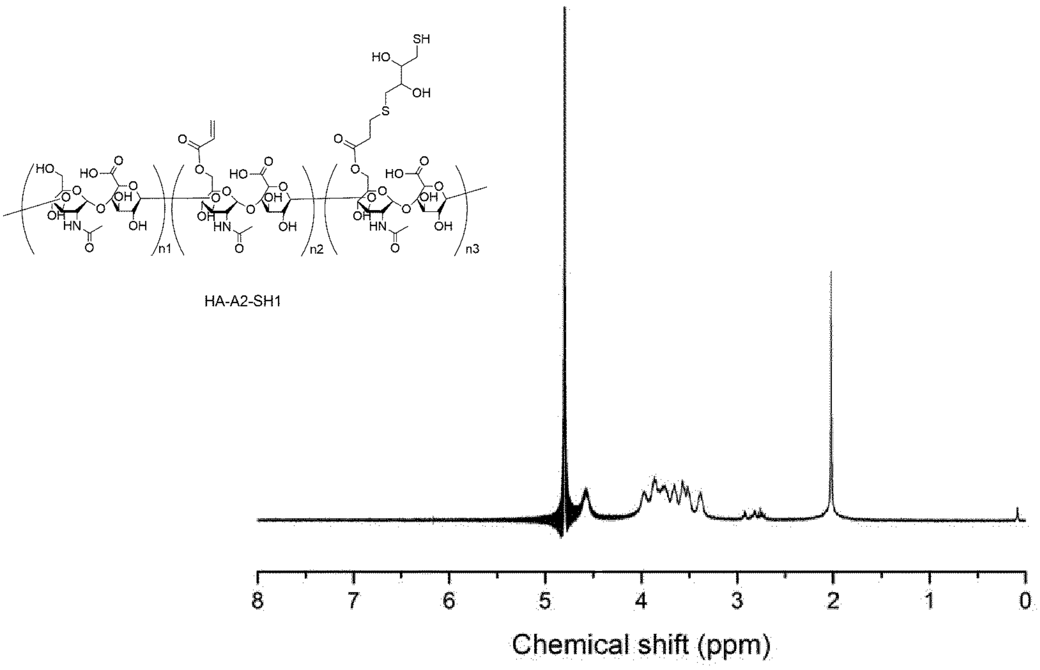
HA-A2-SH1
8
7
6
5
4
3
2
1
0
Chemical shift (ppm)

FIG. 52

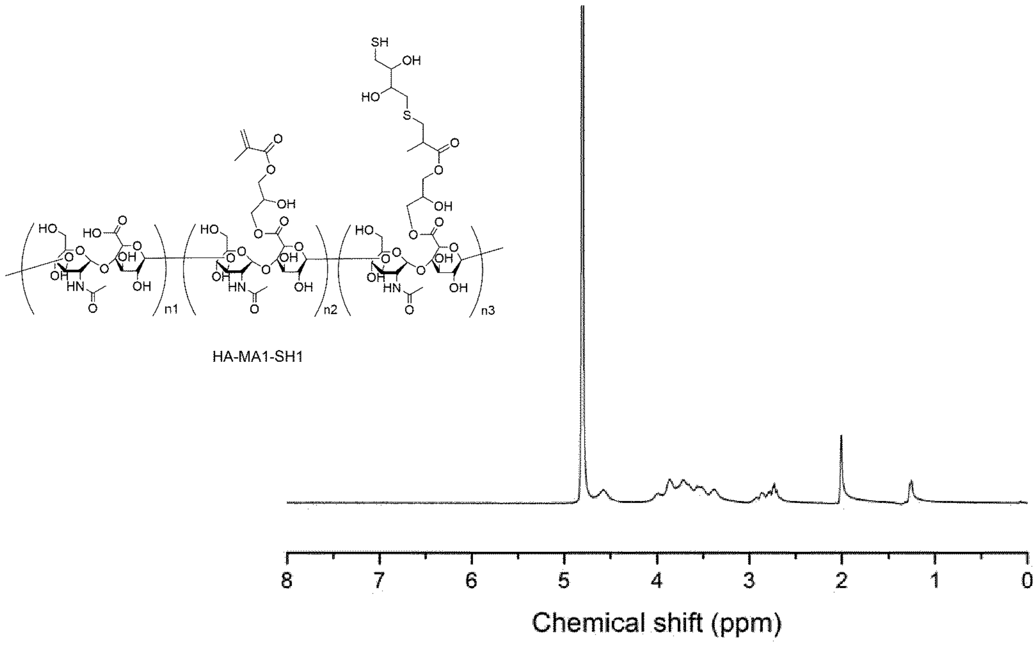


HA-MA1-SH1

FIG. 53

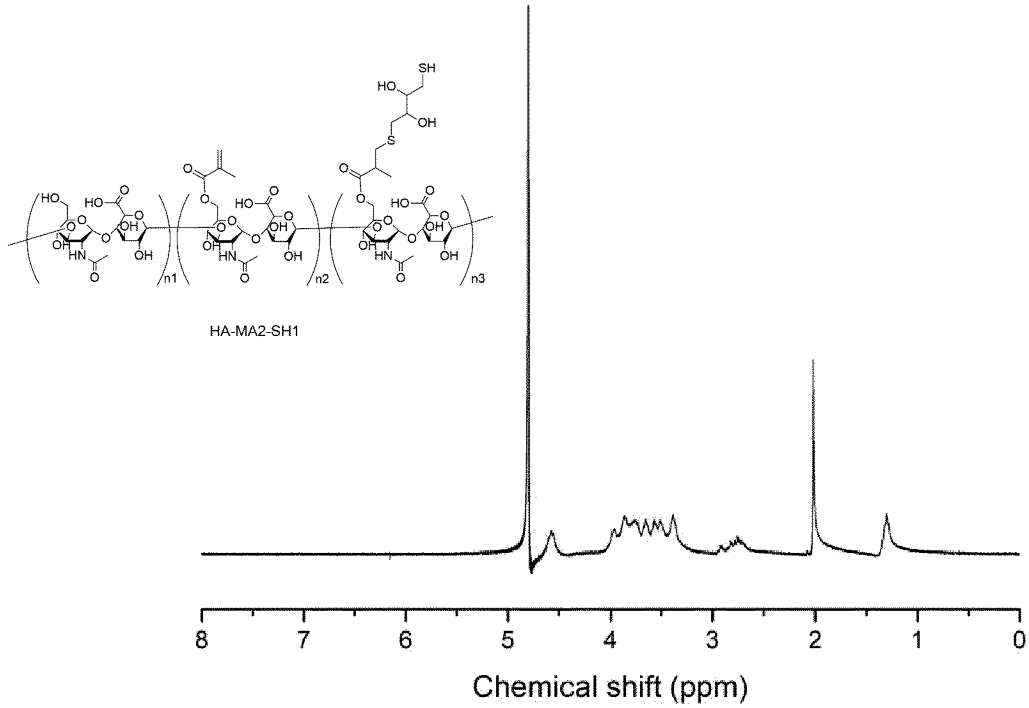


HA-MA2-SH1

FIG. 54

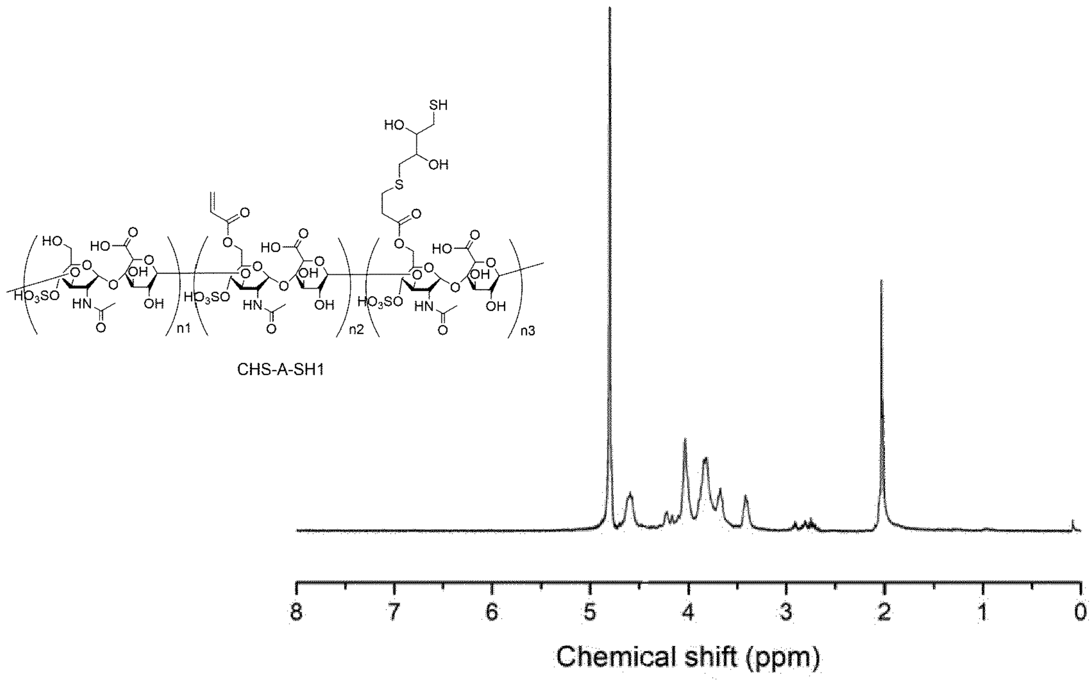


CHS-A-SH1

FIG. 55

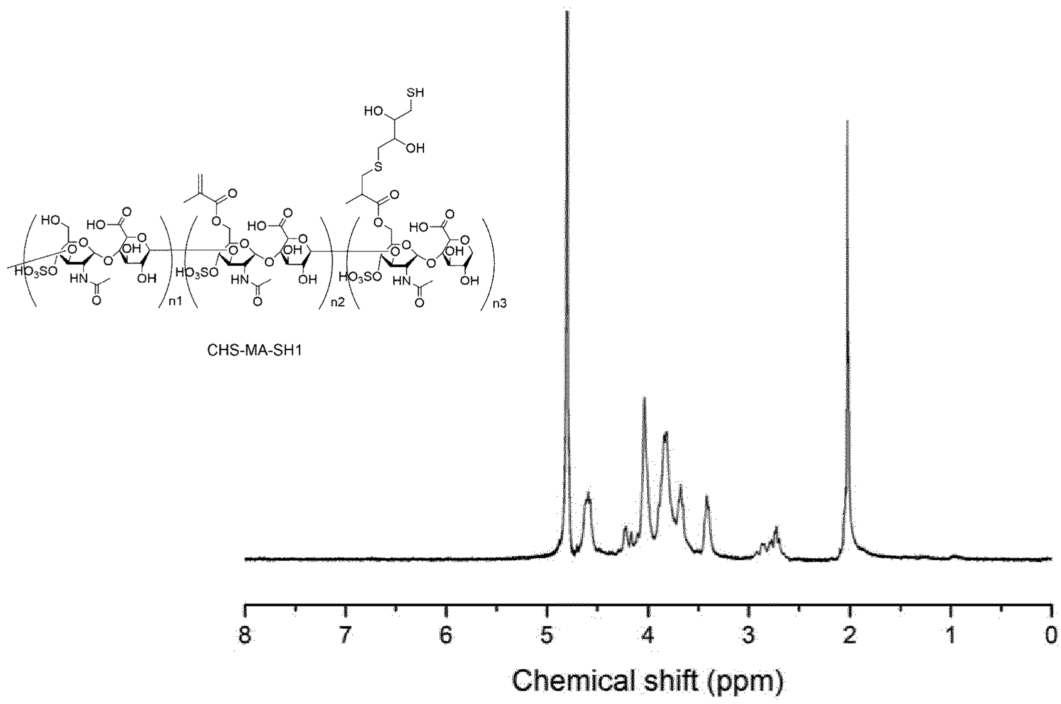


CHS-MA-SH1

FIG. 56

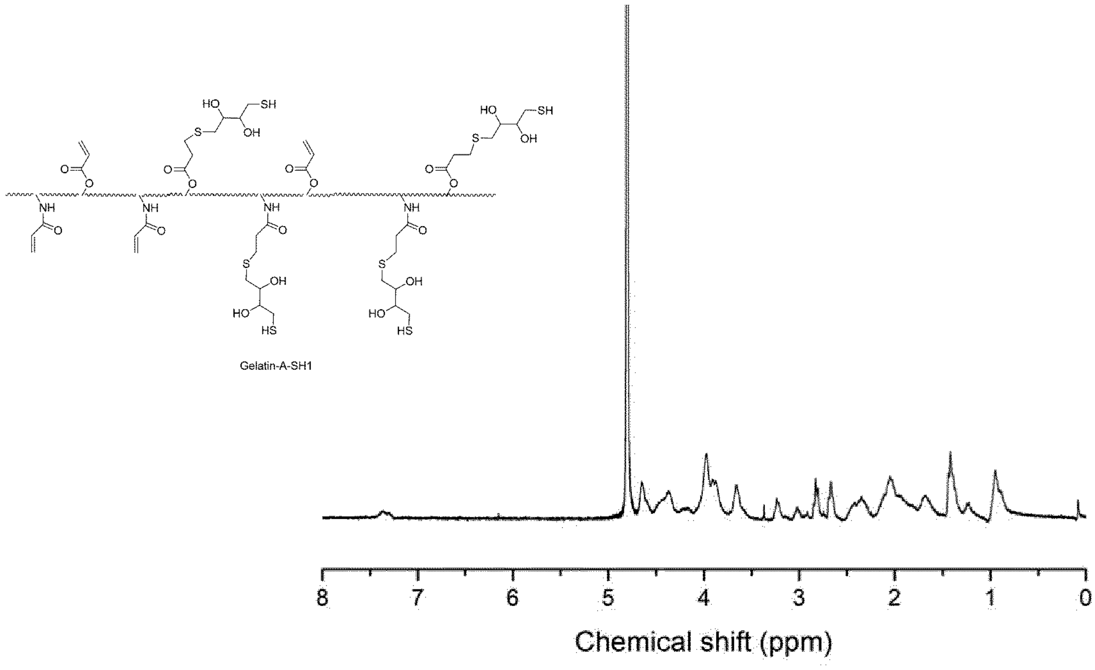


Gelatin-A-SH1

FIG. 57

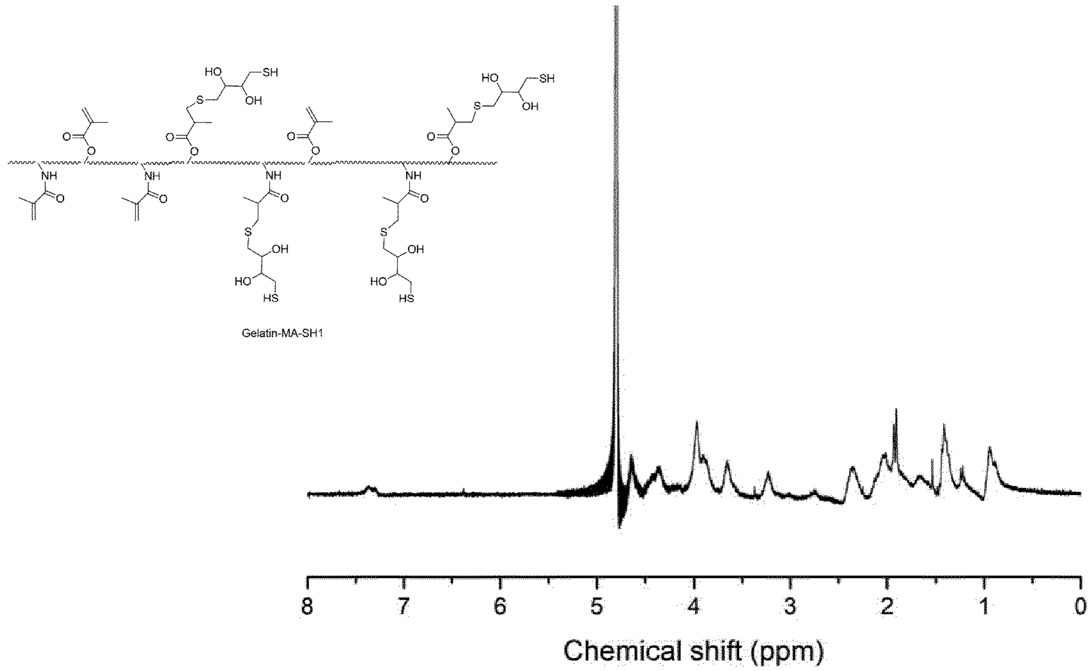


Gelatin-MA-SH1

FIG. 58

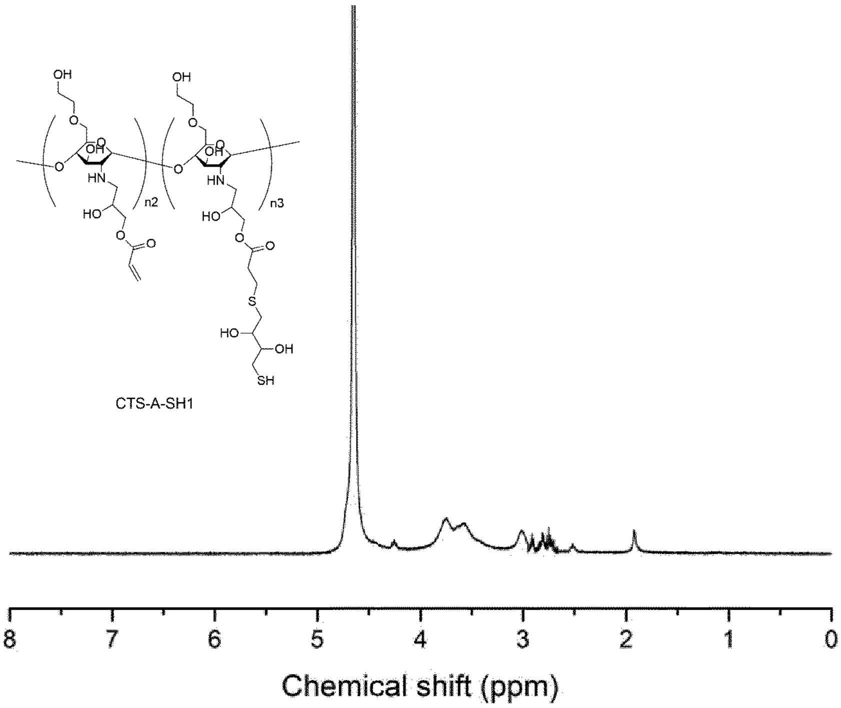
CTS-A-SH1
8
7
6
5
4
3
2
1
0
Chemical shift (ppm)

FIG. 59

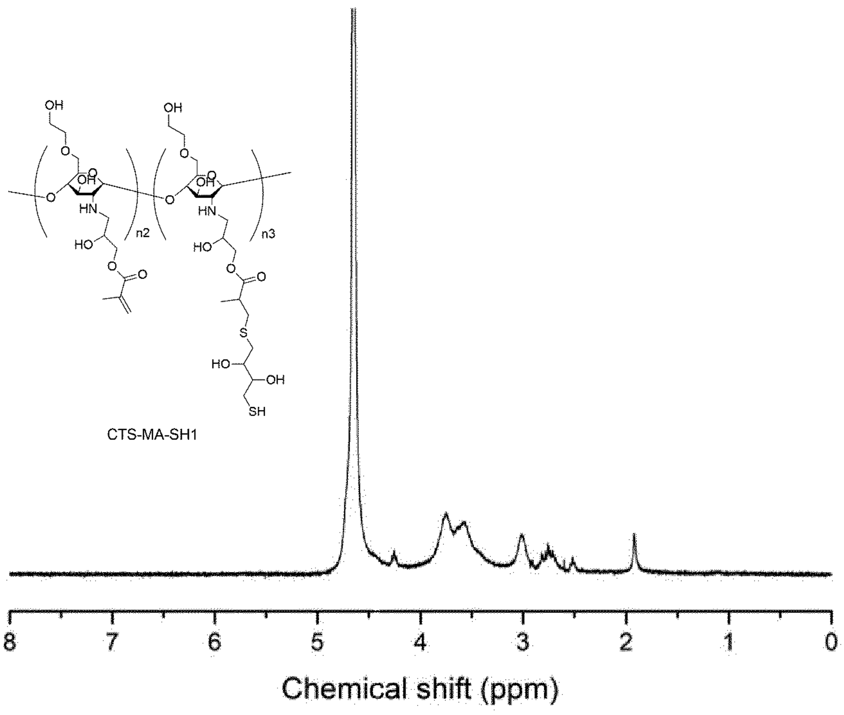
CTS-MA-SH1
8
7
6
5
4
3
2
1
0
Chemical shift (ppm)

FIG. 60

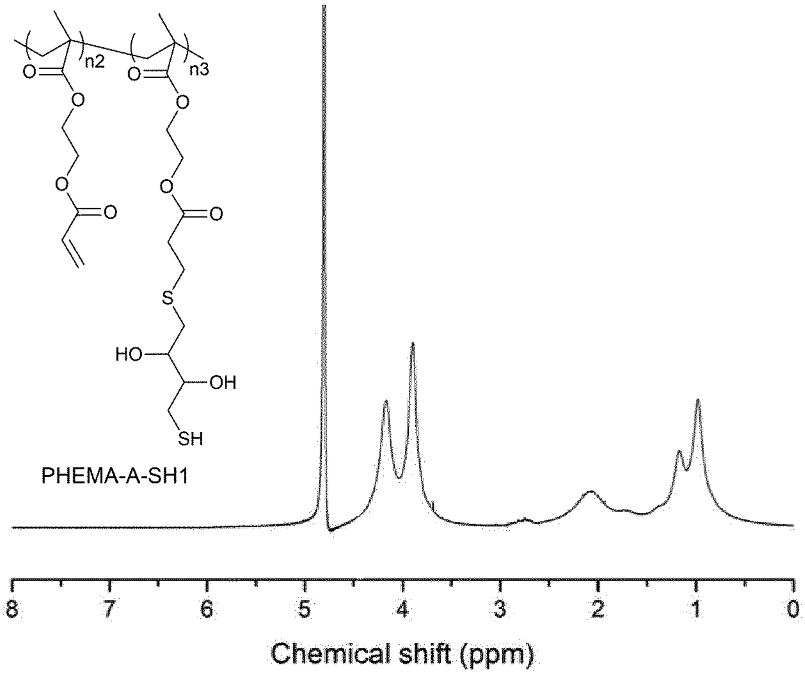
PHEMA-A-SH1
8 7 6 5 4 3 2 1 0
Chemical shift (ppm)

FIG. 61

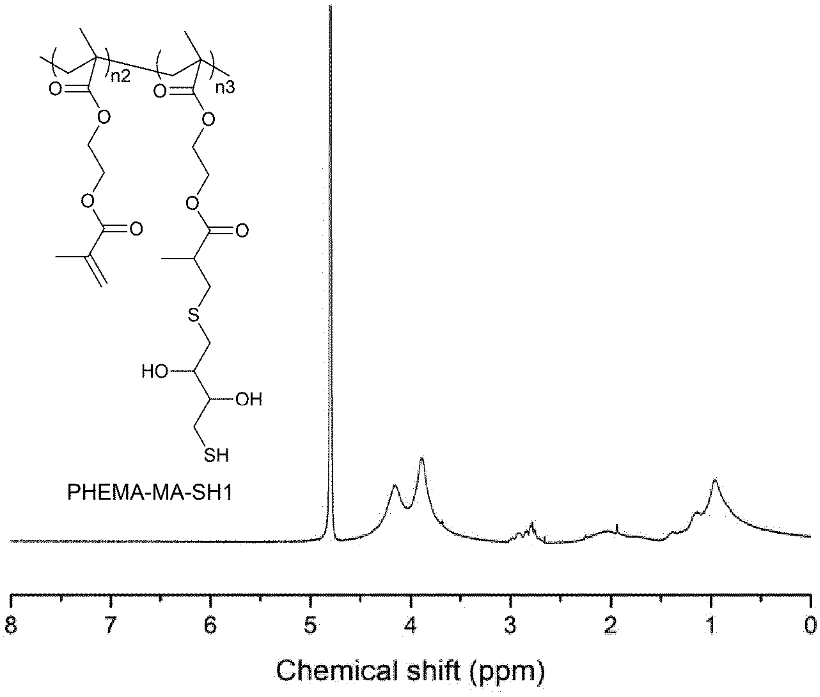
PHEMA-MA-SH1
8 7 6 5 4 3 2 1 0
Chemical shift (ppm)

FIG. 62

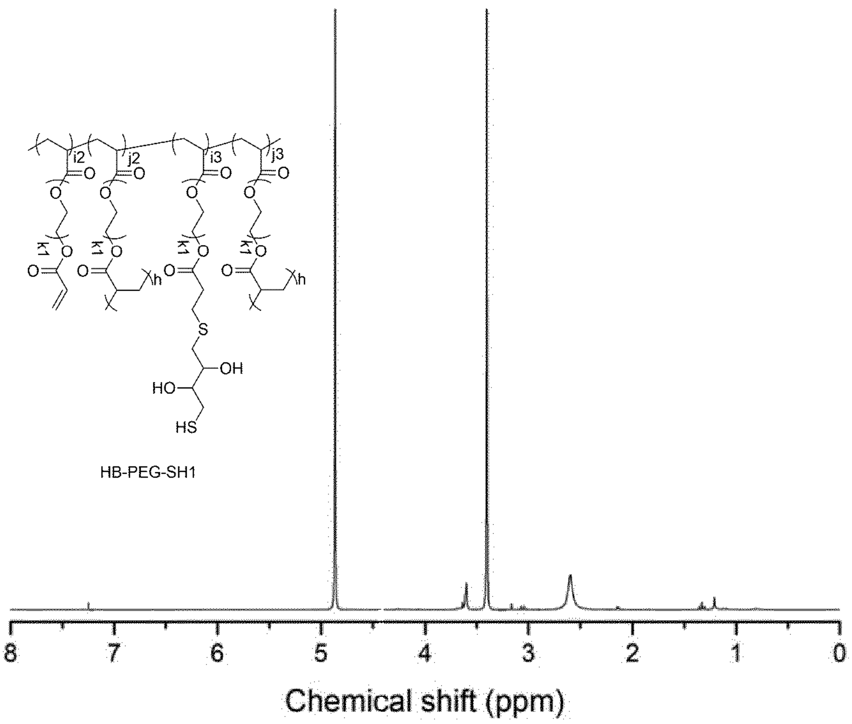
HB-PEG-SH1
8 7 6 5 4 3 2 1 0
Chemical shift (ppm)

FIG. 63

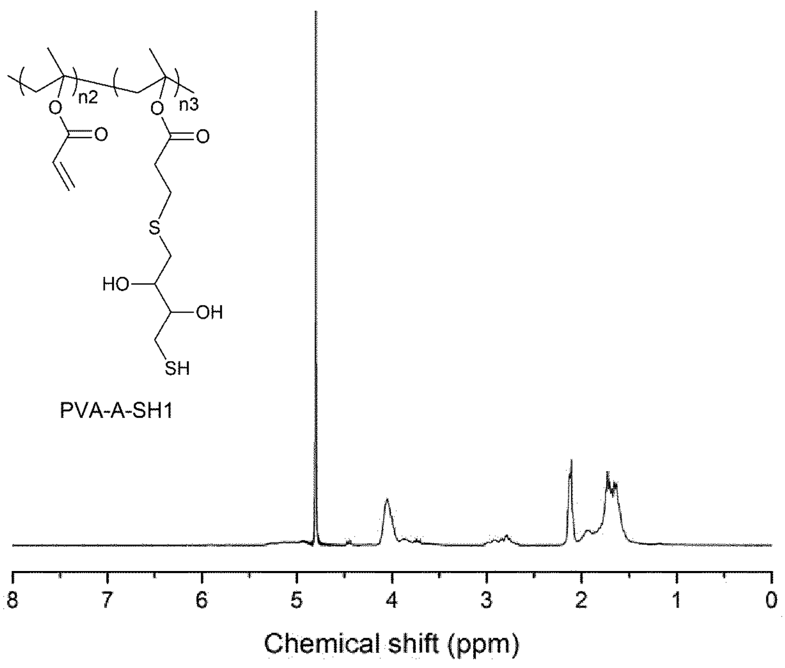
PVA-A-SH1
8 7 6 5 4 3 2 1 0
Chemical shift (ppm)

FIG. 64

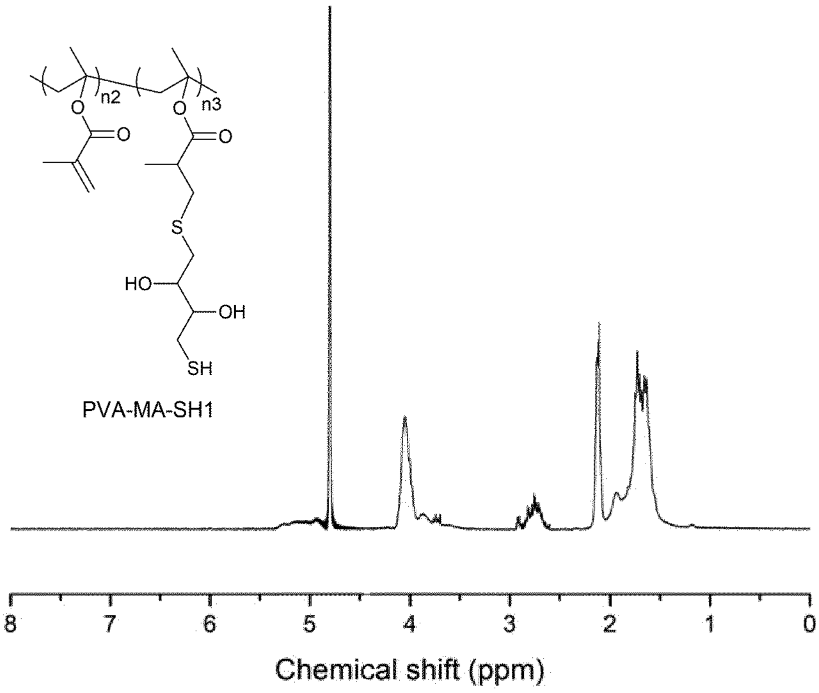


PVA-MA-SH1

FIG. 65

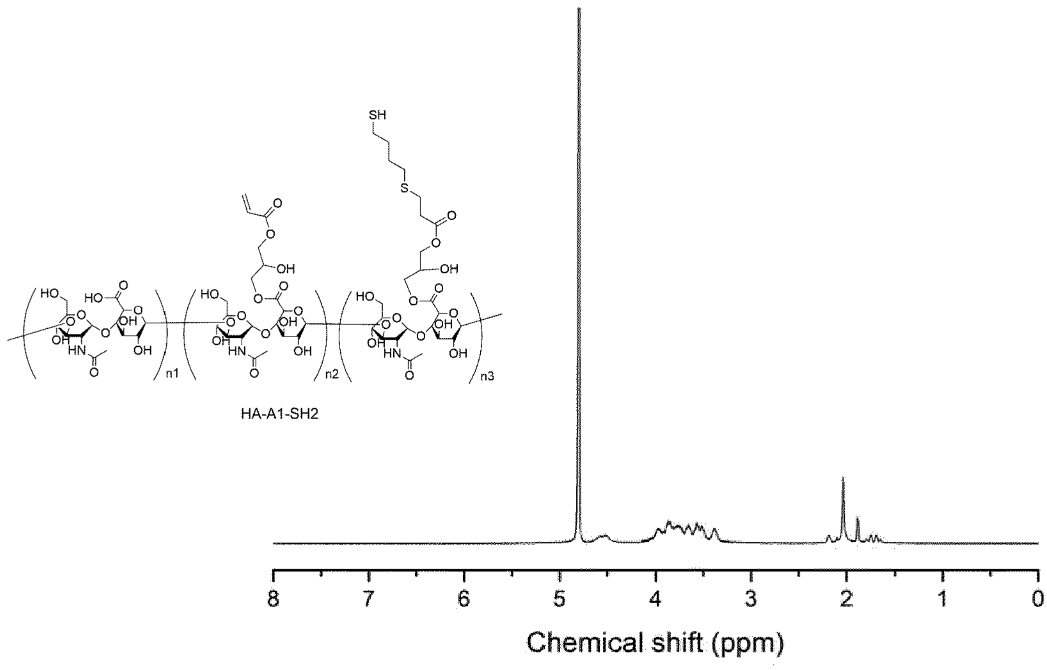


HA-A1-SH2

FIG. 66

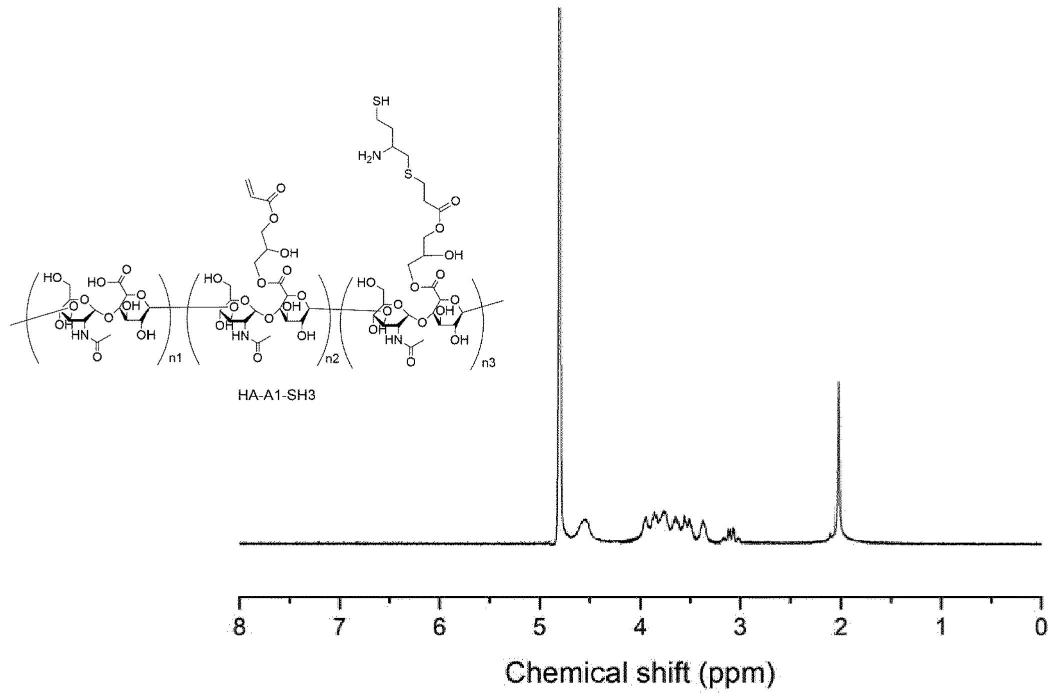
HA-A1-SH3
8
7
6
5
4
3
2
1
0
Chemical shift (ppm)

FIG. 67

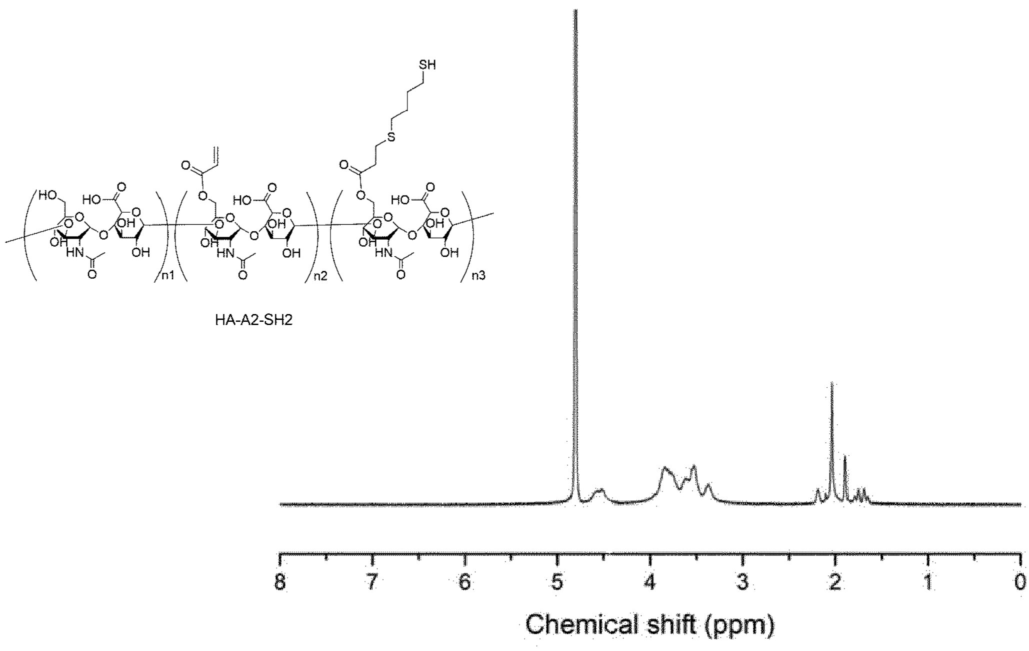
HA-A2-SH2
8
7
6
5
4
3
2
1
0
Chemical shift (ppm)

FIG. 68

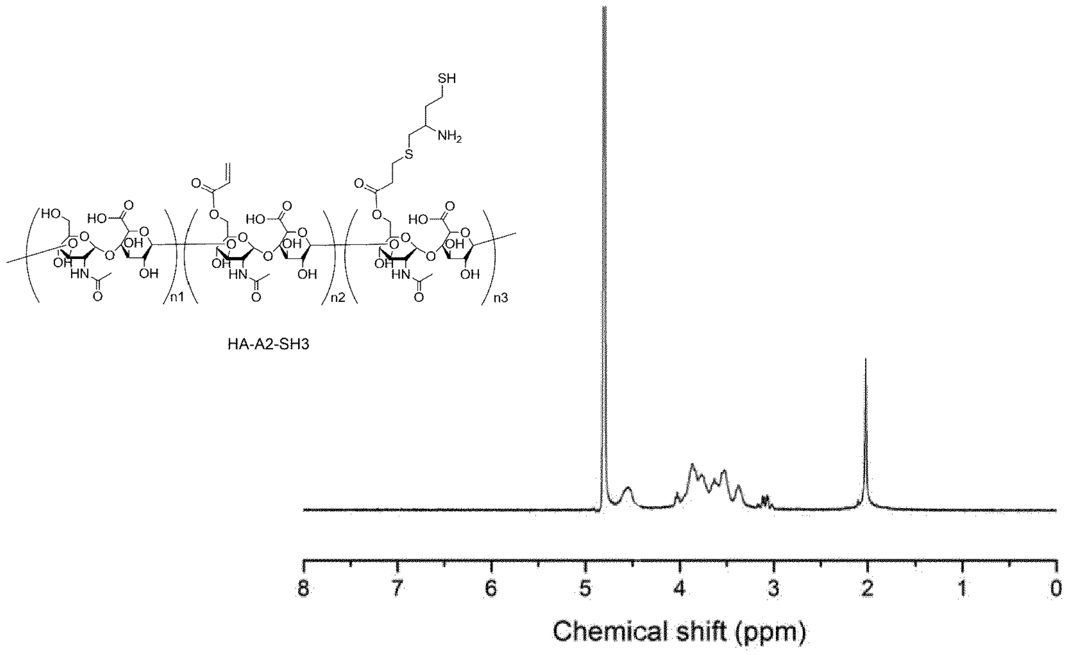


HA-A2-SH3

FIG. 69

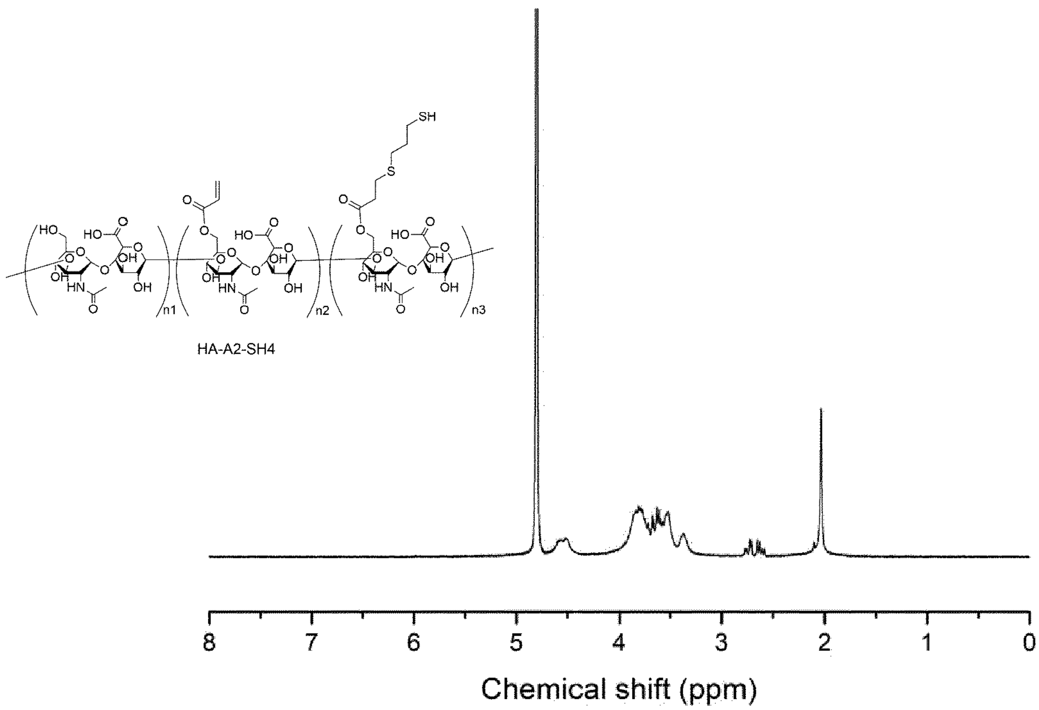


HA-A2-SH4

FIG. 70

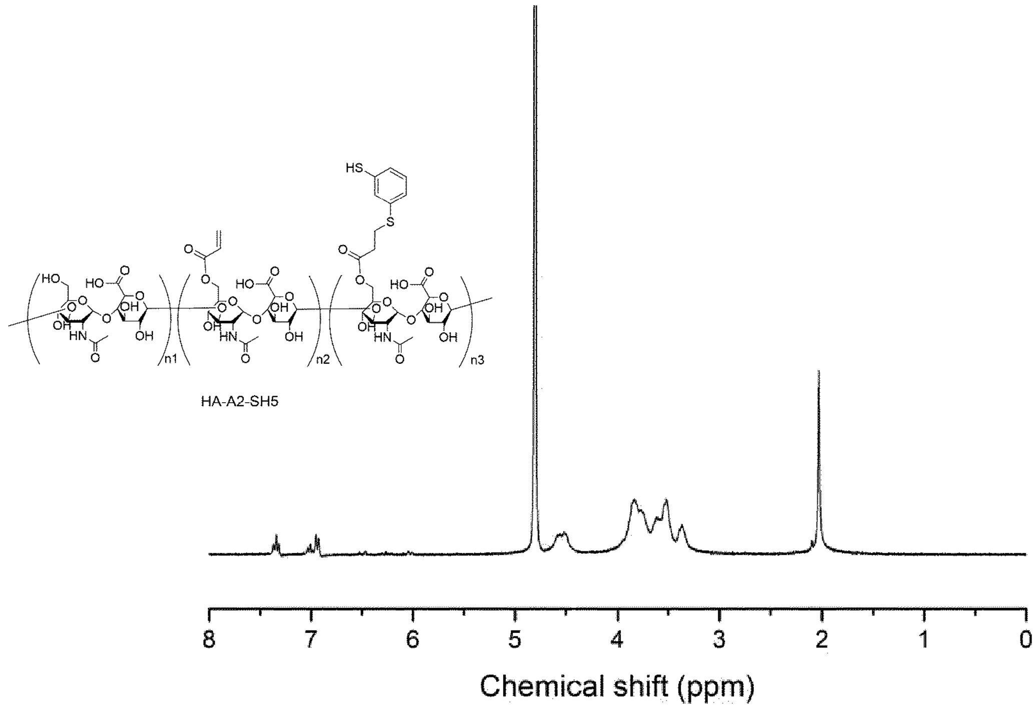
HA-A2-SH5
8
7
6
5
4
3
2
1
0
Chemical shift (ppm)

FIG. 71

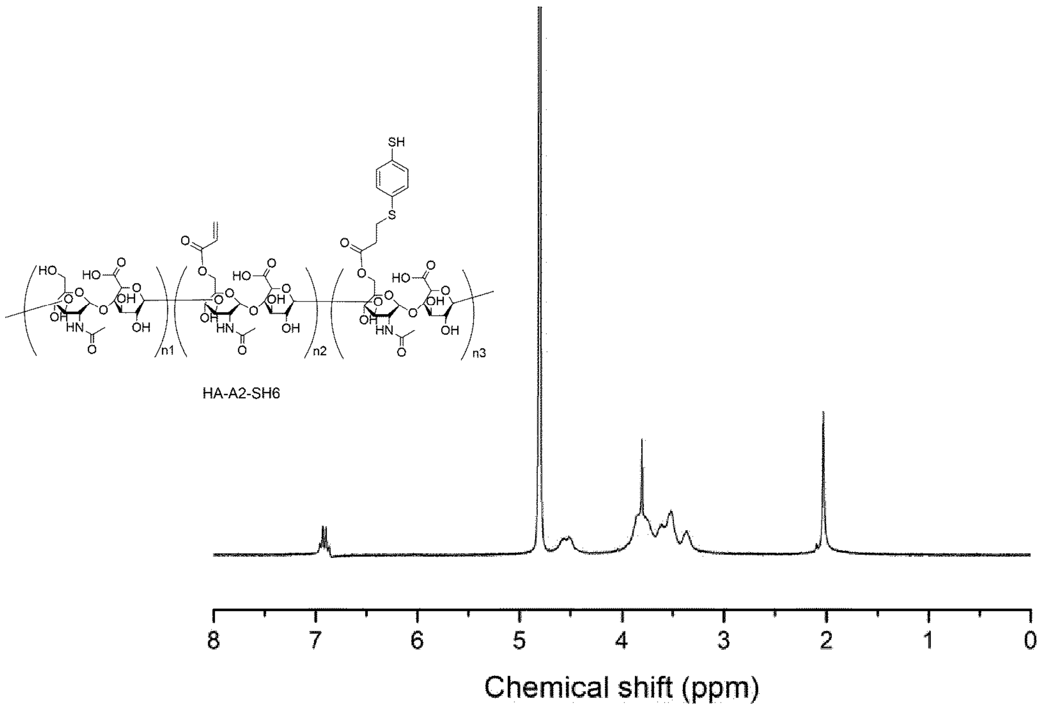
HA-A2-SH6
8
7
6
5
4
3
2
1
0
Chemical shift (ppm)

FIG. 72

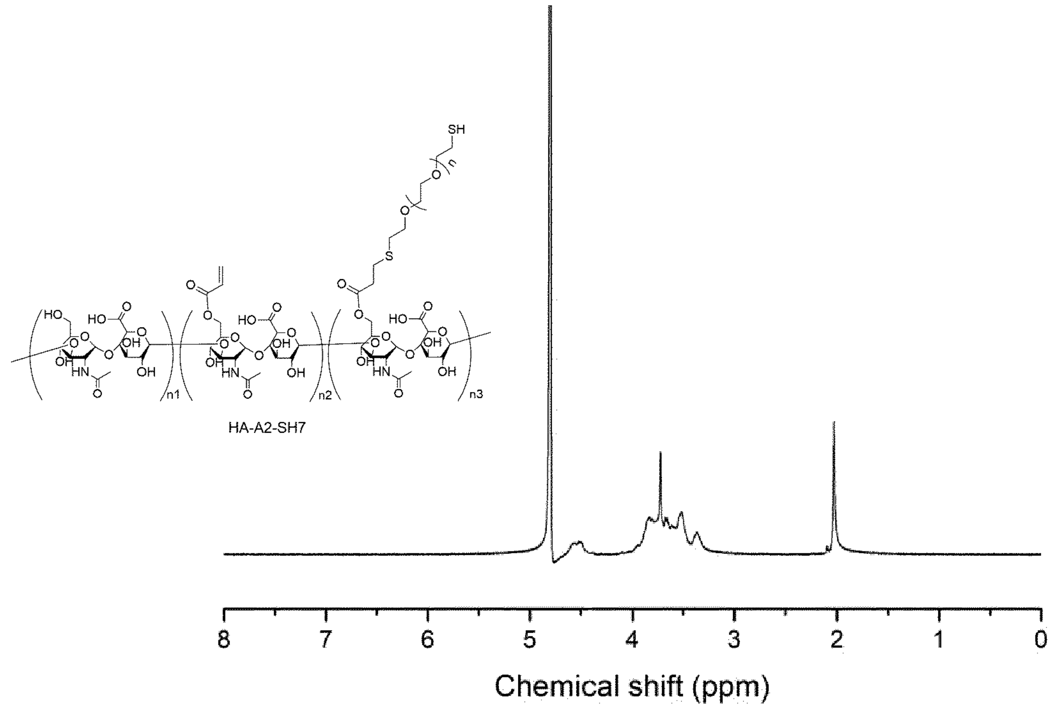


HA-A2-SH7

FIG. 73

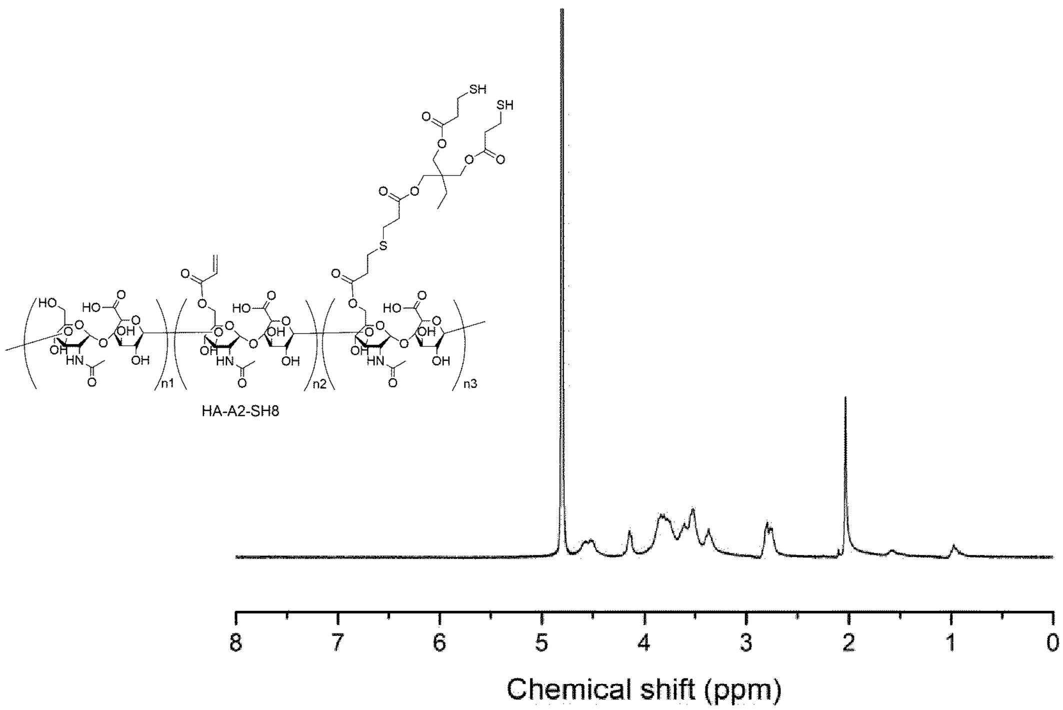


HA-A2-SH8

FIG. 74

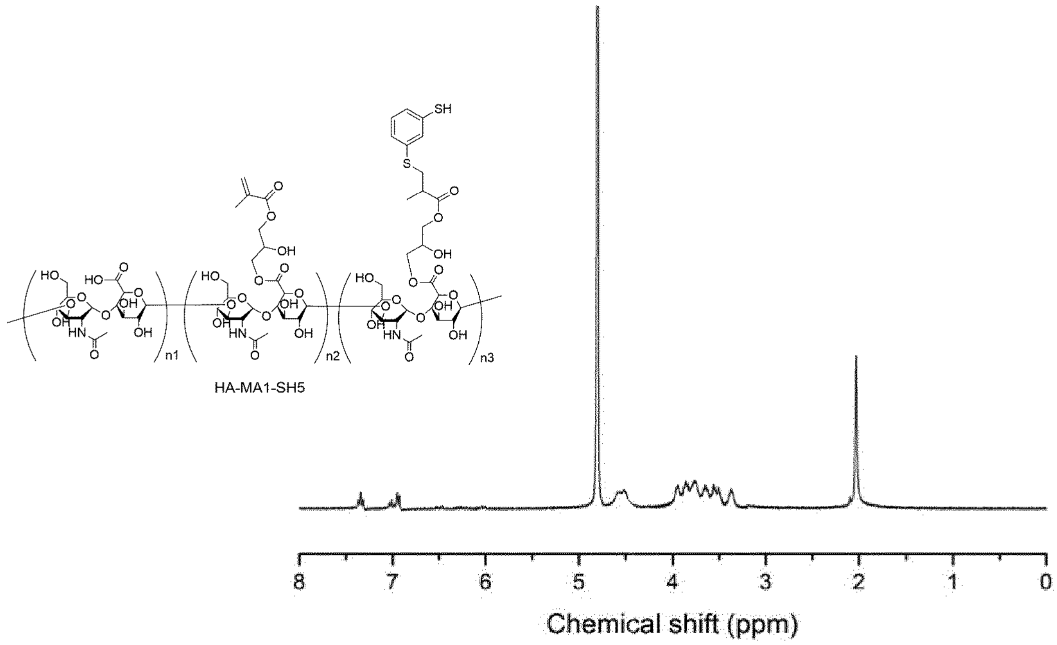

HA-MA1-SH5

FIG. 75

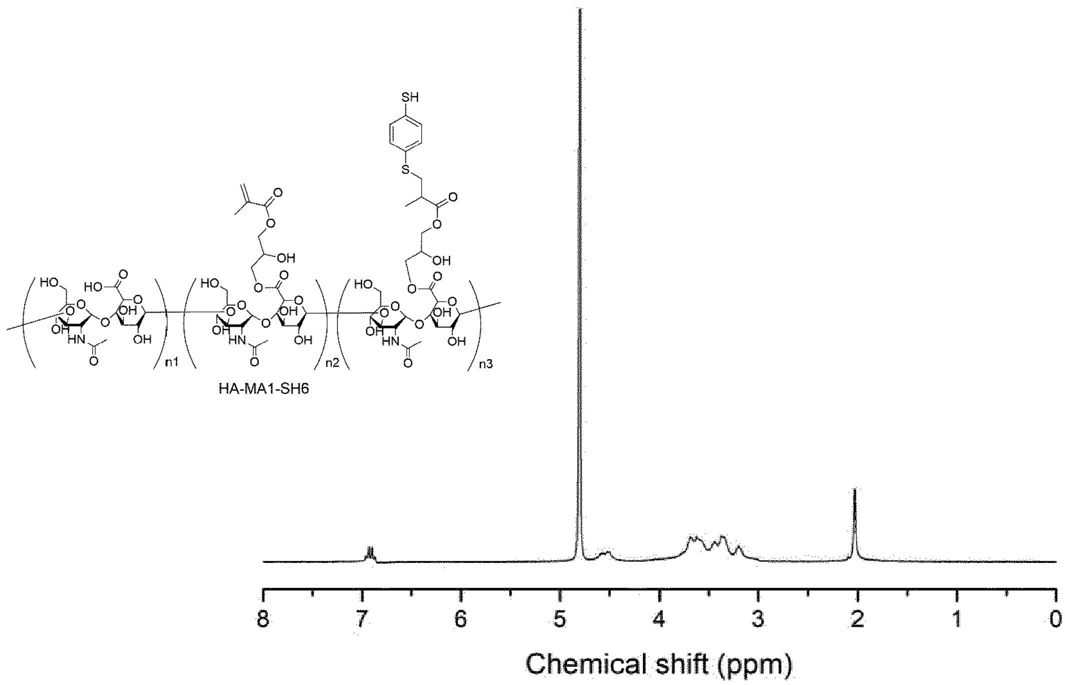

HA-MA1-SH6

FIG. 76

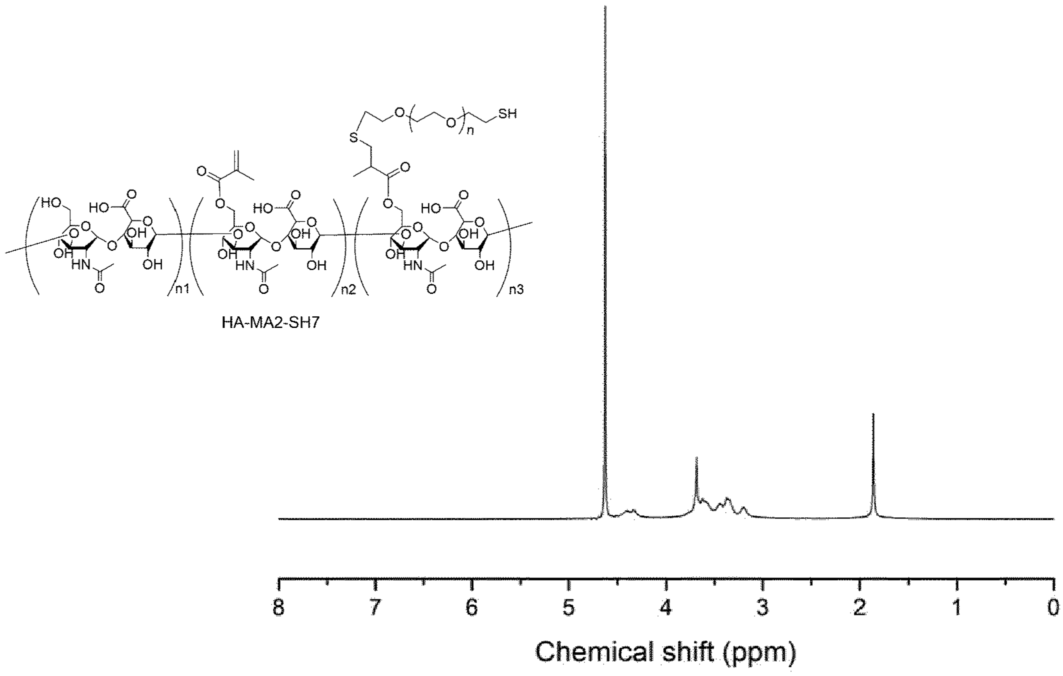


HA-MA2-SH7

FIG. 77

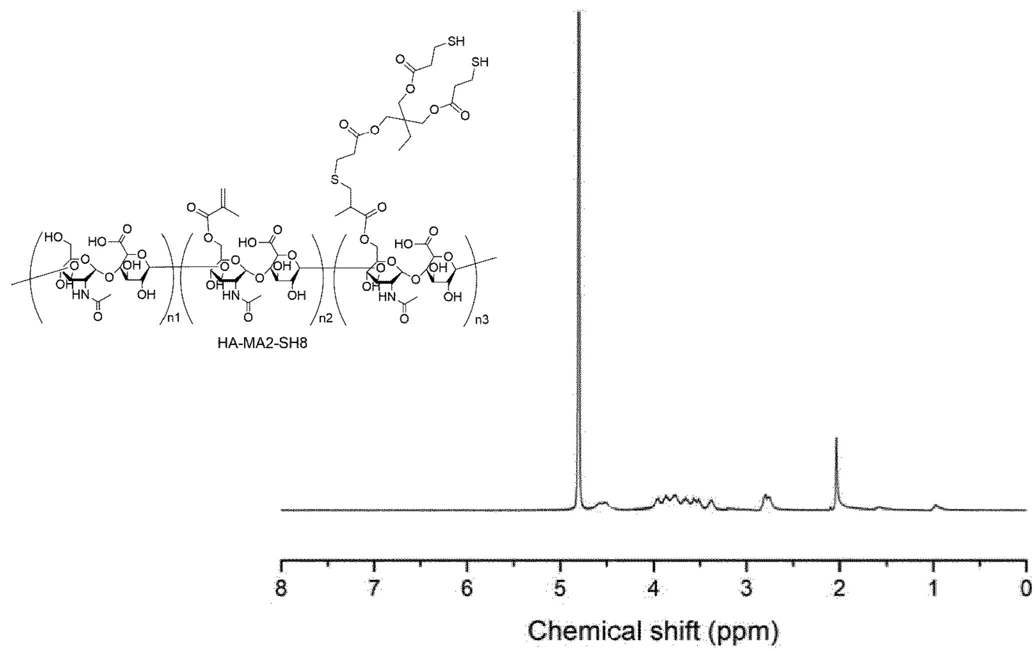


HA-MA2-SH8

FIG. 78

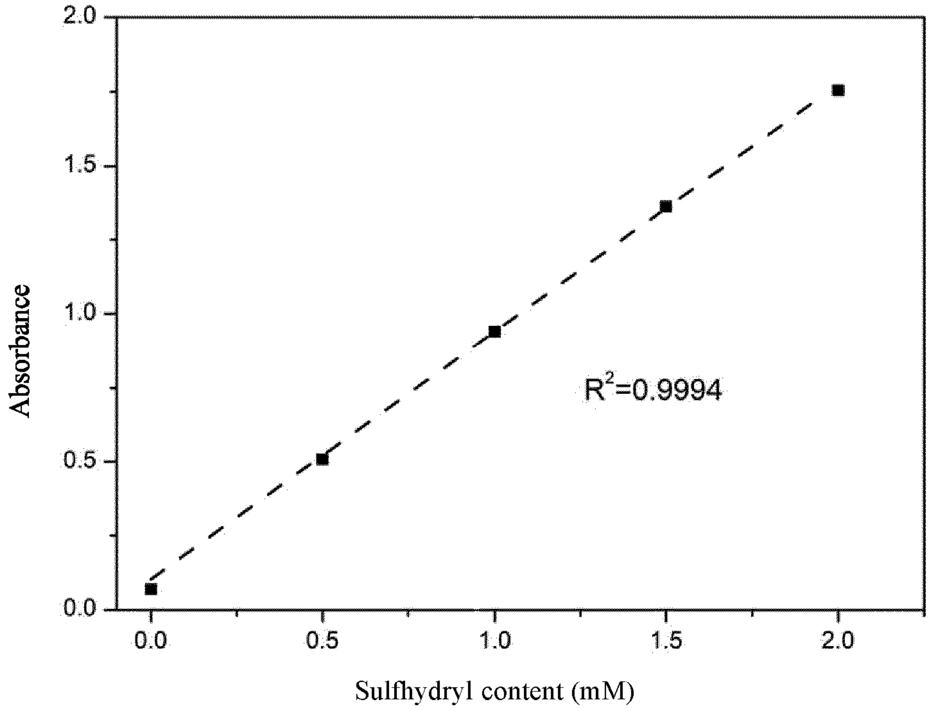
2.0
1.5
1.0
0.5
0.0
Absorbance
0.0
0.5
1.0
1.5
2.0
Sulfhydryl content (mM)
R²=0.9994

FIG. 79

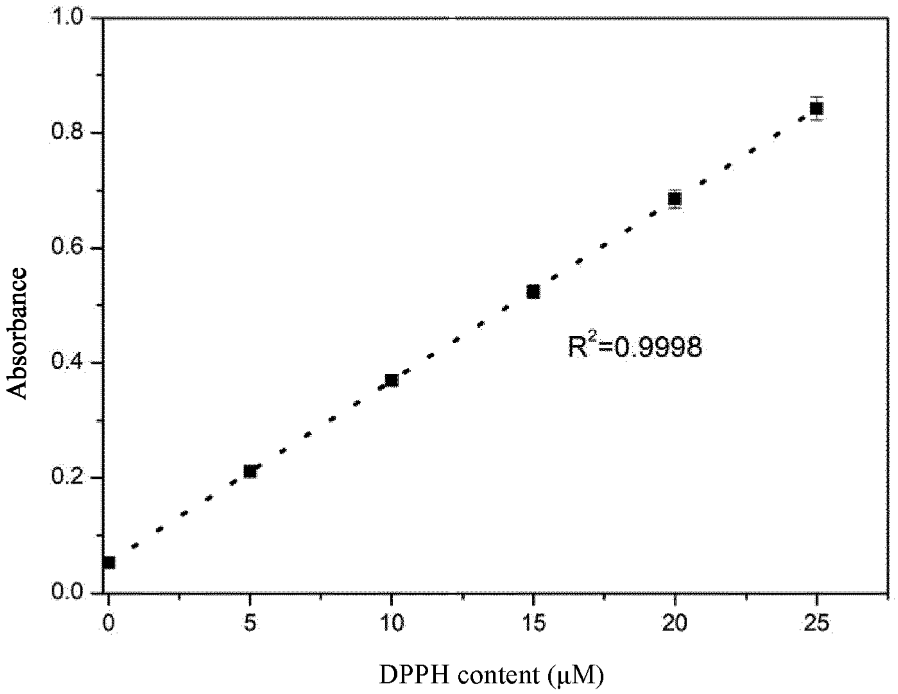
1.0
0.8
0.6
0.4
0.2
0.0
Absorbance
0
5
10
15
20
25
DPPH content (μM)
R²=0.9998

FIG. 80

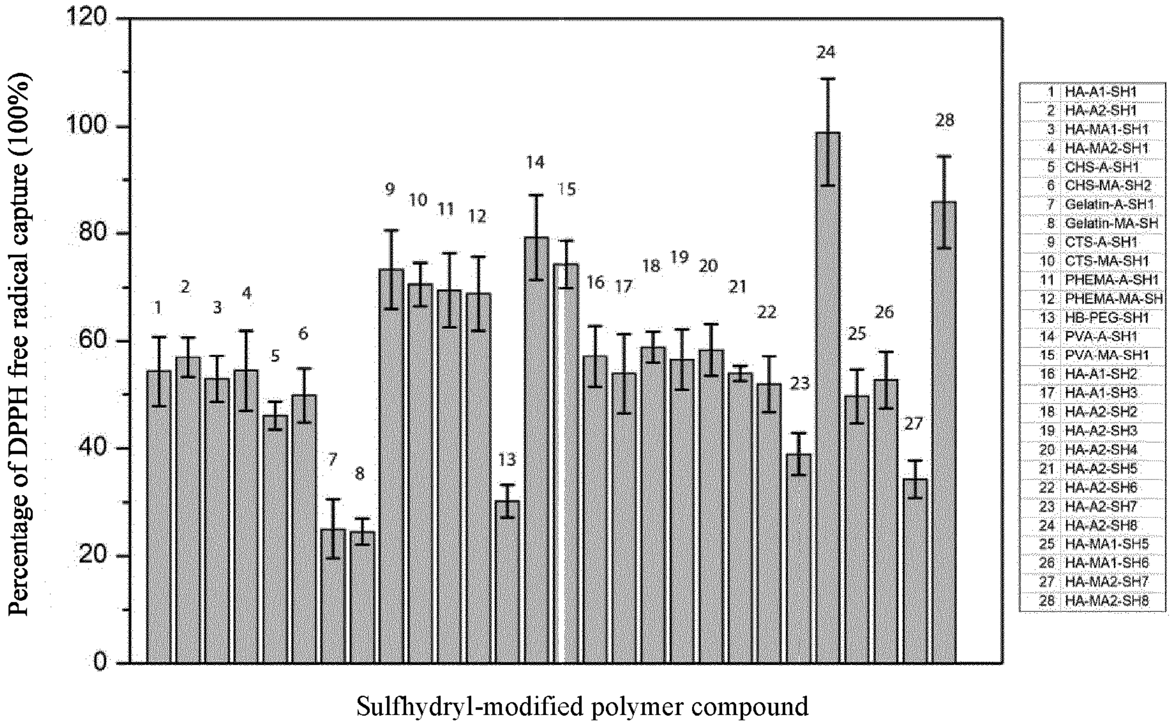
Percentage of DPPH free radical capture (100%)
120
100
80
60
40
20
0
Sulfhydryl-modified polymer compound
1 HA-A1-SH1
2 HA-A2-SH1
3 HA-MA1-SH1
4 HA-MA2-SH1
5 CHS-A-SH1
6 CHS-MA-SH2
7 Gelatin-A-SH1
8 Gelatin-MA-SH
9 CTS-A-SH1
10 CTS-MA-SH1
11 PHEMA-A-SH1
12 PHEMA-MA-SH
13 HB-PEG-SH1
14 PVA-A-SH1
15 PVA-MA-SH1
16 HA-A1-SH2
17 HA-A1-SH3
18 HA-A2-SH2
19 HA-A2-SH3
20 HA-A2-SH4
21 HA-A2-SH5
22 HA-A2-SH6
23 HA-A2-SH7
24 HA-A2-SH8
25 HA-MA1-SH5
26 HA-MA1-SH6
27 HA-MA2-SH7
28 HA-MA2-SH8

FIG. 81

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 101511875 A
- CN 101200504 A
- CN 103613686 A
- US 2019365902 A1, MANN BRENDA K
- WO 2016050788 A1
- CN 104140541 A
- CN 101351490 A
- CN 104224688 A
- CN 101506253 A
- CN 101628919 A
- WO 2016197087 A1
- CN 110172115 A
- CN 106478841 A


### Non-patent literature cited in the description


- *Biomacromolecules*, 2002, vol. 3, 1304
- *Biomaterials*, 2008, vol. 29, 1388
- *J Biomed Mater Res A.*, 2007, vol. 80, 916
- *Journal of Controlled Release*, 2007, vol. 119, 245
- *Acta Biomaterialia*, 2012, vol. 8, 3643
- *International Journal of Pharmaceutics*, 2015, vol. 478, 383
- **MATURAVONGSADIT PANITA** ; **LUCKANAGUL JITTIMA AMIE** ; **METAVARAYUTH KAMOLRAT** ; **ZHAOXIA** ; **CHEN LIMIN** ; **LIN YUAN** ; **WANG QIAN**. Promotion of In Vitro Chondrogenesis of Mesenchymal Stem Cells Using In Situ Hyaluronic Hydrogel Functionalized with Rod-Like Viral Nanoparticles. *Biomacromolecules, American Chemical Society*, 13 June 2016, vol. 17 (6), 1930-1938
- Elucidating the mechanobiology of malignant brain tumors using a brain matrix-mimetic hyaluronic acid hydrogel platform. **BADRIPRASAD ANANTHANARAYANAN** ; **YUSHAN KIM** ; **SANJAY KUMAR**. Biomaterials. Elsevier, 04 July 2011, vol. 32, 7913-7923
- Synthesis and evaluation of hyaluronic acid hydrogels modified with various crosslinkers as biodegradable polymers. **OBATA H** ; **YAMAZAKI Y** ; **MATSUNAGA T** ; **SATO T**. Journal of Applied Polymer Science. John Wiley & Sons, Inc., 15 November 2017, vol. 134, 45453
- **JUNGJU KIM**. Characterization of low-molecular-weight hyaluronic acid-based hydrogel and differential stem cell responses in the hydrogel microenvironments. *Journal of Biomedical Materials Research Part A*, 02 April 2008, vol. 88A (4), 967-975
- Interpenetrating networks based on gelatin methacrylamide and PEG formed using concurrent thiol click chemistries for hydrogel tissue engineering scaffolds. **DANIELE MICHAEL A** ; **ADAMS ANDRA** ; **NACIRI JAWAD** ; **NORTH STELLA H** ; **LIGLER FRANCES S**. Biomaterials. Elsevier, 05 December 2013, vol. 35, 1845-1856
- Reduction-Sensitive Reversibly Crosslinked Biodegradable Micelles for Triggered Release of Doxorubicin: Reduction-Sensitive Reversibly Crosslinked Biodegradable. **XU YANMIN** ; **MENG FENGHUA** ; **CHENG RU** ; **ZHONG ZHIYUAN**. Macromolecular Bioscience. Wiley-VCH Verlag GmbH, 08 December 2009, vol. 9, 1254-1261